# EUROPÄISCHE PATENTSCHRIFT

(11) **EP 2 855 630 B1**
(45) Veröffentlichungstag und Bekanntmachung des Hinweises auf die Patenterteilung: **20.12.2017**
(21) Anmeldenummer: 13724739.1
(22) Anmeldetag: 21.05.2013
(51) Int. Cl.: C09K 19/54, C09K 19/20, C09K 19/30, C09K 19/34, C09K 19/04

(54) **FLÜSSIGKRISTALLINES MEDIUM UND FLÜSSIGKRISTALLANZEIGE**
LIQUID CRYSTAL MEDIUM AND LIQUID CRYSTAL DISPLAY
MILIEU CRISTAL LIQUIDE ET ÉCRAN À CRISTAUX LIQUIDES

(30) Priorität: 05.06.2012 EP 12004293
(43) Veröffentlichungstag der Anmeldung: 08.04.2015
(73) Patentinhaber: Merck Patent GmbH, 64293 Darmstadt (DE)
(72) Erfinder: GOETZ, Achim, Seoul 140-857 (KR); LEE, Hee-Kyu, Pyeongtaek 451-783 (KR); GOEBEL, Mark, 64289 Darmstadt (DE)
(86) Internationale Anmeldenummer: PCT/EP2013/001497
(87) Internationale Veröffentlichungsnummer: WO 2013/182271

(56) Entgegenhaltungen:
- DE-A1-102010 049 441
- DE-A1-102011 108 276

## Beschreibung

### Gebiet der Erfindung

Die vorliegende Erfindung betrifft flüssigkristalline Medien und diese Medien enthaltende Flüssigkristallanzeigen, speziell Anzeigen, die durch eine Aktivmatrix adressiert werden und insbesondere Anzeigen des Typs Twisted Nematic (TN), In Plane Switching (IPS) oder Fringe Field Switching (FFS).

### Stand der Technik und zu lösendes Problem

Flüssigkristallanzeigen (Liquid Crystal Displays - LCDs) werden in vielen Bereichen genutzt, um Informationen anzuzeigen. LCDs werden sowohl für Direktsichtanzeigen als auch für Anzeigen des Projektionstyps verwendet. Als elektrooptische Modi werden beispielsweise Twisted Nematic (TN), Super Twisted Nematic (STN), Optically Compensated Bend (OCB) und Electrically Controlled Birefringence (ECB) zusammen mit ihren verschiedenen Modifikationen sowie andere verwendet. Alle diese Modi nutzen ein elektrisches Feld, das im Wesentlichen rechtwinklig zu den Substraten beziehungsweise zur Flüssigkristallschicht verläuft. Neben diesen Modi gibt es auch elektrooptische Modi, die ein elektrisches Feld nutzen, das im Wesentlichen parallel zu den Substraten beziehungsweise der Flüssigkristallschicht verläuft, wie etwa der In-Plane Switching (IPS) Modus (wie z.B. in DE 40 00 451 und EP 0 588 568 offenbart) und im Fringe Field Switching (FFS) Modus, in dem ein starkes sogenanntes "fringe field" vorliegt, also ein starkes elektrisches Feld nahe am Rand der Elektroden und in der gesamten Zelle ein elektrisches Feld, welches sowohl eine starke vertikale Komponente als auch eine starke horizontale Komponente aufweist. Vor allem diese beiden letzteren elektrooptischen Modi werden für LCDs in modernen Tischmonitoren verwendet und sind für die Nutzung in Anzeigen für Fernseher und Multimedia-Anwendungen vorgesehen. Die Flüssigkristalle gemäß der vorliegenden Erfindung werden vorzugsweise in Anzeigen dieser Art verwendet. Generell werden in FFS-Displays dielektrisch positive, flüssigkristalline Medien mit eher kleineren Werten der dielektrischen Anisotropie verwendet, aber auch bei IPS-Displays werden teilweise flüssigkristalline Medien mit einer dielektrischen Anisotropie von nur ca. 3 oder sogar darunter verwendet.

Für diese Anzeigen sind neue flüssigkristalline Medien mit verbesserten Eigenschaften erforderlich. Insbesondere müssen die Ansprechzeiten für viele Arten von Anwendungen verbessert werden. Es sind daher flüssigkristalline Medien mit geringeren Viskositäten (η), speziell mit geringeren Rotationsviskositäten (γ₁) erforderlich. Die Rotationsviskosität sollte insbesondere für Monitoranwendungen 80 mPa·s oder weniger, vorzugsweise 60 mPa·s oder weniger und speziell 55 mPa·s oder weniger betragen. Neben diesem Parameter müssen die Medien über einen Bereich der nematischen Phase mit geeigneter Breite und Lage, sowie eine geeignete Doppelbrechung (Δn) verfügen. Zudem sollte die dielektrische Anisotropie (Δε) sollte hoch genug sein, um eine einigermaßen niedrige Betriebsspannung zu ermöglichen. Vorzugsweise sollte Δε höher als 2 und sehr bevorzugt höher als 3, vorzugsweise jedoch nicht höher als 20 und insbesondere nicht höher als 17 liegen, da dies einem zumindest einigermaßen hohen spezifischen Widerstand entgegenstehen würde.

Für Anwendungen als Displays für Notebooks oder andere mobile Anwendungen sollte die Rotationsviskosität bevorzugt 120 mPa·s oder weniger und besonders bevorzugt 100 mPa·s oder weniger betragen. Hier sollte die dielektrische Anisotropie (Δε) vorzugsweise höher als 8 und besonders bevorzugt höher als 12 sein.

Vorzugsweise werden die Anzeigen gemäß der vorliegenden Erfindung durch eine Aktivmatrix (active matrix LCDs, kurz AMDs), bevorzugt durch eine Matrix aus Dünnschichttransistoren (TFTs), adressiert. Die erfindungsgemäßen Flüssigkristalle können jedoch in vorteilhafter Weise auch in Anzeigen mit anderen bekannten Adressierungsmitteln verwendet werden.

Es gibt zahlreiche unterschiedliche Anzeigemodi, die Verbundsysteme aus niedrigmolekularen Flüssigkristallmaterialien zusammen mit Polymermaterialien verwenden. Dies sind z.B. PDLC- (polymer dispersed liquid crystal), NCAP- (nematic curvilinearily aligned phase) und PN-Systeme (polymer network), wie beispielsweise in WO 91/05 029 offenbart, oder ASM-Systeme (axially symmetrie microdomain) und andere. Im Gegensatz hierzu verwenden die gemäß der vorliegenden Erfindung speziell bevorzugten Modi das Flüssigkristallmedium als solches, auf Oberflächen ausgerichtet. Diese Oberflächen werden typischerweise vorbehandelt, um eine uniforme Orientierung des Flüssigkristallmaterials zu erzielen. Die Anzeigemodi gemäß der vorliegenden Erfindung verwenden vorzugsweise ein elektrisches Feld, das im Wesentlichen parallel zur Verbundschicht verläuft.

Flüssigkristallzusammensetzungen, die sich für LCDs und speziell für IPS-Anzeigen eignen, sind z.B. aus JP 07-181 439 (A), EP 0 667 555, EP 0 673 986, DE 195 09 410, DE 195 28 106, DE 195 28 107, WO 96/23 851 und WO 96/28 521 bekannt. Diese Zusammensetzungen sind jedoch mit gravierenden Nachteilen behaftet. Die meisten von ihnen führen, neben anderen Mängeln, zu unvorteilhaft langen Ansprechzeiten, weisen zu geringe Werte für den spezifischen Widerstand auf und/oder erfordern Betriebsspannungen, die zu hoch sind. Außerdem besteht der Bedarf das Tieftemperaturverhalten der LCDs zu verbessern. Hier sind sowohl eine Verbesserung der Betriebseigenschaften, wie auch der Lagerfähigkeit und, insbesondere, der Stabilität gegenüber sichtbarem Licht und UV-Strahlung, aber auch gegen Hitze und insbesondere gegen eine Kombination aus Hitze und Licht und/oder UV-Strahlung nötig.

Die Verbindung TEMPOL, der folgenden Formel 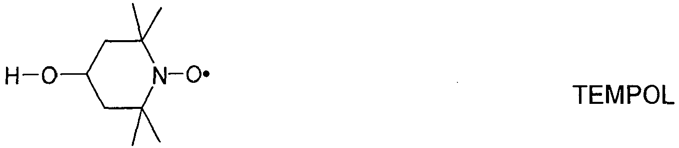 ist bekannt, sie wird z.B. in Miéville, P. et al, Angew. Chem. 2010, 122, Seiten 6318-6321 erwähnt. Sie ist von verschiednen Herstellern kommerziell erhältlich und wird z. B. in Formulierungen für Vorläufer für Polyolefine, Polystyrole, Polyamide, Beschichtungen und PVC als Polymerisationsinhibitor und, insbesondere in Kombination mit UV-Absorbern, als Licht- bzw. UV-Schutz eingesetzt.

Verbindungen der folgenden Formel 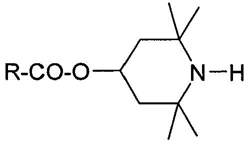 sind Bestandteile des unter der Bezeichnung "Cyasorb UV-3852S" von der Firma Cytec, West Paterson, USA kommerziell erhältlichen Produkts, das als Licht-Stabilisator z. B. in Formulierungen für Kunststoffteile aus Polypropylen für die Automobilindustrie und für Gartenmöbel eingesetzt wird.

In der noch nicht offen gelegten Patentanmeldung DE 102011117937.6 werden Flüssigkristallmischungen mit positiver dielektrischer Anisotropie, die TINUVIN 770® zur Stabilisierung enthalten, beschrieben.

Die ebenfalls noch nicht offengelegten Patentanmeldungen DE 102011119144.9 und PCT/EP2011/005692 beschreiben Flüssigkristallmischungen mit negativer dielektrischer Anisotropie, die, unter anderem, HALS-N-Oxide zur Stabilisierung enthalten.

Die ebenfalls noch nicht offengelegten Patentanmeldung US 13/451,749 schlägt vor Flüssigkristallmischungen mit negativer dielektrischer Anisotropie mit Verbindungen der Formel I der hier vorliegenden Anmeldung zu stabilisieren.

DE 10 2010 049441 A1 offenbart Flüssigkristallmischungen die, neben anderen stabilisierenden Verbindungen, TINUVIN 770® enthalten können.

DE 10 2011 108276 A1 offenbart Flüssigkristallmischungen die, neben reaktiven Mesogenen, TINUVIN 770® enthalten können.

Viele Flüssigkristallmedien, besonders solche mit großen Polaritäten, bzw. hoher dielektrischer Anisotropie, erfüllen nicht die für praktische Anwendungen erforderlichen hohen Stabilitätsanforderungen.

Es besteht daher ein erheblicher Bedarf an flüssigkristallinen Medien mit geeigneten Eigenschaften für praktische Anwendungen, wie einem breiten nematischen Phasenbereich, geeigneter optischer Anisotropie Δn entsprechend dem verwendeten Anzeigetyp, einem hohen Δε und speziell geringen Viskositäten für besonders kurze Schaltzeiten.

### Vorliegende Erfindung

Überraschenderweise wurde nun gefunden, dass flüssigkristalline Medien mit einem geeignet hohen Δε, einem geeigneten Phasenbereich und geeigneten Δn verwirklicht werden können, welche die Nachteile der Materialien des Standes der Technik nicht oder zumindest nur in erheblich geringerem Maße aufweisen.

Hier wurde überraschend gefunden, dass die Verbindung TINUVIN 770® zu einer erheblichen, in vielen Fällen ausreichenden, Stabilisierung von Flüssigkristallmischungen führt und insbesondere in Kombination mit anderen Stabilisatoren, insbesondere mit *ortho*-(*tert*-butyl)-Phenolderivaten oder di-*ortho-*(*tert*-butyl)-Phenolderivaten, also Verbindungen, die ein Strukturelement der Formel 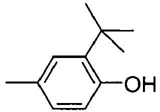 beziehungsweise 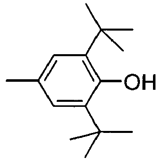 enthalten, und/oder Verbindungen, die eine Strukturelement der Formel 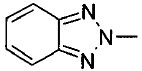 enthalten, wobei diese Strukturelemente optional weitere Substituenten tragen können, bevorzugt Alkyl oder Halogen.

Die Erfindung betrifft ein flüssigkristallines Medium mit einer nematischen Phase und einer positiven dielektrischen Anisotropie, welches
a) eine Verbindung der Formel TINUVIN 770®, bevorzugt in einer Konzentration im Bereich von 1 ppm bis zu 2.000 ppm, bevorzugt im Bereich von 1 ppm bis 600 ppm, besonders bevorzugt im Bereich von 1 ppm bis zu 250 ppm, ganz besonders bevorzugt im Bereich von 10 ppm bis zu 200 ppm, 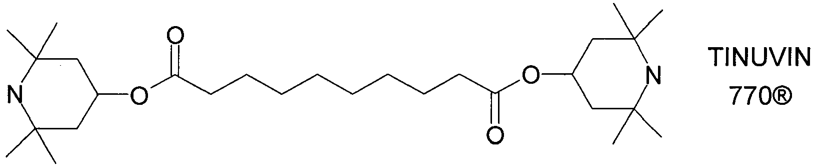
b) eine oder mehrere Verbindungen ausgewählt aus der Gruppe der Verbindungen der Formeln II und III 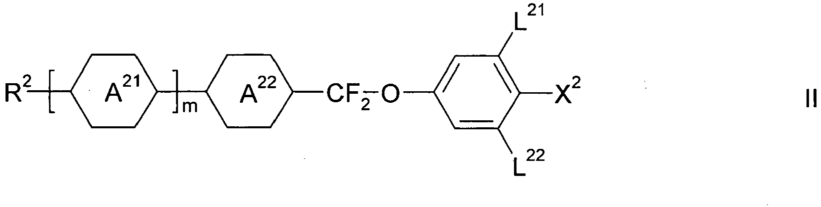 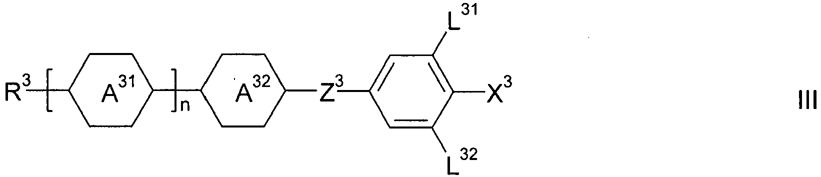 worin
   - R² und R³: unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugsweise R² und R³ Alkyl oder Alkenyl, 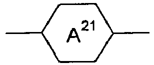 bis 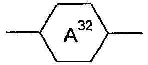 bei jedem Erscheinen unabhängig voneinander 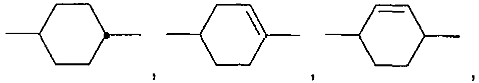 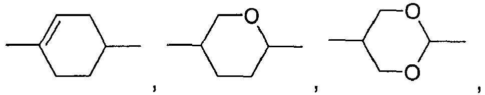 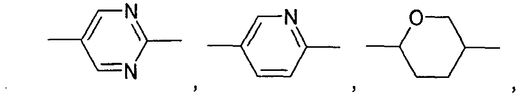 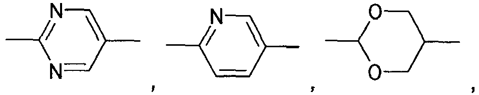 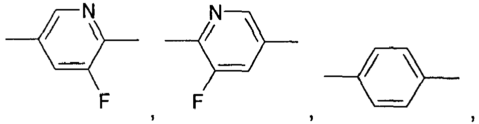 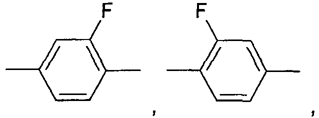 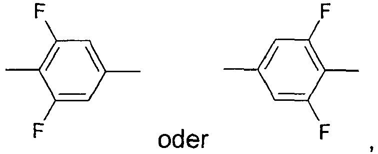 bevorzugt 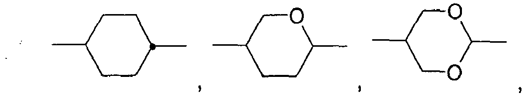 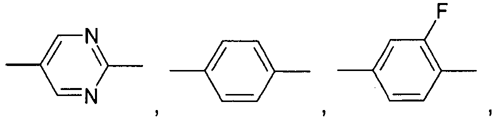 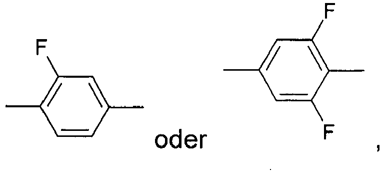
   - L²¹, L²², L³¹ und L³²: unabhängig voneinander H oder F, vorzugsweise
   - L²¹ und/oder L³¹ F, X² und X³: unabhängig voneinander Halogen, halogeniertes Alkyl
   - X² und X³: unabhängig voneinander Halogen, halogeniertes Alkyl oder Alkoxy mit 1 bis 3 C-Atomen oder halogeniertes Alkenyl oder Alkenyloxy mit 2 oder 3 C-Atomen, vorzugsweise F, Cl, -OCF₃ oder -CF₃, ganz bevorzugt F, Cl oder -OCF₃,
   - Z³: -CH₂CH₂-, -CF₂CF₂-, -COO-, *trans-* -CH=CH-, *trans-*-CF=CF-, -CH₂O- oder eine Einfachbindung, vorzugsweise -CH₂CH₂-, -COO-, *trans-* -CH=CH- oder eine Einfachbindung und ganz bevorzugt -COO-, *trans-*-CH=CH- oder eine Einfachbindung und
   - m und n: unabhängig voneinander 0, 1, 2 oder 3,
   - m: bevorzugt 1, 2 oder 3 und
   - n: bevorzugt 0, 1 oder 2 und besonders bevorzugt 1 oder 2,
   bedeuten,
   und
c) eine der Verbindung der Formel CC-3-V 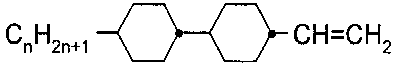
worin
- n: 3
bedeuten,
enthält.

Bevorzugt sind die folgenden Ausführungsformen bei denen bei den Verbindungen der Formel I gilt: 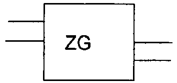 bedeutet 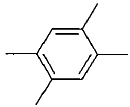 (Benzol-1,2,4,5-tetrayl) oder -CH₂-(CH-)-[CH₂]_{q}-(CH-)-CH₂-oder >CH-[CH₂]ₚ-CH<, (mit p ∈ {0, 1, 2, 3, 4, 5 bis 18} und q ∈ {0, 1, 2, 3, bis 16}) oder 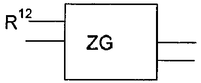 bedeutet
>CH-[CH₂]ₚ-CH₂- (mit p ∈ {0, 1, 2, 3, 4, 5 to 18}) oder 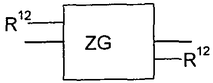 bedeutet
-CH₂-[CH₂]ₚ-CH₂- (mit p ∈ {0, 1, 2, 3, 4, 5 to 18}), Propan-1,2-diyl, Butan-1,2-diyl, Ethan-1,2-diyl, 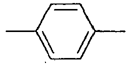 (1,4-Phenylen), 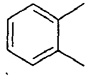 (1,2-Phenylen) oder 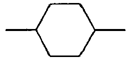 (1,4-Cyclohexylen).

In der vorliegenden Anmeldung umfassen die Elemente alle ihre jeweiligen Isotope. Insbesondere können in den Verbindungen ein oder mehrere H durch D ersetzt sein und dieses ist in einigen Ausführungsformen auch besonders bevorzugt. Ein entsprechend hoher Deuterierungsgrad der entsprechenden Verbindungen ermöglicht z.B. eine Detektion und Wiedererkennung der Verbindungen. Dieses ist insbesondere bei den Verbindungen der Formel I in einigen Fällen sehr hilfreich.

In der vorliegenden Anmeldung bedeutet
- Alkyl: besonders bevorzugt geradkettiges Alkyl, insbesondere CH₃-, C₂H₅-, *n*-C₃H₇, *n*-C₄H₉- oder *n*-C₅H₁₁-, und
- Alkenyl: besonders bevorzugt CH₂=CH-, *E*-CH₃-CH=CH-, CH₂=CH-CH₂-CH₂-, *E*-CH₃-CH=CH-CH₂-CH₂- oder *E*-(*n*-C₃H₇)-CH=CH-.

Bevorzugt enthalten die flüssigkristallinen Medien gemäß der vorliegenden Anmeldung insgesamt 1 ppm bis 1.000 ppm, bevorzugt 1 ppm bis 500 ppm, noch stärker bevorzugt 1 bis 250 ppm, bevorzugt bis 200 ppm, und, ganz besonders bevorzugt, 1 ppm bis 100 ppm an Verbindungen der Formel I.

Bevorzugt beträgt die Konzentration der Verbindungen der Formeln I und/oder TINUVIN 770® in den erfindungsgemäßen Medien 200 ppm oder weniger, besonders bevorzugt 100 ppm oder weniger. Ganz besonders bevorzugt beträgt die Konzentration der Verbindungen der Formeln I und/oder TINUVIN 770® in den erfindungsgemäßen Medien 1 ppm oder mehr bis 100 ppm oder weniger.

In einer bevorzugten Ausführungsform der vorliegenden Erfindung bedeutet bei den Verbindungen der Formel I 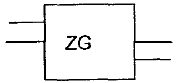 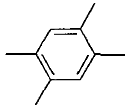 (Benzol-1,2,4,5-tetrayl) oder 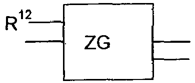 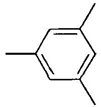 (Benzol-1,3,5-triyl) oder 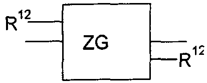 -(CH₂-)₂, -(CH₂-)₄, -(CH₂-)₆, -(CH₂-)₈,
Propan-1,2-diyl, Butan-1,2-diyl, Ethan-1,2-diyl, 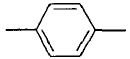 (1,4-Phenylen), 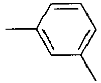 (1,3-Phenylen), 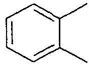 (1,2-Phenylen) oder 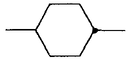 (*trans-*1,4-Cyclohexylen) und/oder
- -[Z¹¹-]ᵣ-[Z¹²-]ₛ: bei jedem Auftreten unabhängig voneinander -O-, -(C=O)-O- oder -O-(C=O)-, -(N-R¹⁴)- oder eine Einfachbindung, bevorzugt -O- oder -(C=O)-O- oder -O-(C=O)-, und/oder
- R¹¹: -O•, OH oder O-R¹³, bevorzugt: -O^{•}, -O-CH(-CH₃)₂, -O-CH(-CH₃)(-CH₂)₃-CH₃, -O-CH(-C₂H₅)(-CH₂)₃-CH₃, 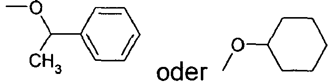 und/oder
- R¹²,: wenn vorhanden, Alkyl oder Alkoxy, und/oder
- R¹³,: iso-Propyl oder 3-Heptyl, Acetophenyl oder Cyclohexyl.

In einer bevorzugten Ausführungsform der vorliegenden Erfindung bedeutet bei den Verbindungen der Formel I die Gruppierung 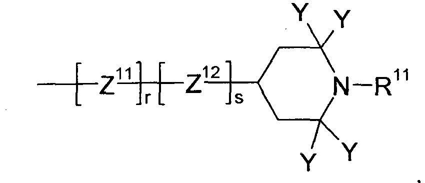 bei jedem Auftreten unabhängig voneinander, 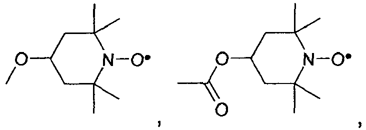 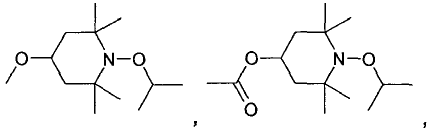 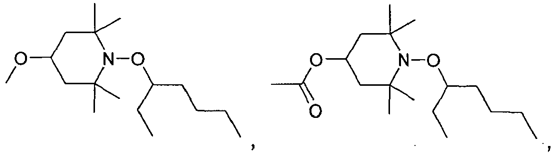 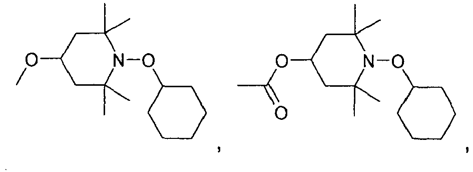 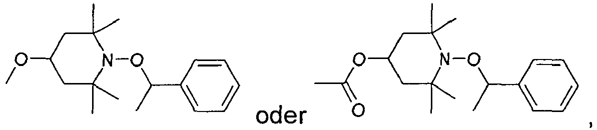 bevorzugt

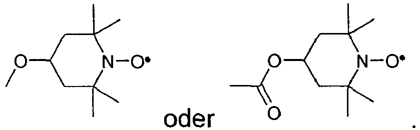

In einer besonders bevorzugten Ausführungsform der vorliegenden Erfindung haben bei den Verbindungen der Formel I alle vorhandenen Gruppierungen 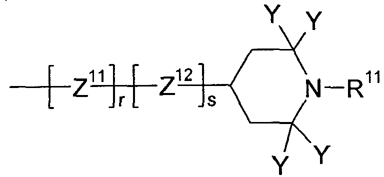 die selbe Bedeutung.

Diese Verbindungen eignen sich hervorragend als Stabilisatoren in Flüssigkristallmischungen. Insbesondere stabilisieren sie die VHR der Mischungen gegen UV-Belastung.

In einer bevorzugten Ausführungsform der vorliegenden Erfindung enthalten die erfindungsgemäßen Medien jeweils eine oder mehrere Verbindungen der Formel I ausgewählt aus der Gruppe der Verbindungen der Formeln I-1 bis I-9, bevorzugt ausgewählt aus der Gruppe der Verbindungen der Formeln I-1 bis I-4, 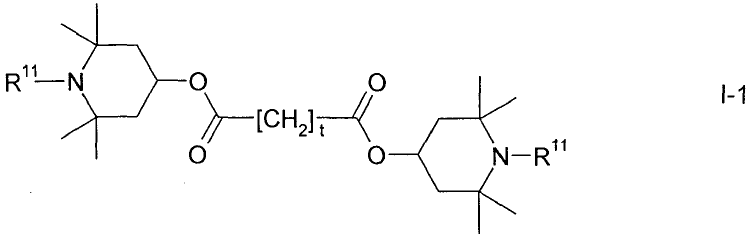 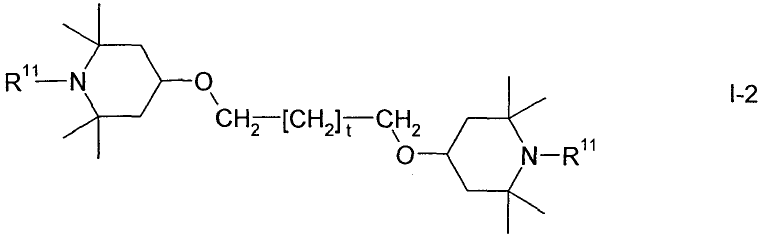 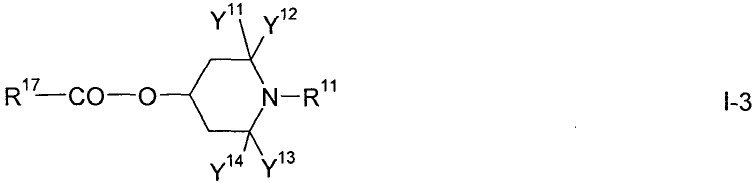 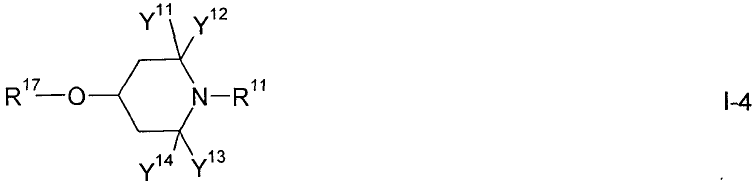 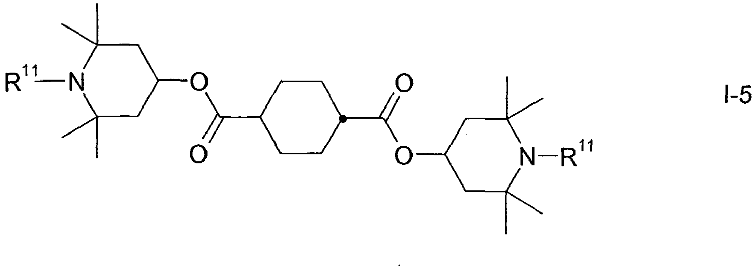 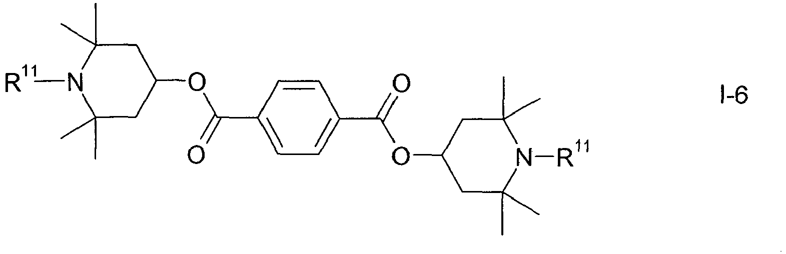 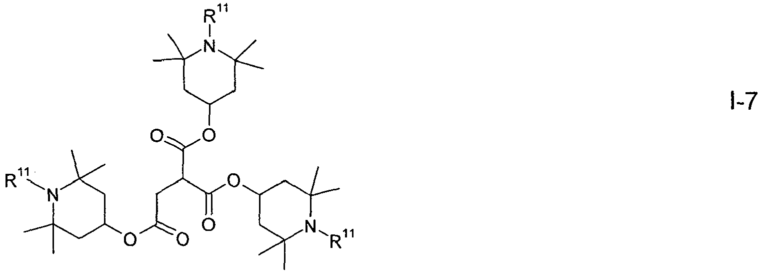 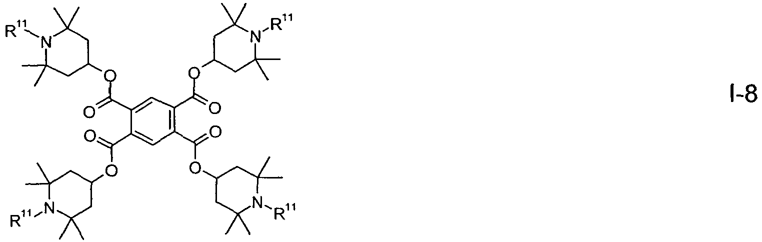 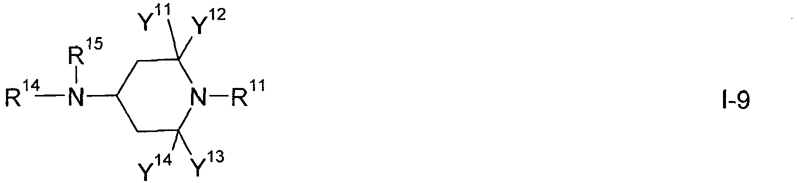 worin die Parameter die oben unter Formel I angegebenen Bedeutungen haben und
- t: eine ganze Zahl von 1 bis12
- R¹⁷: eine geradkettige oder verzweigte Alkylkette mit 1-12 C-Atomen in der eine -CH₂- -Gruppe oder mehrere -CH₂--Gruppen durch -O- oder -C(=O)- ersetzt sein können, jedoch nicht zwei benachbarte -CH₂- -Gruppen durch -O- ersetzt sein können oder ein aromatischer oder heteroaromatischer Kohlenwasserstoffrest in denen ein H-Atom oder mehrere H-Atome durch OR¹⁴, N(R¹⁴)(R¹⁵) oder R¹⁶ ersetzt sein können,
bedeuten.

In einer noch stärker bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-1a-1 bis I-8a-1

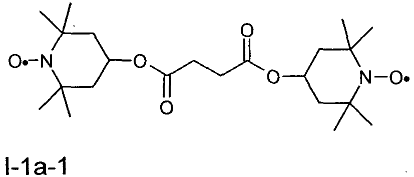

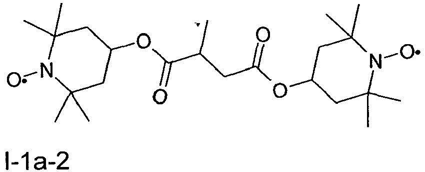

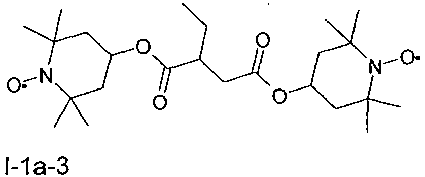

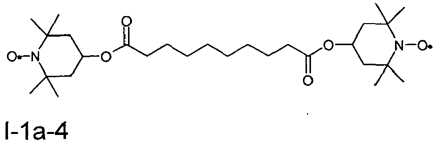

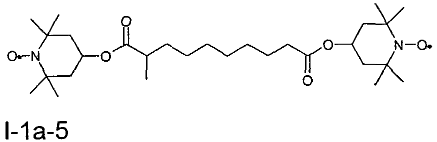

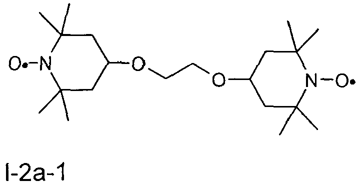

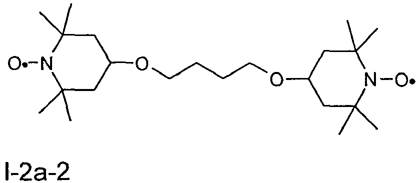

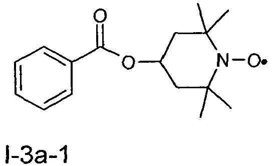

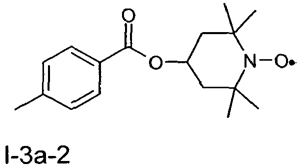

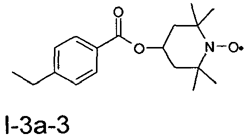

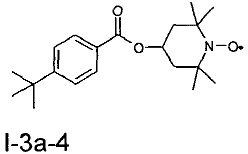

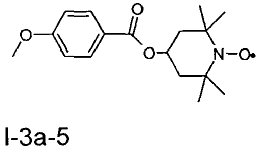

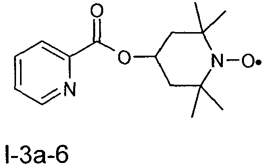

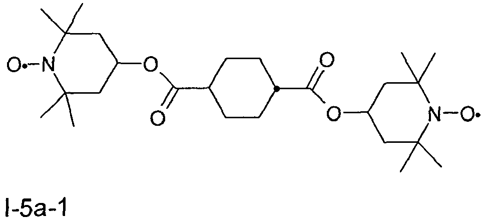

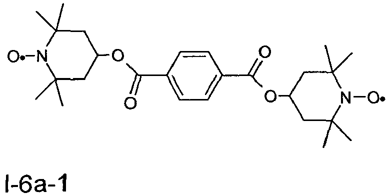

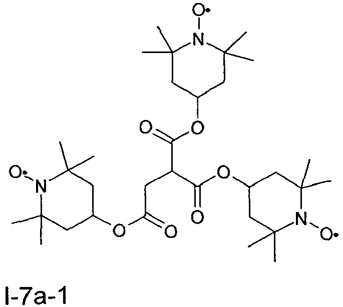

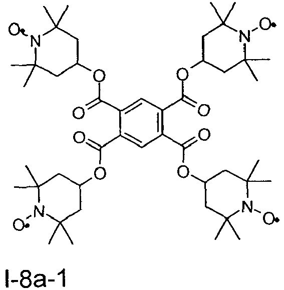

In einer noch stärker bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-2a-1 und I-2a-2

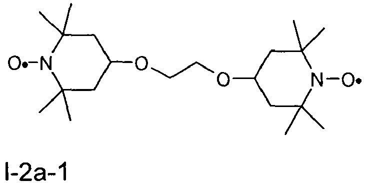

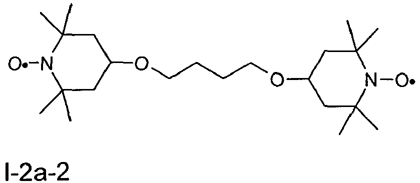

In einer alternativen, bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-1b-1 und I-1b-2

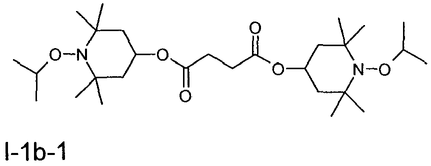

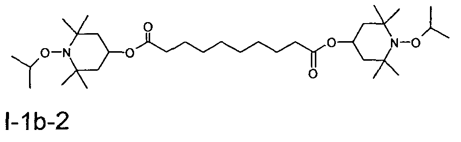

In einer alternativen, bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-1c-1 und I-1c-2

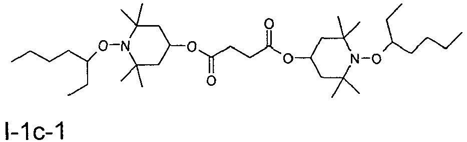

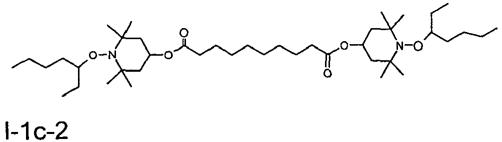

In einer weiteren alternativen, bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-1d-1 bis I-1d-4

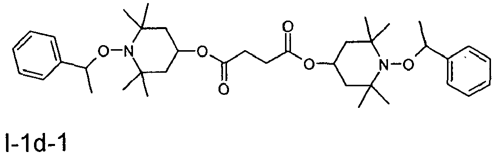

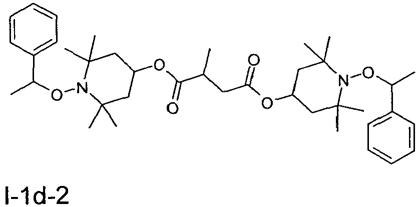

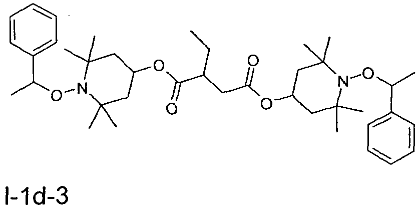

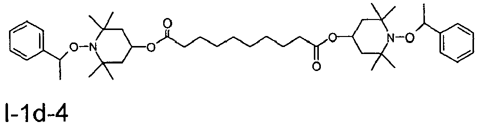

In einer weiteren alternativen, bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-3d-1 bis I-3d-8

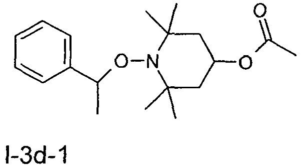

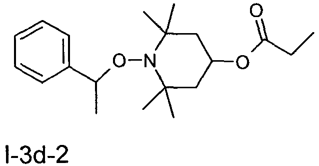

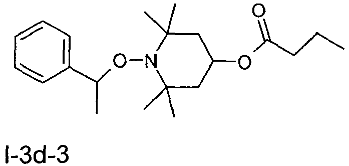

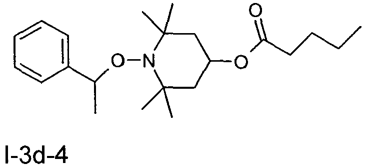

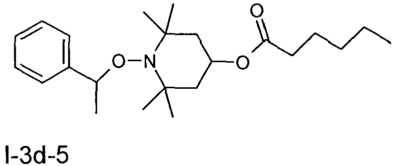

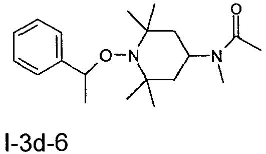

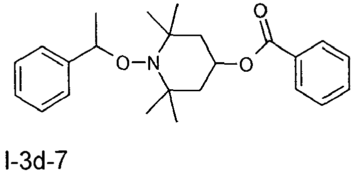

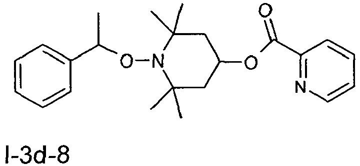

In einer weiteren alternativen, bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-4d-1 und I-4d-2

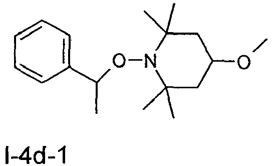

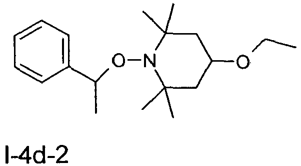

In einer weiteren alternativen, bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-1e-1 und I-1e-2

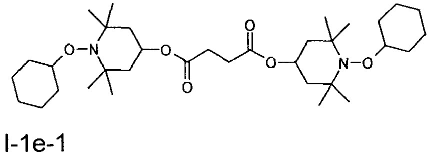

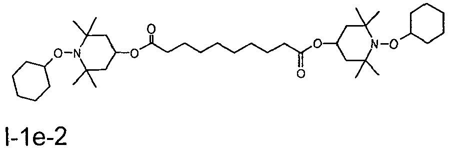

In einer weiteren alternativen, bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-5e-1 bis I-8e-1

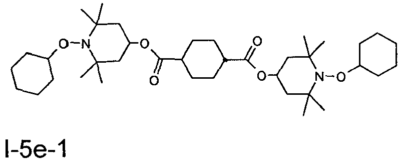

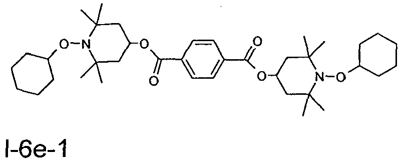

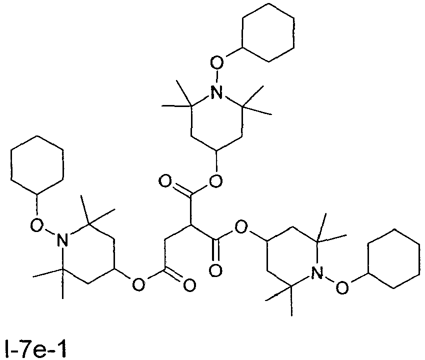

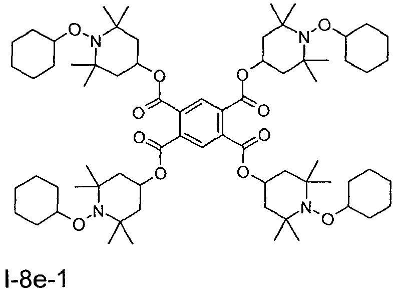

In einer bevorzugten Ausführungsform der vorliegenden Erfindung enthalten die erfindungsgemäßen Medien die Verbindung TINUVIN 770®
und
eine oder mehrere Verbindungen der Formel I, bevorzugt ausgewählt aus deren bevorzugten Unterformeln,
und/oder
eine oder mehrere Verbindungen, die ein Strukturelement der Formel 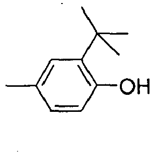 beziehungsweise 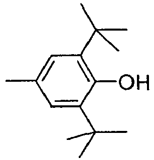 enthalten, wobei diese Strukturelemente optional weitere Substituenten tragen können, bevorzugt Alkyl oder Halogen,
und/oder eine oder mehrere Verbindungen, die eine Strukturelement der Formel 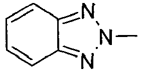 enthalten, wobei dieses Strukturelement optional weitere Substituenten tragen kann, bevorzugt Alkyl oder Halogen,
und/oder
eine oder mehrere Verbindungen der Formel II, bevorzugt ausgewählt aus deren bevorzugten Unterformeln,
und/oder
eine oder mehrere Verbindungen der Formel III, bevorzugt ausgewählt aus deren bevorzugten Unterformeln,
und/oder
eine oder mehrere Verbindungen der Formel IV, bevorzugt ausgewählt aus deren bevorzugten Unterformeln.

Vorzugsweise enthalten die Medien gemäß der vorliegenden Erfindung zusätzlich zu den Verbindungen der Formeln I und/oder TINUVIN 770®, bzw. deren bevorzugter Unterformeln, eine oder mehrere dielektrisch neutrale Verbindungen der Formel IV in einer Gesamtkonzentration im Bereich von 5 % oder mehr bis 90 % oder weniger, bevorzugt von 10 % oder mehr bis 80 % oder weniger, besonders bevorzugt von 20 % oder mehr bis 70 % oder weniger.

Die Verbindungen der Formeln II und III sind bevorzugt dielektrisch positive Verbindungen, vorzugsweise mit einer dielektrischen Anisotropie von mehr als 3.

Die Verbindungen der Formel IV sind bevorzugt dielektrisch neutrale Verbindungen, vorzugsweise mit einer dielektrischen Anisotropie im Bereich von -1,5 bis 3.

Bevorzugt enthalten die flüssigkristallinen Medien gemäß der vorliegenden Anmeldung insgesamt 1 ppm bis 2.000 ppm, bevorzugt 1 ppm bis 1.000 ppm und ganz besonders bevorzugt 1 ppm bis 300 ppm von einer oder mehrereren Verbindungen der Formeln I und/oder TINUVIN 770®.

Diese Verbindungen eignen sich hervorragend als Stabilisatoren in Flüssigkristallmischungen. Insbesondere stabilisieren sie die "Voltage Holding Ratio" (kurz VHR oder nur HR) der Mischungen nach Belastung mit UV-Strahlung und/oder einer LCD-Hintergrundbeleuchtung und/oder erhöhter Temperatur.

Die einzelnen Verbindungen der Formel II und/oder III werden in einer Konzentration von 1 bis 20 %, bevorzugt von 1 bis 15 % eingesetzt. Diese Grenzen gelten insbesondere wenn jeweils zwei oder mehr homologe Verbindungen, also Verbindungen der gleichen Formel, eingesetzt werden. Wird von den Verbindungen einer Formel nur eine einzelne Substanz, also nur ein Homologes, eingesetzt so kann dessen Konzentration im Bereich von 2 bis 20 %, bevorzugt von 3 bis 14 %, liegen.

Vorzugsweise enthalten die Medien gemäß der vorliegenden Erfindung zusätzlich zu den Verbindungen der Formeln I und/oder TINUVIN 770®, bzw. deren bevorzugter Unterformeln, eine oder mehrere dielektrisch positive Verbindungen mit einer dielektrischen Anisotropie von mehr als 3, ausgewählt aus der Gruppe der Formeln II und III.

In einer bevorzugten Ausführungsform der vorliegenden Erfindung enthalten die erfindungsgemäßen Medien eine oder mehrere Verbindungen ausgewählt aus der Gruppe der Verbindungen der Formeln II-1 bis II-4, bevorzugt der Formeln II-1 und/oder II-2 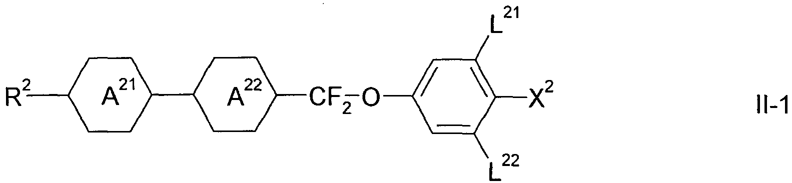 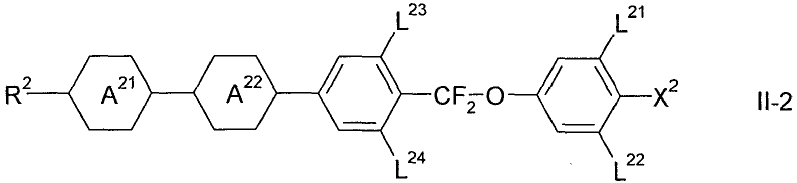 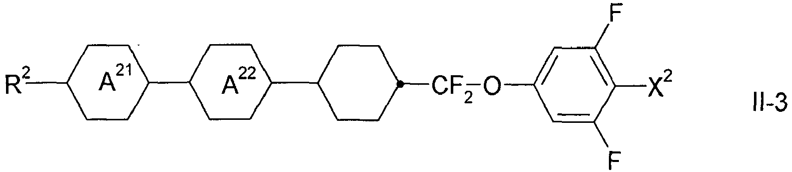 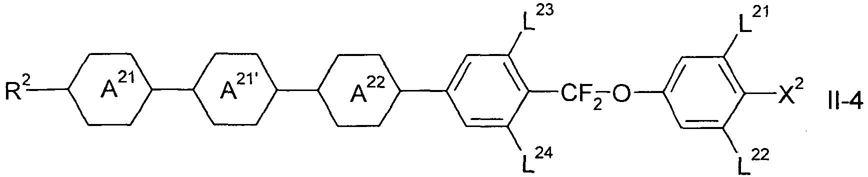 worin die Parameter die jeweiligen oben unter Formel II angegebenen Bedeutungen besitzen und L²³ und L²⁴ unabhängig voneinander H oder F, bevorzugt L²³ F, bedeutet und 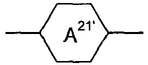 eine der bei 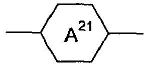 gegebenen Bedeutungen hat und bei Formeln II-1 und II-4 X² bevorzugt F oder OCF₃, besonders bevorzugt F und bei Formel II-3 vorzugsweise 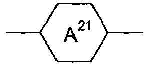 und 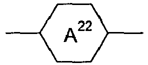 unabhängig voneinander 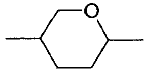 oder 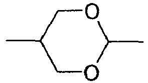 bedeuten,
und/oder ausgewählt sind aus der Gruppe der Verbindungen der Formeln III-1 und III-2: 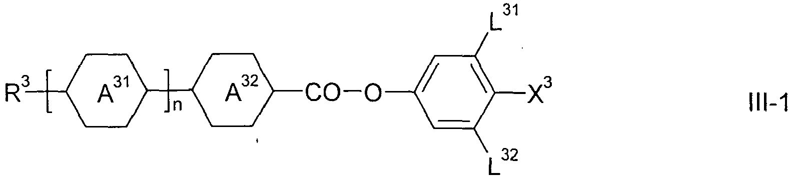 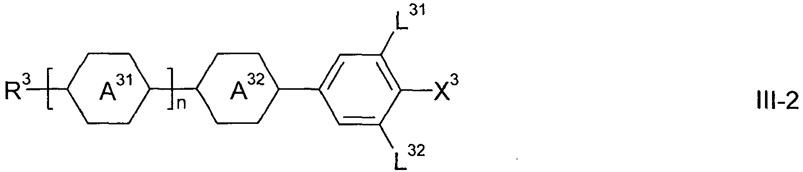 worin die Parameter die unter Formel III gegeben Bedeutung haben.

In einer bevorzugten Ausführungsform enthalten die Medien gemäß der vorliegenden Erfindung alternativ oder zusätzlich zu den Verbindungen der Formeln III-1 und/oder III-2 eine oder mehrere Verbindungen der Formel III-3 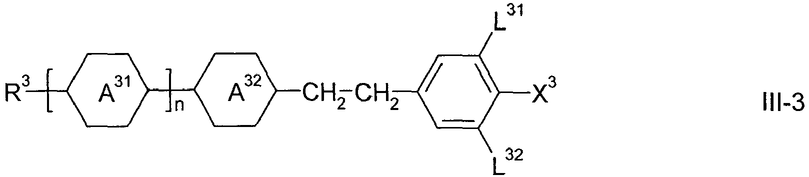 worin die Parameter die jeweiligen oben angegebenen Bedeutungen besitzen und die Parameter L³¹ und L³² unabhängig voneinander und von den anderen Parametern H oder F bedeuten.

Vorzugsweise enthalten die erfindungsgemäßen Medien eine oder mehrere Verbindungen ausgewählt aus der Gruppe der Verbindungen der Formeln II-1 bis II-4, worin L²¹ und L²² und/oder L²³ und L²⁴ beide F bedeuten.

In einer bevorzugten Ausführungsform enthalten die Medien eine oder mehrere Verbindungen, die ausgewählt sind aus der Gruppe der Verbindungen der Formeln II-2 und II-4, worin L²¹ , L²², L²³ und L²⁴ alle F bedeuten.

Vorzugsweise enthalten die Medien eine oder mehrere Verbindungen der Formel II-1. Vorzugsweise sind die Verbindungen der Formel II-1 ausgewählt aus der Gruppe der Verbindungen der Formeln II-1a bis II-1f 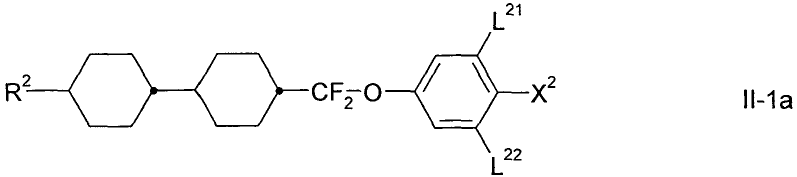 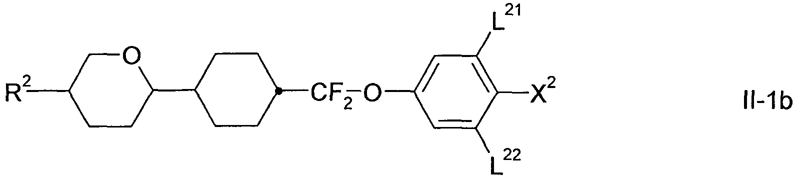 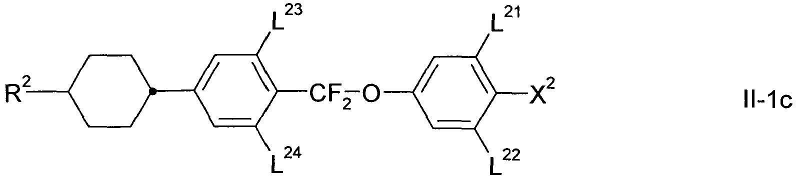 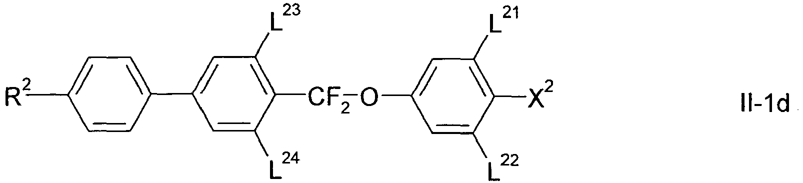 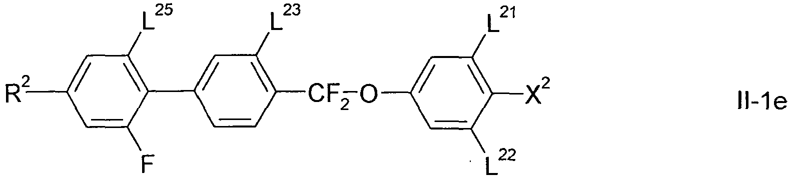 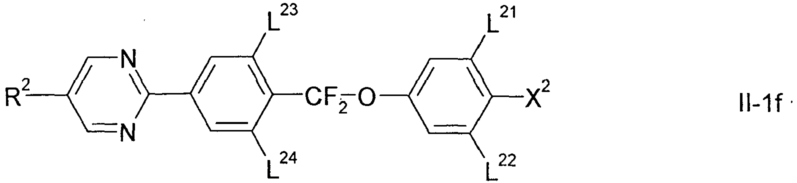 worin die Parameter die jeweiligen oben angegebenen Bedeutungen besitzen und L²³ bis L²⁵ unabhängig voneinander und von den anderen Parametern H oder F bedeuten und
vorzugsweise
in den Formeln II-1a und II-1b
L²¹ und L²² beide F bedeuten,
in den Formeln II-1c und II-1d
L²¹ und L²² beide F und/oder L²³ und L²⁴ beide F bedeuten und
in Formel II-1e
L²¹, L²² und L²⁵ F bedeuten und jeweils die anderen Parameter die jeweiligen oben gegebenen Bedeutungen haben.

Speziell bevorzugte Verbindungen der Formel II-1 sind 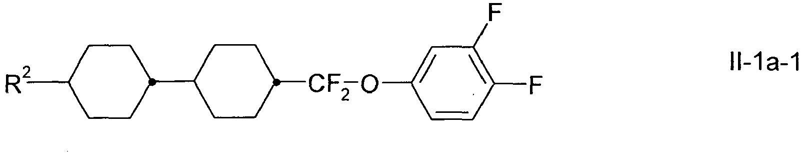 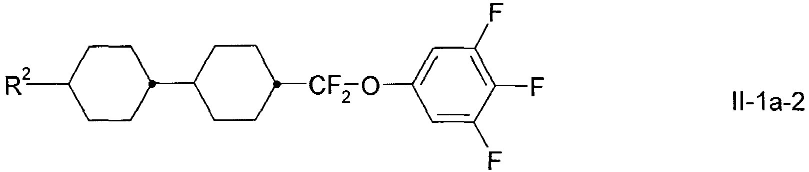 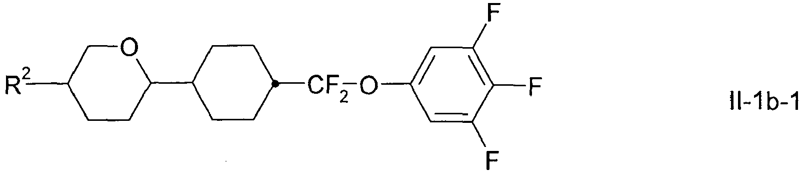 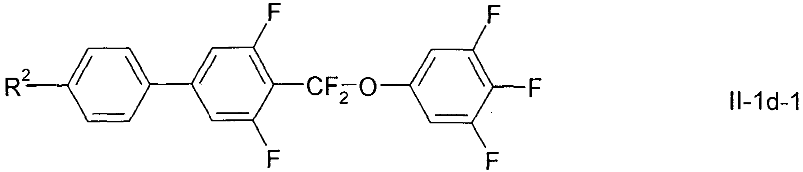 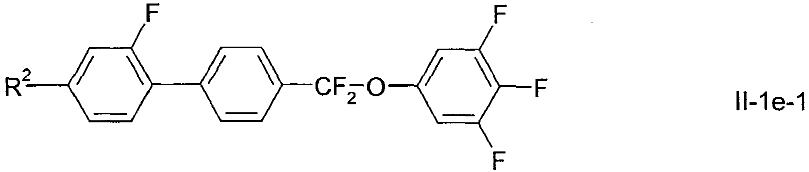 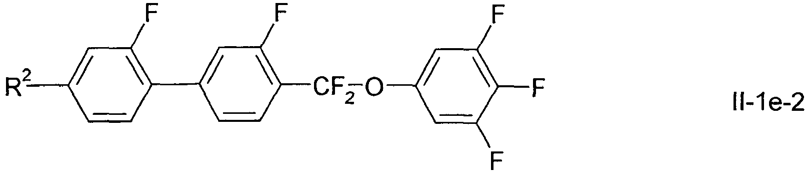 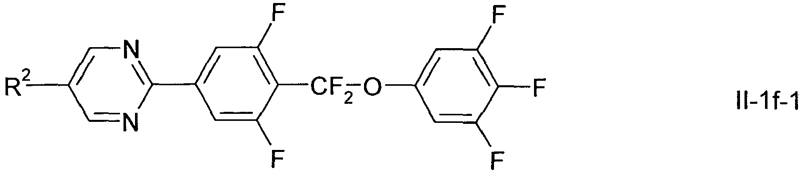 worin R² die oben angegebene Bedeutung besitzt, insbesondere Verbindungen der Formel II-1a-2.

Vorzugsweise enthalten die Medien eine oder mehrere Verbindungen der Formel II-2, die bevorzugt ausgewählt sind aus der Gruppe der Verbindungen der Formeln II-2a bis II-2k 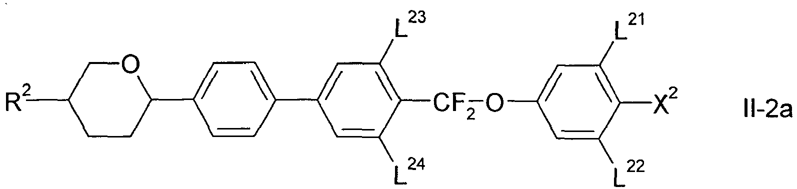 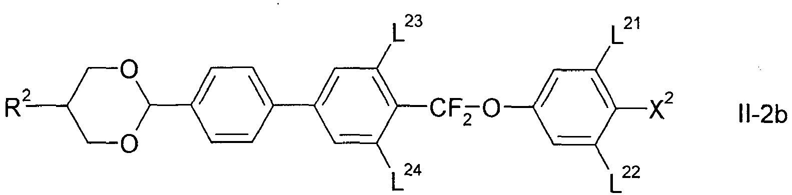 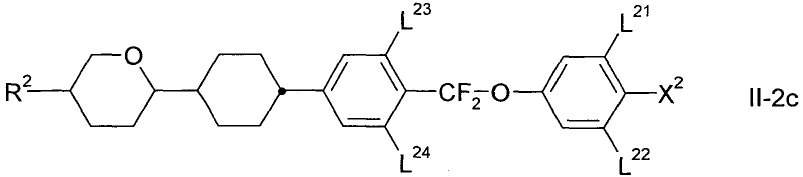 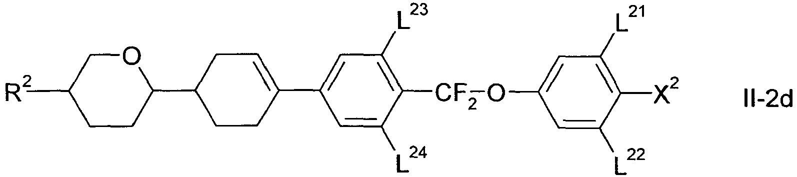 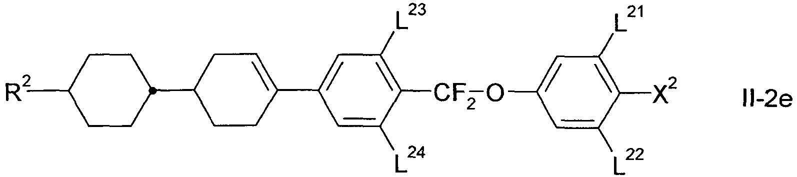 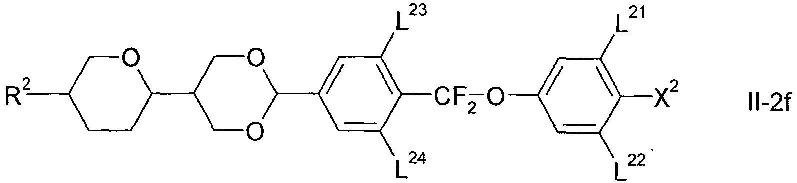 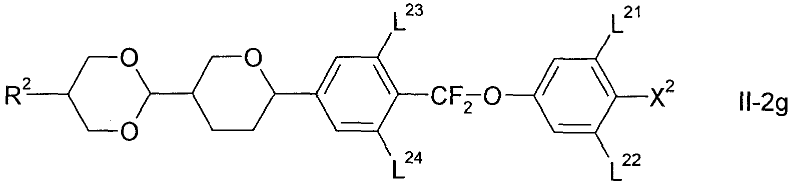 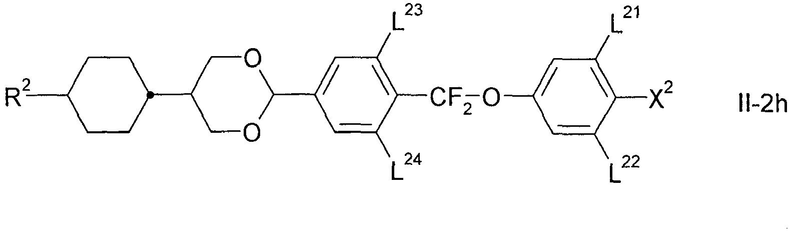 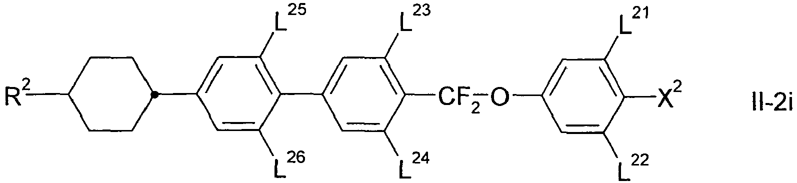 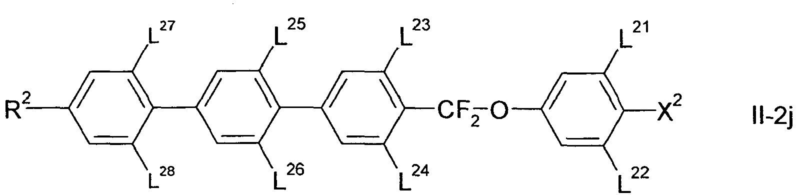 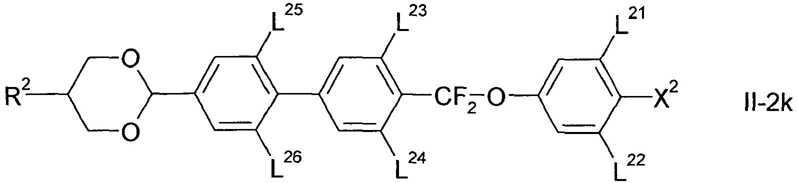 worin die Parameter die jeweiligen oben angegebenen Bedeutungen besitzen und L²⁵ bis L²⁸ unabhängig voneinander H oder F, bevorzugt L²⁷ und L²⁸ beide H, besonders bevorzugt L²⁶ H bedeuten und die anderen Parameter die jeweiligen oben gegebenen Bedeutungen.

Vorzugsweise enthalten die erfindungsgemäßen Medien eine oder mehrere Verbindungen ausgewählt aus der Gruppe der Verbindungen der Formeln II-2a bis II-2k, worin L²¹ und L²² beide F und/oder L²³ und L²⁴ beide F bedeuten und die anderen Parameter die jeweiligen oben gegebenen Bedeutungen haben.

In einer bevorzugten Ausführungsform enthalten die erfindungsgemäßen Medien eine oder mehrere Verbindungen ausgewählt aus der Gruppe der Verbindungen der Formeln II-2a bis II-2k, worin L²¹, L²², L²³ und L²⁴ alle F bedeuten und die anderen Parameter die jeweiligen oben gegebenen Bedeutungen haben.

Speziell bevorzugte Verbindungen der Formel II-2 sind die Verbindungen der folgenden Formeln 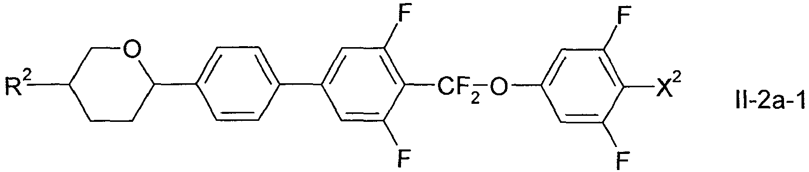 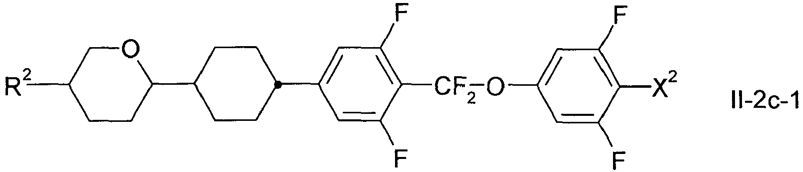 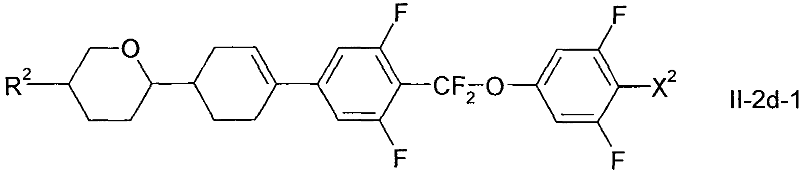 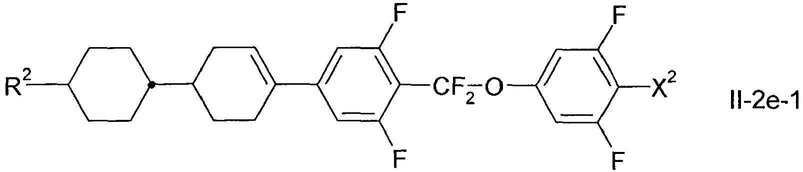 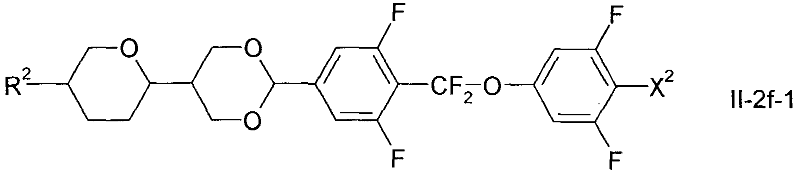 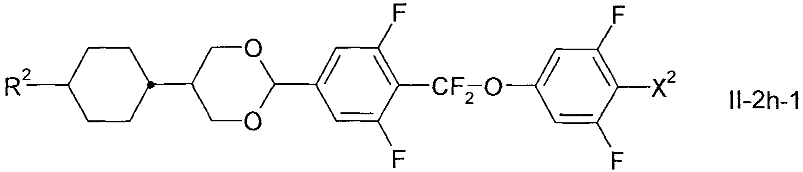 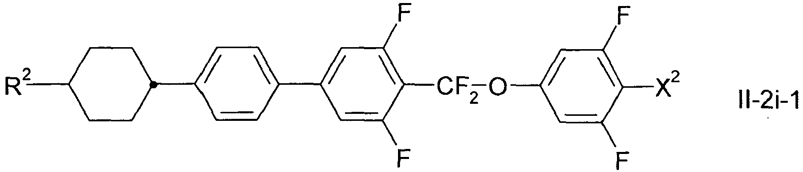 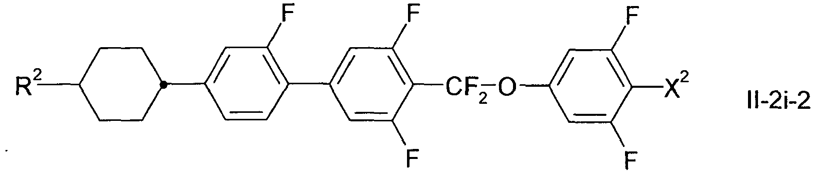 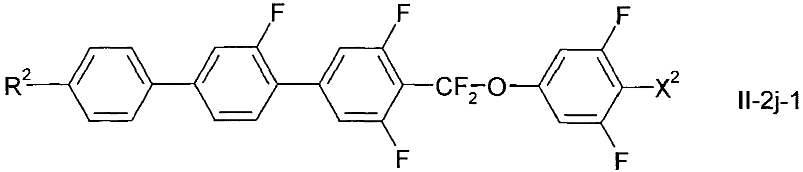 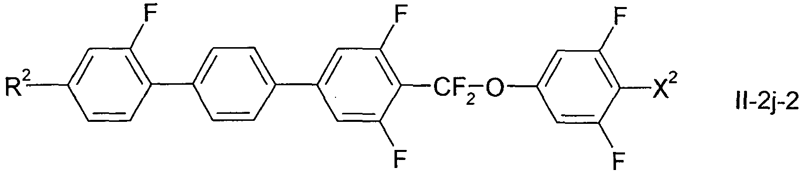 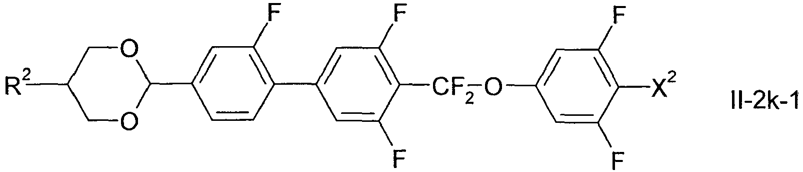 worin R² und X² die oben angegebenen Bedeutungen besitzen und X² bevorzugt F bedeutet, besonders bevorzugt Verbindungen der Formel II-2a-1 und/oder II-2h-1 und/oder II-2j-1 und/oder II-2k-1.

Vorzugsweise enthalten die erfindungsgemäßen Medien eine oder mehrere Verbindungen der Formel II-3, vorzugsweise ausgewählt aus der Gruppe der Verbindungen der Formeln II-3a bis II-3c 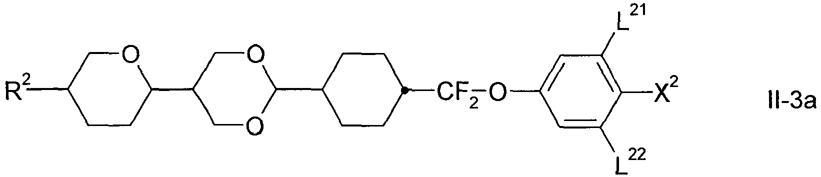 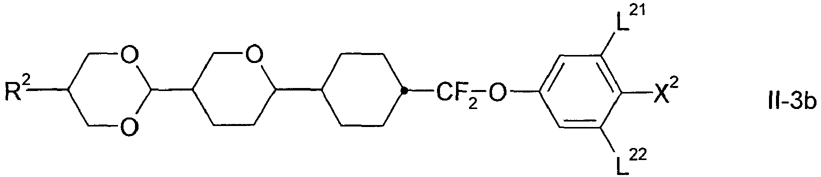 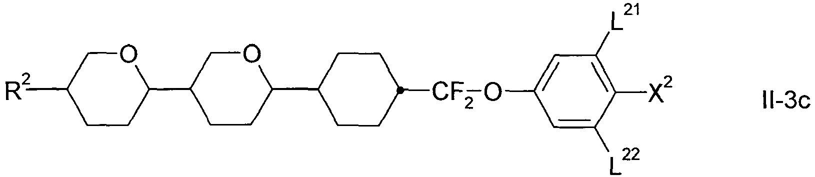 worin die Parameter die jeweiligen oben angegebenen Bedeutungen besitzen und L²¹ und L²² vorzugsweise beide F bedeuten.

In einer bevorzugten Ausführungsform enthalten die erfindungsgemäßen Medien eine oder mehrere Verbindungen der Formel II-4, bevorzugt der Formel II-4a 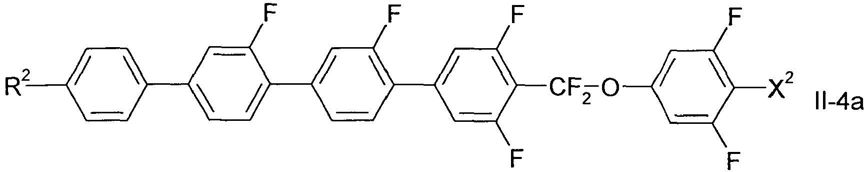 worin die Parameter die oben gegebene Bedeutung haben und X² bevorzugt F oder OCF₃, besonders bevorzugt F, bedeutet.

Vorzugsweise enthalten die erfindungsgemäßen Medien eine oder mehrere Verbindungen der Formel III-1, vorzugsweise ausgewählt aus der Gruppe der Verbindungen der Formeln III-1a und III-1b 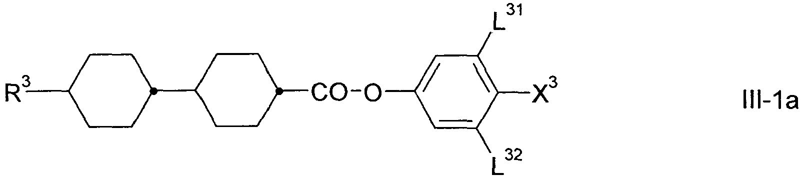 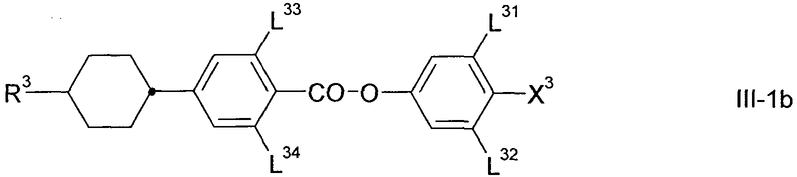 worin die Parameter die jeweiligen oben angegebenen Bedeutungen besitzen und die Parameter L³³ und L³⁴ unabhängig voneinander und von den anderen Parametern H oder F bedeuten.

Vorzugsweise enthalten die erfindungsgemäßen Medien eine oder mehrere Verbindungen der Formel III-1a, vorzugsweise ausgewählt aus der Gruppe der Verbindungen der Formeln III-1a-1 bis III-1a-6 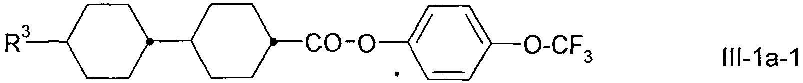 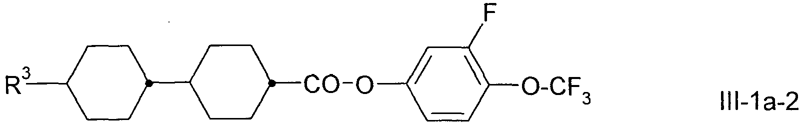 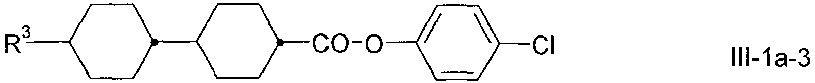 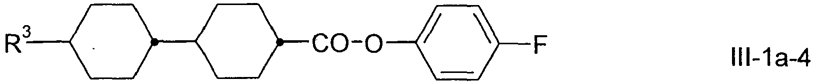 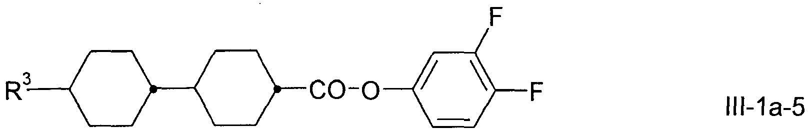 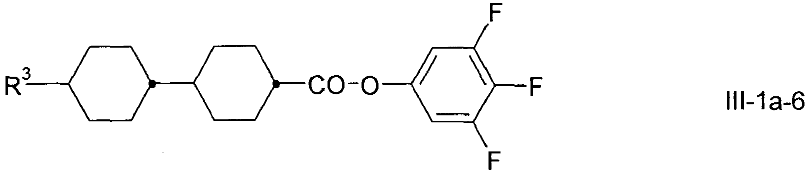 worin R³ die oben angegebene Bedeutung besitzt.

Vorzugsweise enthalten die erfindungsgemäßen Medien eine oder mehrere Verbindungen der Formel III-1b, vorzugsweise ausgewählt aus der Gruppe der Verbindungen der Formeln III-1b-1 bis III-1b-4, vorzugsweise der Formel III-1b-4 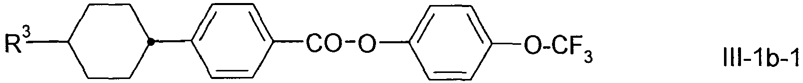 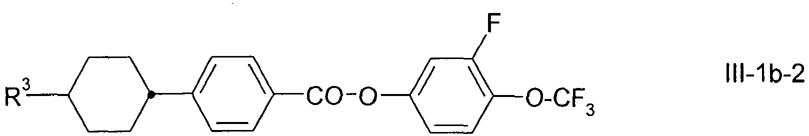 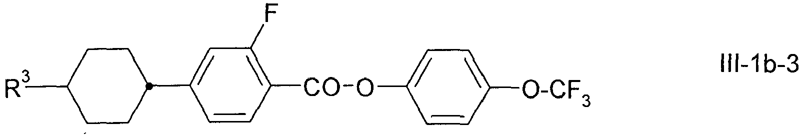 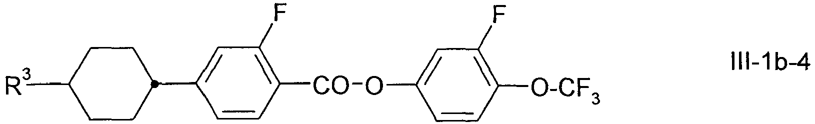 worin R³ die oben angegebene Bedeutung besitzt.

Vorzugsweise enthalten die erfindungsgemäßen Medien eine oder mehrere Verbindungen der Formel III-2, vorzugsweise ausgewählt aus der Gruppe der Verbindungen der Formeln III-2a bis III-2k 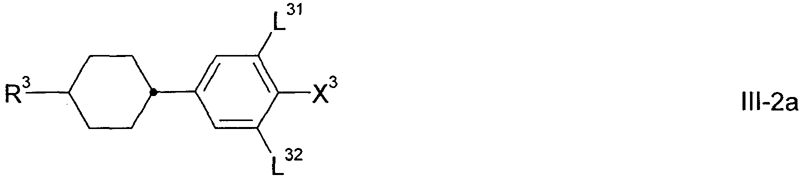 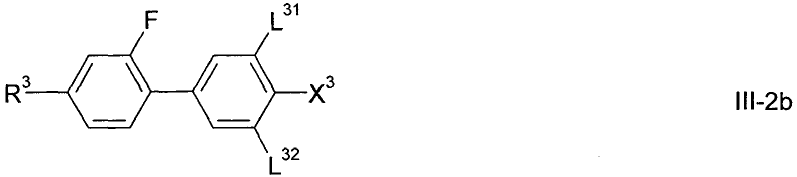 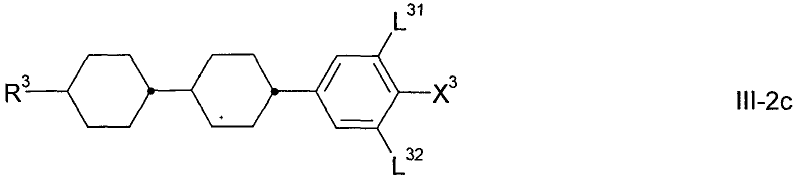 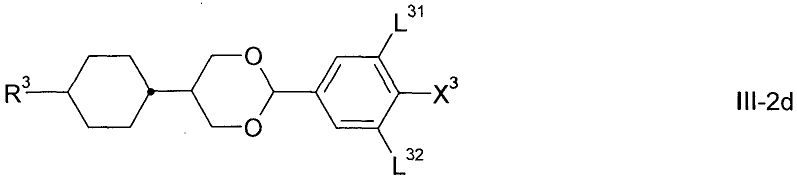 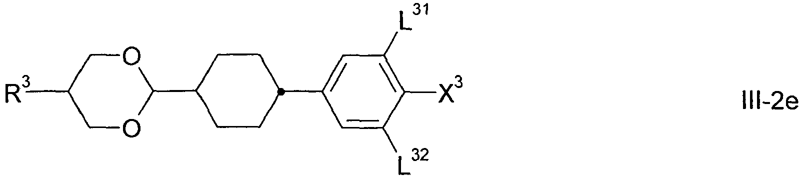 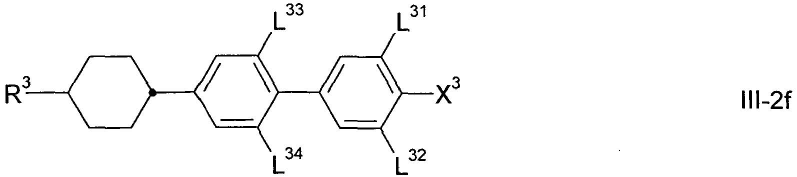 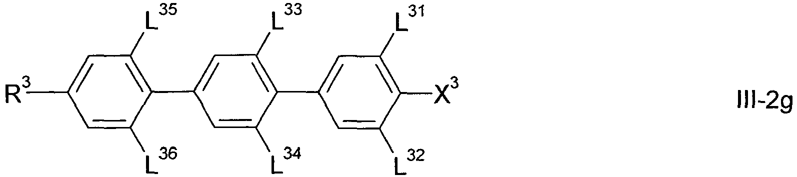 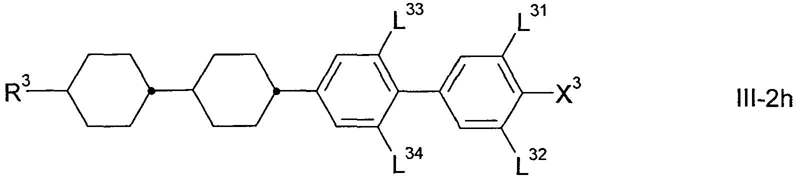 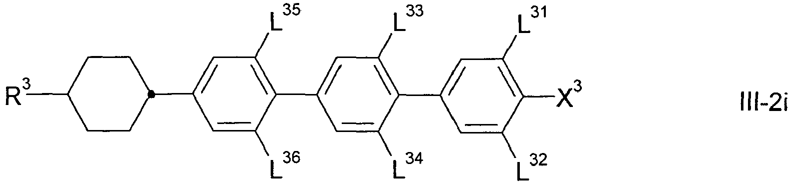 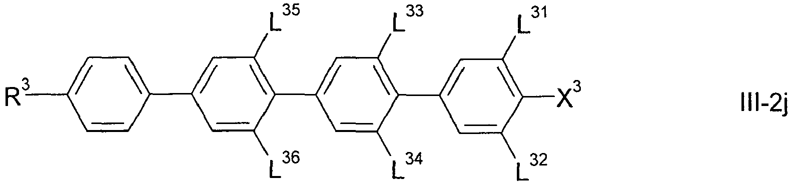 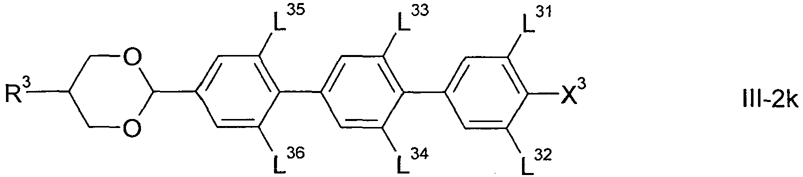 worin die Parameter die oben gegebene Bedeutung haben und bevorzugt worin die Parameter die jeweiligen oben angegebenen Bedeutungen besitzen und die Parameter L³³, L³⁴, L³⁵ und L³⁶ unabhängig voneinander und von den anderen Parametern H oder F bedeuten.

Vorzugsweise enthalten die erfindungsgemäßen Medien eine oder mehrere Verbindungen der Formel III-2a, vorzugsweise ausgewählt aus der Gruppe der Verbindungen der Formeln III-2a-1 bis III-2a-5 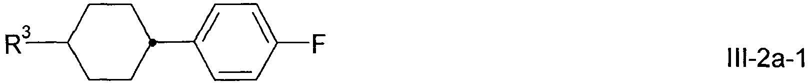 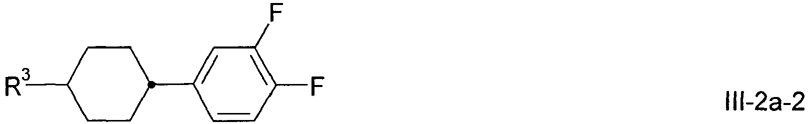 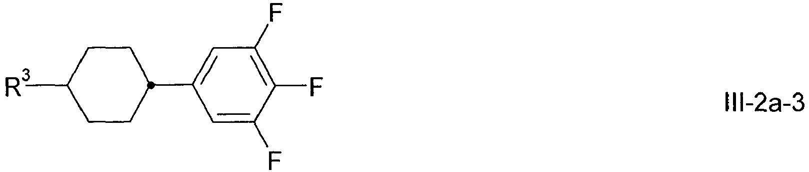 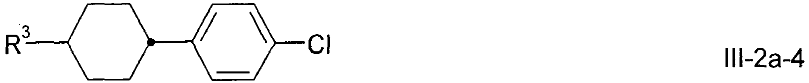 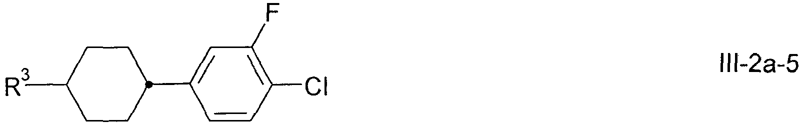 worin R³ die oben angegebene Bedeutung besitzt.

Vorzugsweise enthalten die erfindungsgemäßen Medien eine oder mehrere Verbindungen der Formel III-2b, vorzugsweise ausgewählt aus der Gruppe der Verbindungen der Formeln III-2b-1 und III-2b-2, vorzugsweise der Formel III-2b-2 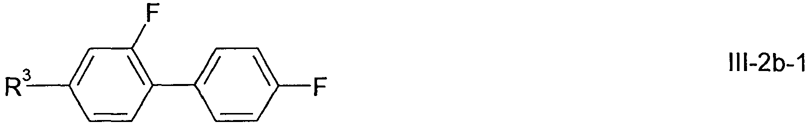 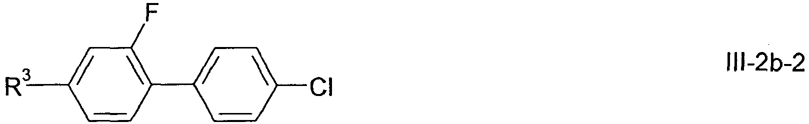 worin R³ die oben angegebene Bedeutung besitzt.

Vorzugsweise enthalten die erfindungsgemäßen Medien eine oder mehrere Verbindungen der Formel III-2c, vorzugsweise ausgewählt aus der Gruppe der Verbindungen der Formeln III-2c-1 bis III-2c-6 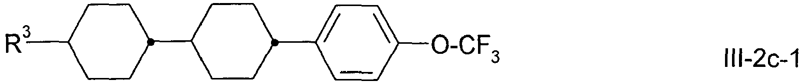 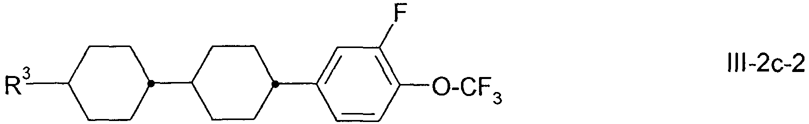 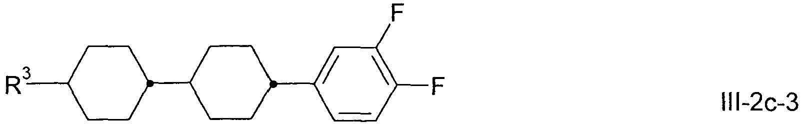 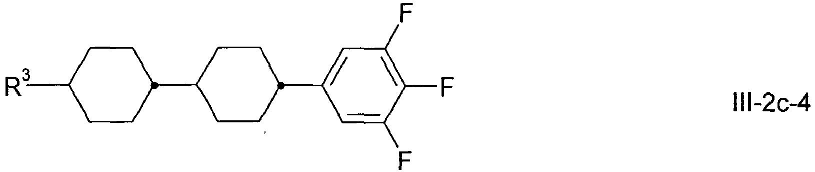 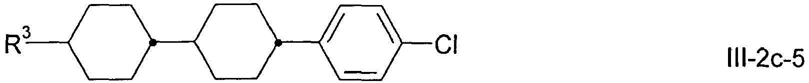 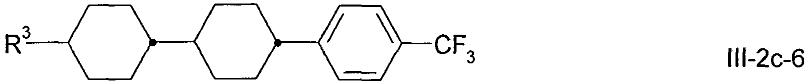 worin R³ die oben angegebene Bedeutung besitzt, besonders bevorzugt Verbindungen der Formel III-2c-1 und/oder III-2c-2 und/oder III-2c-4.

Vorzugsweise enthalten die erfindungsgemäßen Medien eine oder mehrere Verbindungen ausgewählt aus der Gruppe der Verbindungen der Formeln III-2d und III-2e, vorzugsweise ausgewählt aus der Gruppe der Verbindungen der Formeln III-2d-1 und III-2e-1 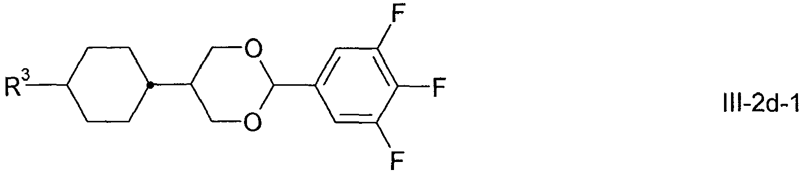 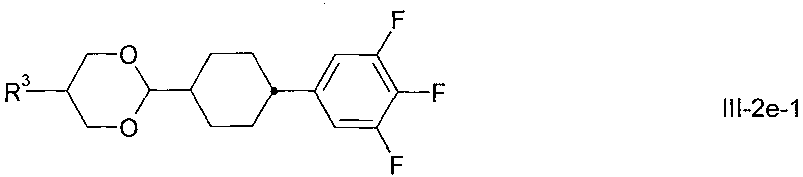 worin R³ die oben angegebene Bedeutung besitzt.

Vorzugsweise enthalten die erfindungsgemäßen Medien eine oder mehrere Verbindungen der Formel III-2f, vorzugsweise ausgewählt aus der Gruppe der Verbindungen der Formeln III-2f-1 bis III-2f-5 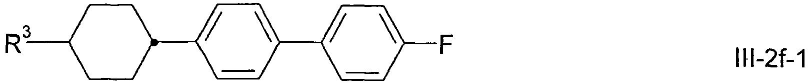 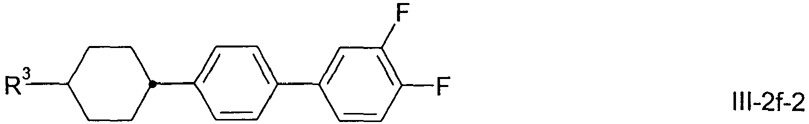 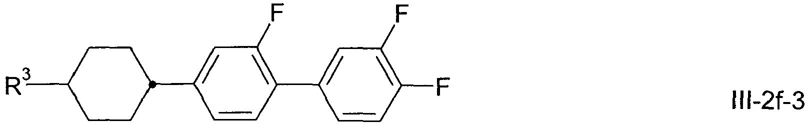 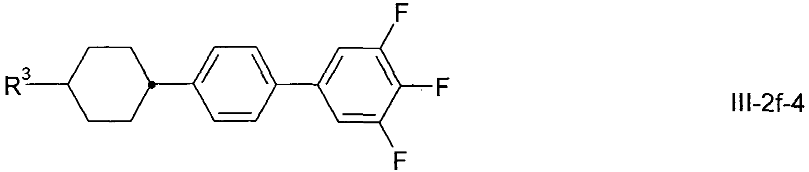 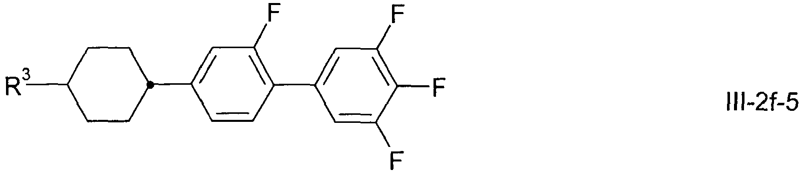 worin R³ die oben angegebene Bedeutung besitzt.

Vorzugsweise enthalten die erfindungsgemäßen Medien eine oder mehrere Verbindungen der Formel III-2g, vorzugsweise ausgewählt aus der Gruppe der Verbindungen der Formeln III-2g-1 bis III-2g-5 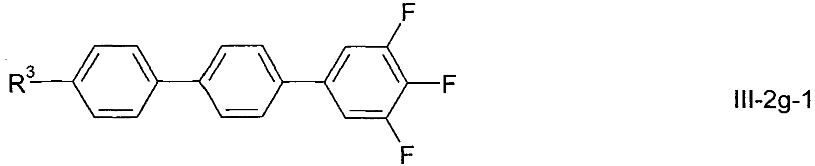 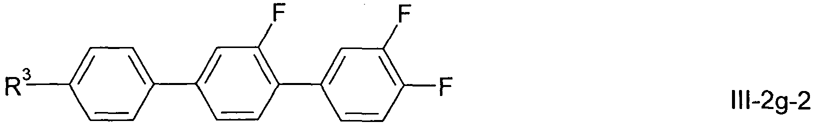 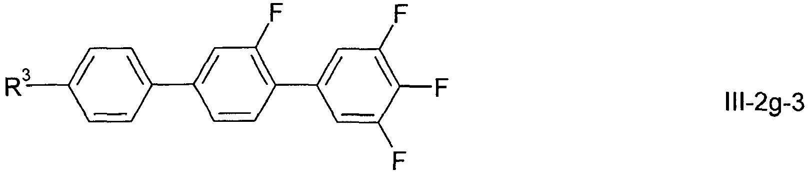 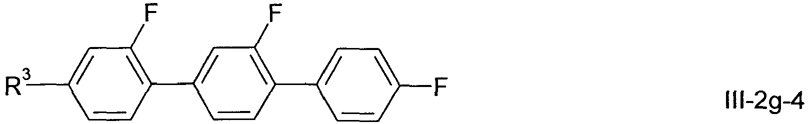 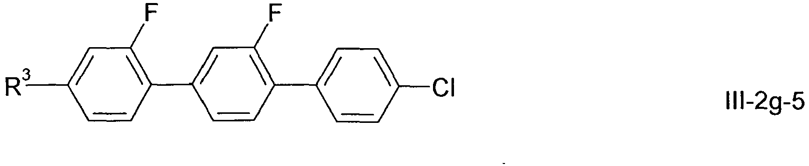 worin R³ die oben angegebene Bedeutung besitzt.

Vorzugsweise enthalten die erfindungsgemäßen Medien eine oder mehrere Verbindungen der Formel III-2h, bevorzugt ausgewählt aus der Gruppe der Verbindungen der Formeln III-2h-1 bis III-2h-3, bevorzugt der Formel III-2h-3 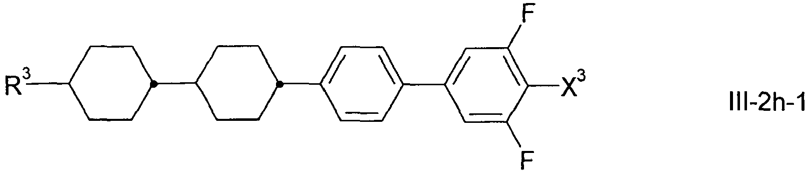 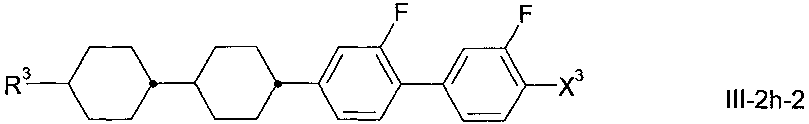 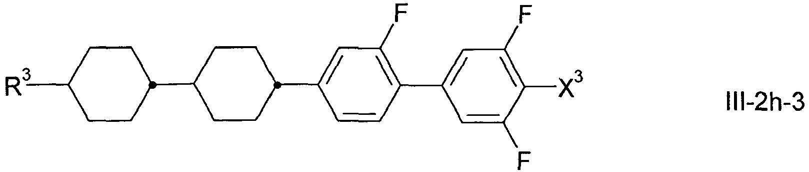 worin die Parameter die oben gegebene Bedeutung haben und bevorzugt X³ F bedeutet.

Vorzugsweise enthalten die erfindungsgemäßen Medien eine oder mehrere Verbindungen der Formel III)-2i, bevorzugt ausgewählt aus der Gruppe der Verbindungen der Formeln III-2i-1 und III-2i-2, besonders bevorzugt der Formel III-2i-2 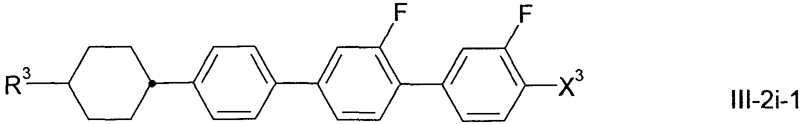 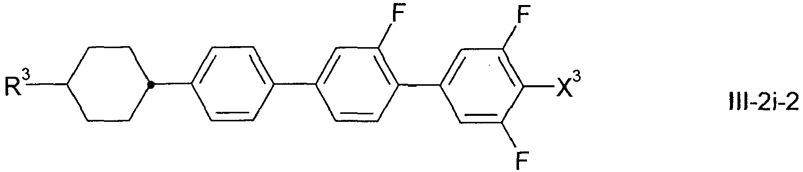 worin die Parameter die oben gegebene Bedeutung haben und bevorzugt X³ F bedeutet.

Vorzugsweise enthalten die erfindungsgemäßen Medien eine oder mehrere Verbindungen der Formel III-2j, bevorzugt ausgewählt aus der Gruppe der Verbindungen der Formeln III-2j-1 und III-2j-2, besonders bevorzugt der Formel III-2j-1 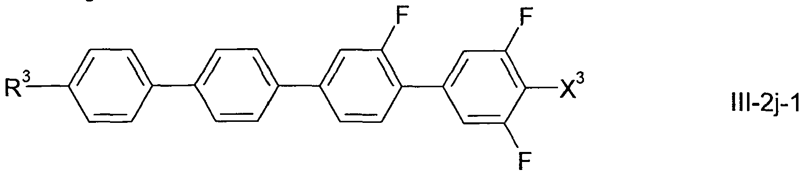 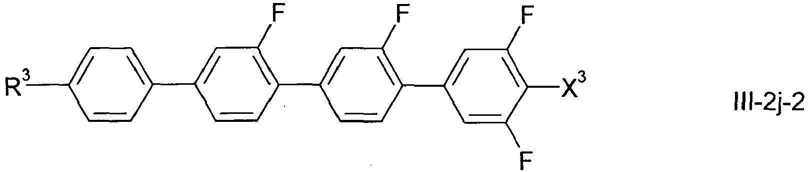 worin die Parameter die oben gegebene Bedeutung haben.

Vorzugsweise enthalten die erfindungsgemäßen Medien eine oder mehrere Verbindungen der Formel III-2k, bevorzugt der Formel III-2k-1 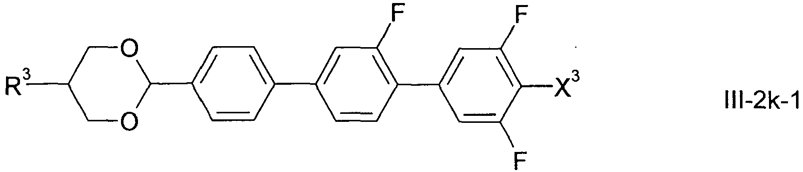 worin die Parameter die oben gegebene Bedeutung haben und X³ bevorzugt F bedeutet.

Alternativ oder zusätzlich zu den Verbindungen der Formeln III-1 und/oder III-2 können die Medien gemäß der vorliegenden Erfindung eine oder mehrere Verbindungen der Formel III-3 enthalten 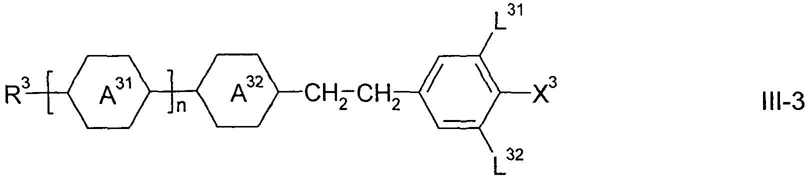 worin die Parameter die jeweiligen oben unter Formel III angegebenen Bedeutungen besitzen.

Diese Verbindungen sind vorzugsweise ausgewählt aus der Gruppe der Formeln III-3a und III-3b 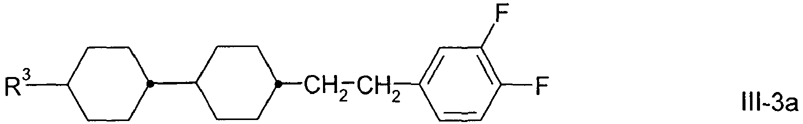 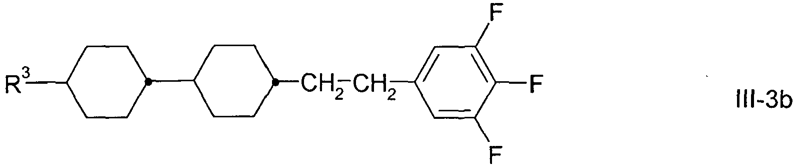 worin R³ die oben angegebene Bedeutung besitzt.

Vorzugsweise enthalten die flüssigkristallinen Medien gemäß der vorliegenden Erfindung eine dielektrisch neutrale Komponente, Komponente C. Diese Komponente weist eine dielektrische Anisotropie im Bereich von -1,5 bis 3 auf. Vorzugsweise enthält sie dielektrisch neutrale Verbindungen mit einer dielektrischen Anisotropie im Bereich von -1,5 bis 3, stärker bevorzugt besteht sie überwiegend, noch stärker bevorzugt besteht sie im Wesentlichen und speziell bevorzugt besteht sie vollständig daraus. Vorzugsweise enthält diese Komponente eine oder mehrere dielektrisch neutrale Verbindungen, stärker bevorzugt besteht sie überwiegend, noch stärker bevorzugt besteht sie im Wesentlichen und ganz bevorzugt besteht sie vollständig aus dielektrisch neutralen Verbindungen mit einer dielektrischen Anisotropie im Bereich von -1,5 bis 3, der Formel IV.

Vorzugsweise enthält die dielektrisch neutrale Komponente, Komponente C, eine oder mehrere Verbindungen ausgewählt aus der Gruppe der Verbindungen der Formeln IV-1 bis IV-8 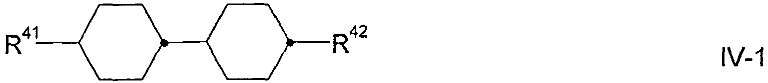 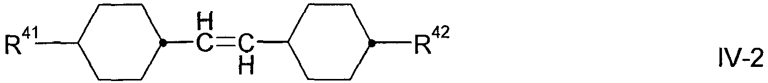 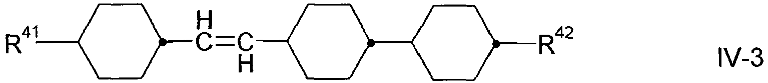 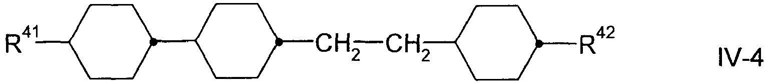 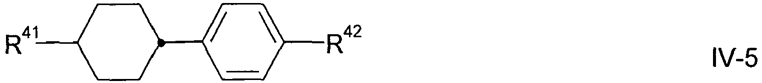 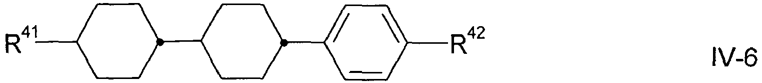 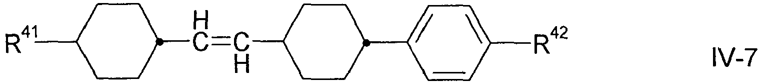 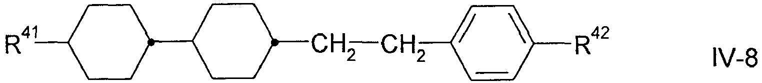 worin R⁴¹ und R⁴² die jeweiligen oben unter Formel IV angegebenen Bedeutungen besitzen und in den Formeln IV-1, IV-6 und IV-7 R⁴¹ vorzugsweise Alkyl oder Alkenyl, vorzugsweise Alkenyl, und R⁴² vorzugsweise Alkyl oder Alkenyl, vorzugsweise Alkyl bedeutet In Formel IV-2 R⁴¹ und R⁴² vorzugsweise Alkyl bedeuten. In Formel IV-5 R⁴¹ vorzugsweise Alkyl oder Alkenyl, stärker bevorzugt Alkyl, und R⁴² vorzugsweise Alkyl, Alkenyl oder Alkoxy, stärker bevorzugt Alkenyl oder Alkoxy und in Formeln IV-4 und IV-8 R⁴¹ vorzugsweise Alkyl und R⁴² vorzugsweise Alkyl oder Alkoxy, stärker bevorzugt Alkoxy, bedeutet.

Vorzugsweise enthält die dielektrisch neutrale Komponente, Komponente C, eine oder mehrere Verbindungen ausgewählt aus der Gruppe der Verbindungen der Formeln IV-1, IV-5, IV-6 und IV-7, vorzugsweise eine oder mehrere Verbindungen der Formel IV-1 und eine oder mehrere Verbindungen ausgewählt aus der Gruppe der Formeln IV-5 und IV-6, stärker bevorzugt jeweils eine oder mehrere Verbindungen der Formeln IV-1, IV-5 und IV-6 und ganz bevorzugt jeweils eine oder mehrere Verbindungen Formeln IV-1, IV-5, IV-6 und IV-7.

In einer bevorzugten Ausführungsform enthalten die erfindungsgemäßen Medien eine oder mehrere Verbindungen der Formel IV-4, stärker bevorzugt ausgewählt aus ihren jeweiligen Unterformeln der Formel CP-V-n und/ oder CP-nV-m und/oder CP-Vn-m, stärker bevorzugt der Formel CP-V-n und/oder CP-V2-n und ganz bevorzugt ausgewählt aus der Gruppe der Formeln CP-V-1 und CP-V2-1. Die Definitionen dieser Abkürzungen (Akronyme) sind unten in Tabelle D angegeben, bzw. aus den Tabellen A bis C zu ersehen.

In einer bevorzugten Ausführungsform enthalten die erfindungsgemäßen Medien eine oder mehrere Verbindungen der Formel IV-5, stärker bevorzugt ausgewählt aus ihren jeweiligen Unterformeln der Formel CCP-V-n und/ oder CCP-nV-m und/oder CCP-Vn-m, stärker bevorzugt der Formel CCP-V-n und/oder CCP-V2-n und ganz bevorzugt ausgewählt aus der Gruppe der Formeln CCP-V-1 und CCP-V2-1. Die Definitionen dieser Abkürzungen (Akronyme) sind unten in Tabelle D angegeben, bzw. aus den Tabellen A bis C zu ersehen.

In einer ebenfalls bevorzugten Ausführungsform enthalten die erfindungsgemäßen Medien eine oder mehrere Verbindungen der Formel IV-1, stärker bevorzugt ausgewählt aus ihren jeweiligen Unterformeln, den Formel CC-n-m, CC-n-V, CC-n-Vm, CC-V-V, CC-V-Vn und/oder CC-nV-Vm, stärker bevorzugt der Formeln CC-n-V und/ oder CC-n-Vm und ganz bevorzugt ausgewählt aus der Gruppe der Formeln CC-3-V, CC-4-V, CC-5-V CC-3-V1, CC-4V1, CC-5-V1, CC-3-V2 und CC-V-V1. Die Definitionen dieser Abkürzungen (Akronyme) sind ebenfalls unten in Tabelle D angegeben, bzw. aus den Tabellen A bis C zu ersehen.

In einer weiteren bevorzugten Ausführungsform der vorliegenden Erfindung, bei der es sich um dieselbe wie die vorhergehende oder um eine andere handeln kann, enthalten die Flüssigkristallmischungen gemäß der vorliegenden Erfindung die Komponente C, die Verbindungen der Formel IV ausgewählt aus der Gruppe der Verbindungen der Formeln IV-1 bis IV-8 wie oben gezeigt und gegebenenfalls der Formeln IV-9 bis IV-15 enthält, vorzugsweise überwiegend daraus besteht und ganz bevorzugt vollständig daraus besteht: 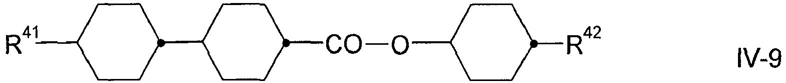 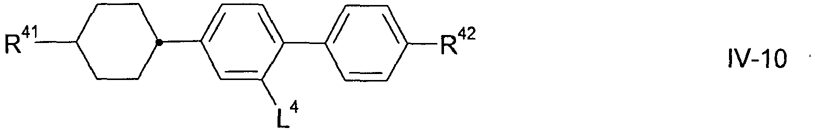 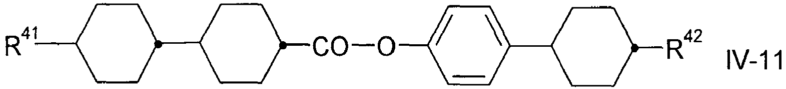 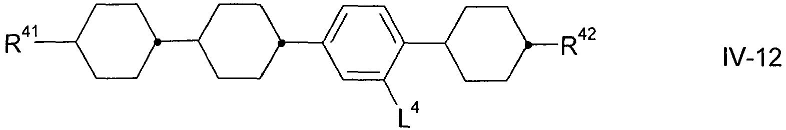 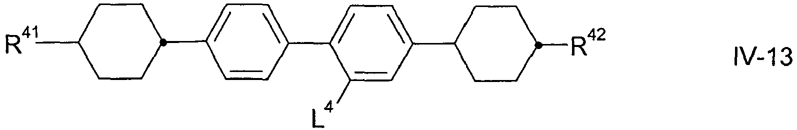 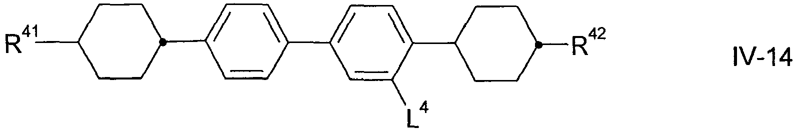 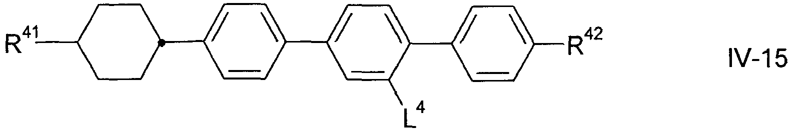 worin
- R⁴¹ und R⁴²: unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten und
- L⁴: H oder F bedeutet.

In einer bevorzugten Ausführungsform enthalten die erfindungsgemäßen Medien eine oder mehrere Verbindungen der Formel IV-10, stärker bevorzugt ausgewählt aus ihren jeweiligen Unterformeln der Formel CPP-3-2, CPP-5-2 und CGP-3-2, stärker bevorzugt der Formel CPP-3-2 und/oder CGP-3-2 und ganz besonders bevorzugt der Formel CPP-3-2. Die Definitionen dieser Abkürzungen (Akronyme) sind unten in Tabelle D angegeben, bzw. aus den Tabellen A bis C zu ersehen.

Vorzugsweise enthalten die flüssigkristallinen Medien gemäß der vorliegenden Erfindung eine oder mehrere Verbindungen der Formel V 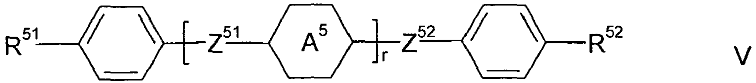 worin
- R⁵¹ und R⁵²: unabhängig voneinander die oben unter Formel II für R² angegebene Bedeutung besitzen, vorzugsweise R⁵¹ Alkyl und R⁵² Alkyl oder Alkenyl bedeutet, 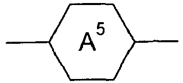 bei zweifachem Auftreten, bei jedem Auftreten jeweils unabhängig voneinander 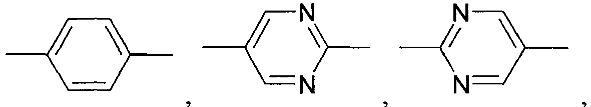 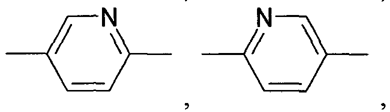 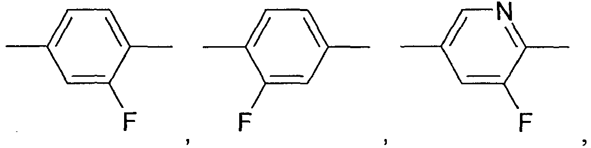 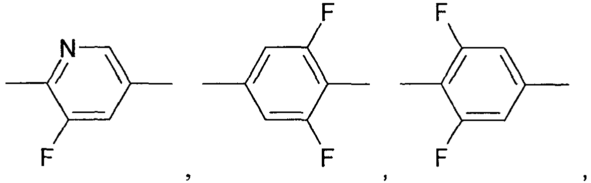 oder 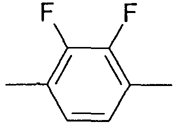 bedeuten, vorzugsweise einer oder mehrere von 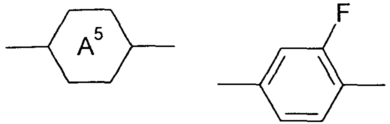 bedeuten,
- Z⁵¹ und Z⁵²: unabhängig voneinander und bei zweifachem Auftreten von Z⁵¹ auch diese unabhängig voneinander -CH₂CH₂-, -COO-, *trans-* -CH=CH-, *trans-* -CF=CF-, -CH₂O-, -CF₂O- oder eine Einfachbindung bedeuten, vorzugsweise eines oder mehrere von ihnen eine Einfachbindung bedeutet/bedeuten, und
- r: 0, 1 oder 2, vorzugsweise 0 oder 1, besonders bevorzugt 1, bedeutet.

Die Verbindungen der Formel V sind bevorzugt dielektrisch neutrale Verbindungen mit einer dielektrischen Anisotropie im Bereich von -1,5 bis 3.

Vorzugsweise enthalten die erfindungsgemäßen Medien eine oder mehrere Verbindungen ausgewählt aus der Gruppe der Verbindungen der Formeln V-1 und V-2 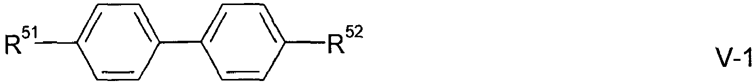 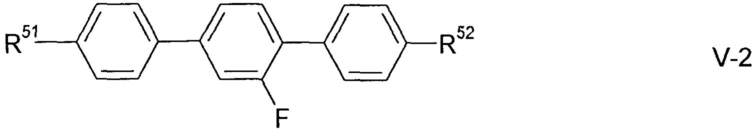 worin R⁵¹ und R⁵² die jeweiligen oben unter Formel V angegebenen Bedeutungen besitzen und R⁵¹ vorzugsweise Alkyl bedeutet und in Formel V-1 R⁵² vorzugsweise Alkenyl, vorzugsweise-(CH₂)₂-CH=CH-CH₃, und in Formel V-2 R⁵² vorzugsweise Alkyl oder Alkenyl, vorzugsweise -CH=CH₂, -(CH₂)₂-CH=CH₂ oder -(CH₂)₂-CH=CH-CH₃, bedeutet.

Vorzugsweise enthalten die erfindungsgemäßen Medien eine oder mehrere Verbindungen ausgewählt aus der Gruppe der Verbindungen der Formeln V-1 und V-2, worin R⁵¹ vorzugsweise *n*-Alkyl bedeutet und in Formel V-1 R⁵² vorzugsweise Alkenyl und in Formel V-2 R⁵² vorzugsweise n-Alkyl bedeutet.

In einer bevorzugten Ausführungsform enthalten die erfindungsgemäßen Medien eine oder mehrere Verbindungen der Formel V-1, stärker bevorzugt ihrer Unterformel PP-n-2Vm, noch stärker bevorzugt der Formel PP-1-2V1. Die Definitionen dieser Abkürzungen (Akronyme) sind unten in Tabelle D angegeben, bzw. aus den Tabellen A bis C zu ersehen.

In einer bevorzugten Ausführungsform enthalten die erfindungsgemäßen Medien eine oder mehrere Verbindungen der Formel V-2, stärker bevorzugt ihrer Unterformeln PGP-n-m, PGP-n-V, PGP-n-2Vm, PGP-n-2V und PGP-n-2Vm, noch stärker bevorzugt ihrer Unterformeln PGP-3-m, PGP-n-2V und PGP-n-V1, ganz bevorzugt ausgewählt aus den Formeln PGP-3-2, PGP-3-3, PGP-3-4, PGP-3-5, PGP-1-2V, PGP-2-2V und PGP-3-2V. Die Definitionen dieser Abkürzungen (Akronyme) sind ebenfalls unten in Tabelle D angegeben, bzw. aus den Tabellen A bis C zu ersehen.

Alternativ oder zusätzlich zu den Verbindungen der Formeln II und/oder III können die Medien gemäß der vorliegenden Erfindung eine oder mehrere dielektrisch positive Verbindungen der Formel VI enthalten 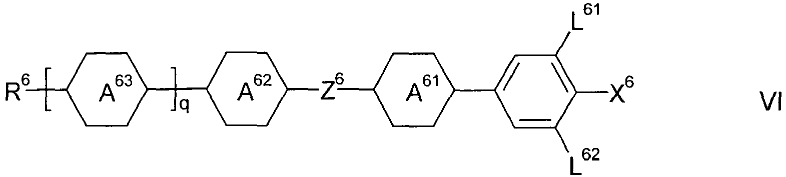 worin
- R⁶: Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugsweise Alkyl oder Alkenyl bedeutet, 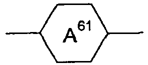 bis 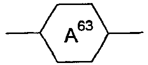 unabhängig voneinander 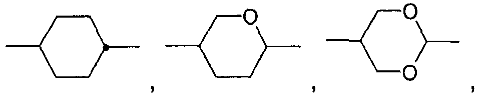 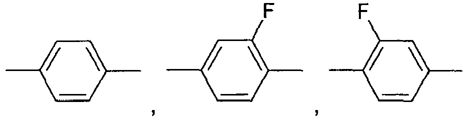 oder 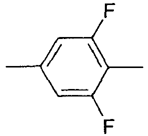 bedeuten,
- L⁶¹ und L⁶²: unabhängig voneinander H oder F bedeuten, vorzugsweise L⁶¹ F bedeutet,
- X⁶: Halogen, halogeniertes Alkyl oder Alkoxy mit 1 bis 3 C-Atomen oder halogeniertes Alkenyl oder Alkenyloxy mit 2 oder 3 C-Atomen, vorzugsweise F, Cl, -OCF₃ oder-CF₃, ganz bevorzugt F, Cl oder -OCF₃ bedeutet,
- Z⁶: -CH₂CH₂-, -CF₂CF₂-, -COO-, *trans-* -CH=CH-, *trans-*-CF=CF-, -CH₂O- oder -CF₂O-, vorzugsweise -CH₂CH₂-, -COO- oder *trans-* -CH=CH- und ganz bevorzugt -COO-oder *trans-* -CH=CH- bedeutet und
- q: 0 oder 1 bedeutet.

Vorzugsweise enthalten die Medien gemäß der vorliegenden Erfindung eine oder mehrere Verbindungen der Formel VI, vorzugsweise ausgewählt aus der Gruppe der Verbindungen der Formeln VI-1 und VI-2 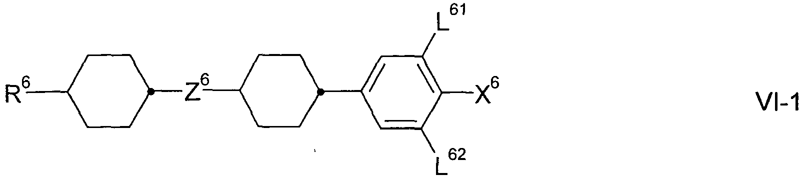 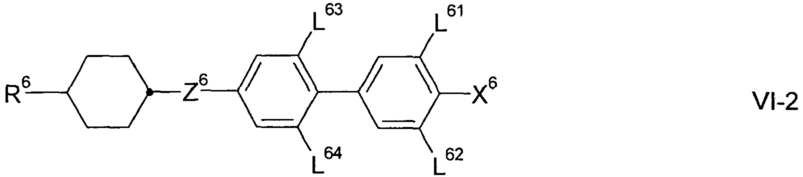 worin die Parameter die jeweiligen oben angegebenen Bedeutungen besitzen und die Parameter L⁶³ und L⁶⁴ unabhängig voneinander und von den anderen Parametern H oder F bedeuten und Z⁶ vorzugsweise -CH₂-CH₂- bedeutet.

Vorzugsweise sind die Verbindungen der Formel VI-1 ausgewählt aus der Gruppe der Verbindungen der Formeln VI-1a und VI-1b 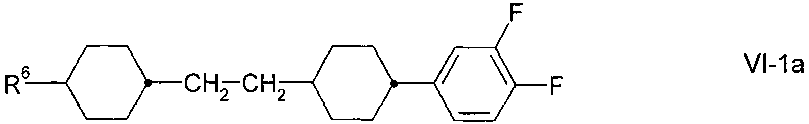 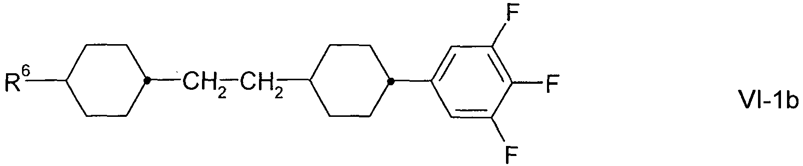 worin R⁶ die oben angegebene Bedeutung besitzt.

Vorzugsweise sind die Verbindungen der Formel VI-2 ausgewählt aus der Gruppe der Verbindungen der Formeln VI-2a bis VI-2d 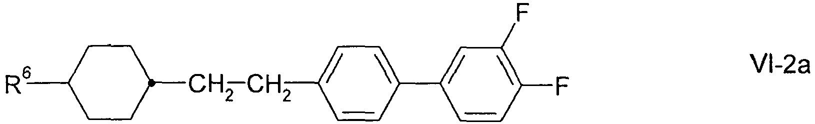 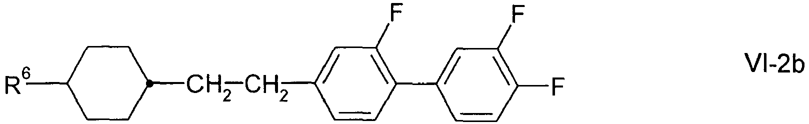 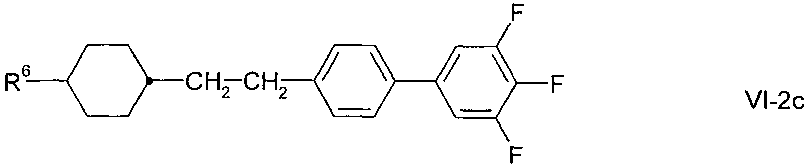 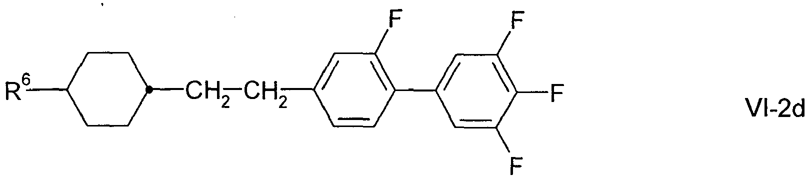 worin R⁶ die oben angegebene Bedeutung besitzt.

Zusätzlich können die Flüssigkristallmedien gemäß der vorliegenden Erfindung eine oder mehrere Verbindungen der Formel VII 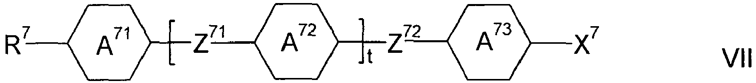 worin
- R⁷: die oben unter Formel II für R² angegebene Bedeutung besitzt,
einer der Ringe von 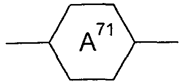 bis 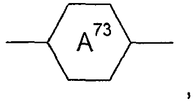 der vorhanden ist, 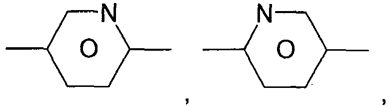 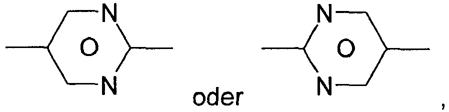 vorzugsweise 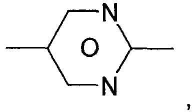 vorzugsweise 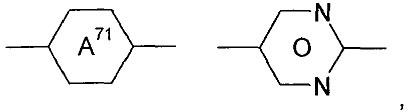 und die anderen dieselbe Bedeutung besitzen oder unabhängig voneinander 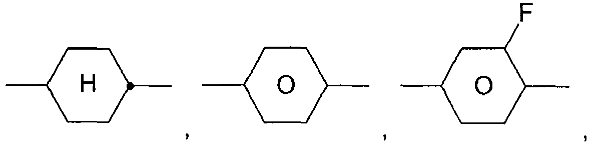 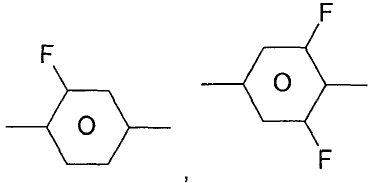 oder 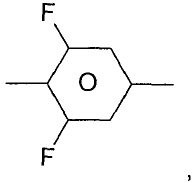 vorzugsweise 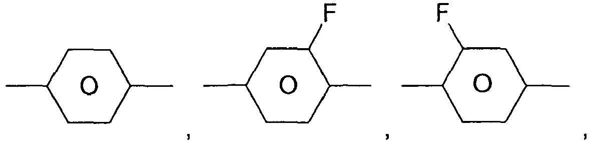 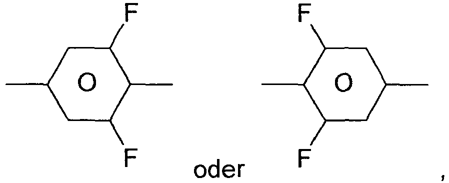
- Z⁷¹ und Z⁷²: unabhängig voneinander -CH₂CH₂-, -COO-, *trans-*-CH=CH-, *trans-* -CF=CF-, -CH₂O-, -CF₂O- oder eine Einfachbindung bedeuten, vorzugsweise eines oder mehrere von ihnen eine Einfachbindung bedeutet/ bedeuten und ganz bevorzugt beide eine Einfachbindung,
- t: 0, 1 oder 2, vorzugsweise 0 oder 1, stärker bevorzugt 1 bedeutet, und
- X⁷: die oben unter Formel II für X² angegebene Bedeutung besitzt oder alternativ unabhängig von R⁷ eine der für R⁷ angegebenen Bedeutungen besitzen kann,
enthalten.

Die Verbindungen der Formel VII sind bevorzugt dielektrisch positive Verbindungen.

Zusätzlich können die Flüssigkristallmedien gemäß der vorliegenden Erfindung eine oder mehrere Verbindungen der Formel VIII 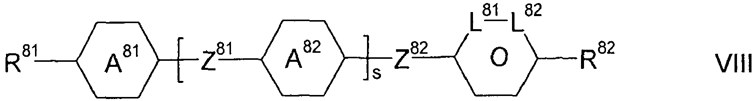 worin
- R⁸¹ und R⁸²: unabhängig voneinander die oben unter Formel II für R² angegebene Bedeutung besitzen und 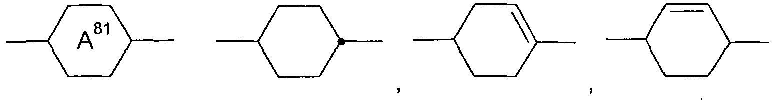 oder 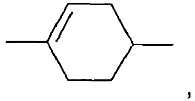 vorzugsweise 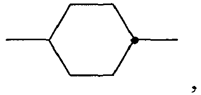 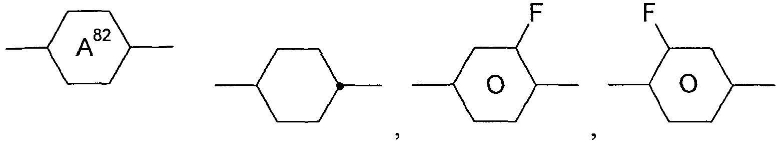 oder 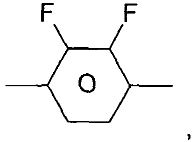
- Z⁸¹ und Z⁸²: unabhängig voneinander -CH₂CH₂-, -COO-, *trans-*-CH=CH-, *trans-* -CF=CF-, -CH₂O-, -CF₂O- oder eine Einfachbindung, vorzugsweise eines oder mehrere von ihnen eine Einfachbindung und ganz bevorzugt beide eine Einfachbindung,
- L⁸¹ und L⁸²: unabhängig voneinander C-F oder N, vorzugsweise einer von L⁸¹ und L⁸² oder beide C-F und ganz bevorzugt beide C-F und
- s: 0 oder 1 bedeutet, enthalten.

Die Verbindungen der Formel VIII sind bevorzugt dielektrisch negative Verbindungen.

Vorzugsweise enthalten die erfindungsgemäßen Medien eine oder mehrere Verbindungen der Formel VIII, vorzugsweise ausgewählt aus der Gruppe der Verbindungen der Formeln VIII-1 bis VIII-3 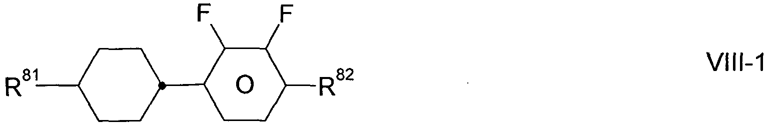 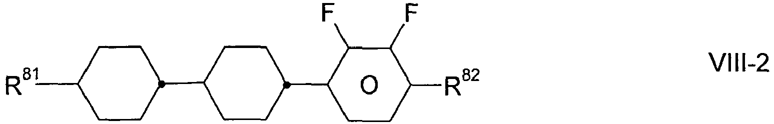 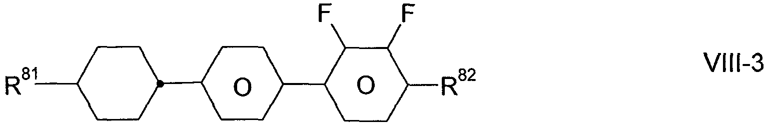 worin
- R⁸¹ und R⁸²: die jeweiligen oben unter Formel VIII angegebenen Bedeutungen besitzen.

In den Formeln VIII-1 bis VIII-3 bedeutet R⁸¹ vorzugsweise n-Alkyl oder 1-E-Alkenyl und R⁸² vorzugsweise n-Alkyl oder Alkoxy.

Vorzugsweise enthalten die flüssigkristallinen Medien gemäß der vorliegenden Erfindung eine oder mehrere Verbindungen ausgewählt aus der Gruppe der Verbindungen der Formeln I bis VIII, vorzugsweise der Formeln I bis VII und stärker bevorzugt der Formeln I und II und/oder III und/oder IV und/oder VI. Besonders bevorzugt bestehen sie überwiegend, noch stärker bevorzugt bestehen sie im Wesentlichen und ganz bevorzugt bestehen sie vollständig daraus.

In dieser Anmeldung bedeutet "enthalten" im Zusammenhang mit Zusammensetzungen, dass die betreffende Entität, d.h. das Medium oder die Komponente, die angegebene Komponente oder Komponenten oder Verbindung oder Verbindungen enthält, vorzugsweise in einer Gesamtkonzentration von 10 % oder mehr und ganz bevorzugt von 20 % oder mehr.

"Überwiegend bestehen aus" bedeutet in diesem Zusammenhang, dass die betreffende Entität 55 % oder mehr, vorzugsweise 60 % oder mehr und ganz bevorzugt 70 % oder mehr der angegebenen Komponente oder Komponenten oder Verbindung oder Verbindungen enthält.

"Im Wesentlichen bestehen aus" bedeutet in diesem Zusammenhang, dass die betreffende Entität 80 % oder mehr, vorzugsweise 90 % oder mehr und ganz bevorzugt 95 % oder mehr der angegebenen Komponente oder Komponenten oder Verbindung oder Verbindungen enthält.

"Nahezu vollständig bestehen aus", bzw. "vollständig bestehen aus" bedeutet in diesem Zusammenhang, dass die betreffende Entität 98 % oder mehr, vorzugsweise 99 % oder mehr und ganz bevorzugt 100 % der angegebenen Komponente oder Komponenten oder Verbindung oder Verbindungen enthält.

Auch andere mesogene Verbindungen, die oben nicht explizit genannt sind, können gegebenenfalls und in vorteilhafter Weise in den Medien gemäß der vorliegenden Erfindung verwendet werden. Solche Verbindungen sind dem Fachmann bekannt.

Die Flüssigkristallmedien gemäß der vorliegenden Erfindung weisen bevorzugt einen Klärpunkt von 70°C oder mehr, stärker bevorzugt von 75°C oder mehr, besonders bevorzugt von 80°C oder mehr und ganz besonders bevorzugt von 85°C oder mehr, auf.

Vorzugsweise erstreckt sich die nematische Phase der erfindungsgemäßen Medien mindestens von 0°C oder weniger bis 70°C oder mehr, stärker bevorzugt mindestens von -20°C oder weniger bis 75°C oder mehr, ganz bevorzugt mindestens von -30°C oder weniger bis 75°C oder mehr und insbesondere mindestens von -40°C oder weniger bis 80°C oder mehr.

Das Δε des Flüssigkristallmediums gemäß der Erfindung bei 1 kHz und 20 °C beträgt vorzugsweise 2 oder mehr, stärker bevorzugt 3 oder mehr, noch stärker bevorzugt 4 oder mehr und ganz bevorzugt 6 oder mehr. Bevorzugt beträgt Δε 30 oder weniger, insbesondere bevorzugt beträgt Δε 20 oder weniger.

Das Δn der Flüssigkristallmedien gemäß der vorliegenden Erfindung liegt bei 589 nm (Na^{D}) und 20 °C vorzugsweise im Bereich von 0,070 oder mehr bis 0,150 oder weniger, stärker bevorzugt im Bereich von 0,080 oder mehr bis 0,140 oder weniger, noch stärker bevorzugt im Bereich von 0,090 oder mehr bis 0,135 oder weniger und ganz besonders bevorzugt im Bereich von 0,100 oder mehr bis 0,130 oder weniger.

In einer ersten bevorzugten Ausführungsform der vorliegenden Anmeldung beträgt das Δn der Flüssigkristallmedien gemäß der vorliegenden Erfindung vorzugsweise 0,080 oder mehr bis 0,120 oder weniger, stärker bevorzugt im Bereich von 0,090 oder mehr bis 0,110 oder weniger und ganz besonderes bevorzugt im Bereich von 0,095 oder mehr bis 0,105 oder weniger, während Δε vorzugsweise im Bereich von 6 oder mehr bis 11 oder weniger, vorzugsweise im Bereich von 7 oder mehr bis 10 oder weniger und besonders bevorzugt im Bereich von 8 oder mehr bis 9 oder weniger liegt.

In dieser Ausführungsform erstreckt sich die nematische Phase der erfindungsgemäßen Medien vorzugsweise mindestens von -20°C oder weniger bis 70°C oder mehr, stärker bevorzugt mindestens von -20°C oder weniger bis 70°C oder mehr, ganz bevorzugt mindestens von -30°C oder weniger bis 70°C oder mehr und insbesondere mindestens von -40°C oder weniger bis 70°C oder mehr.

In einer zweiten bevorzugten Ausführungsform der vorliegenden Anmeldung beträgt das Δn der Flüssigkristallmedien gemäß der vorliegenden Erfindung vorzugsweise 0,100 oder mehr bis 0,140 oder weniger, stärker bevorzugt im Bereich von 0,110 oder mehr bis 0,130 oder weniger und ganz besonderes bevorzugt im Bereich von 0,115 oder mehr bis 0,125 oder weniger, während Δε vorzugsweise im Bereich von 7 oder mehr bis 13 oder weniger, vorzugsweise im Bereich von 9 oder mehr bis 20 oder weniger und besonders bevorzugt im Bereich von 10 oder mehr bis 17 oder weniger liegt.

In dieser Ausführungsform erstreckt sich die nematische Phase der erfindungsgemäßen Medien vorzugsweise mindestens von -20°C oder weniger bis 80°C oder mehr, stärker bevorzugt mindestens von -20°C oder weniger bis 85°C oder mehr, ganz bevorzugt mindestens von -30°C oder weniger bis 80°C oder mehr und insbesondere mindestens von -40°C oder weniger bis 85°C oder mehr.

Gemäß der vorliegenden Erfindung werden die Verbindungen der Formeln I und/oder TINUVIN 770® zusammen vorzugsweise in den Medien in einer Gesamtkonzentration von 1 % bis 50 %, stärker bevorzugt von 1 % bis 30 %, stärker bevorzugt von 2 % bis 30 %, stärker bevorzugt von 3 % bis 30 % und ganz bevorzugt von 5 % bis 25 % der Gesamtmischung verwendet.
Die Verbindungen ausgewählt aus der Gruppe der Formeln II und III werden vorzugsweise in einer Gesamtkonzentration von 2 % bis 60 %, stärker bevorzugt von 3 % bis 35 %, noch stärker bevorzugt von 4 % bis 20 % und ganz bevorzugt von 5 % bis 15 % der Gesamtmischung verwendet.

Die Verbindungen der Formel IV werden vorzugsweise in einer Gesamtkonzentration von 5 % bis 70 %, stärker bevorzugt von 20 % bis 65 %, noch stärker bevorzugt von 30 % bis 60 % und ganz bevorzugt von 40 % bis 55 % der Gesamtmischung verwendet.

Die Verbindungen der Formel V werden vorzugsweise in einer Gesamtkonzentration von 0 % bis 30 %, stärker bevorzugt von 0 % bis 15 % und ganz bevorzugt von 1 % bis 10 % der Gesamtmischung verwendet.

Die Verbindungen der Formel VI werden vorzugsweise in einer Gesamtkonzentration von 0 % bis 50 %, stärker bevorzugt von 1 % bis 40 %, noch stärker bevorzugt von 5 % bis 30 % und ganz bevorzugt von 10 % bis 20 % der Gesamtmischung verwendet.

Gegebenenfalls können die erfindungsgemäßen Medien weitere Flüssigkristallverbindungen enthalten, um die physikalischen Eigenschaften einzustellen. Solche Verbindungen sind dem Fachmann bekannt. Ihre Konzentration in den Medien gemäß der vorliegenden Erfindung beträgt vorzugsweise 0 % bis 30 %, stärker bevorzugt 0,1 % bis 20 % und ganz bevorzugt 1 % bis 15 %.

Die Konzentration der Verbindung der Formel CC-3-V in den erfindungsgemäßen die Medien kann in einer bevorzugten Ausführungsform 50 % bis 65 % betragen, besonders bevorzugt 55 % bis 60 %.

Die Flüssigkristallmedien enthalten vorzugsweise insgesamt 50 % bis 100 %, stärker bevorzugt 70 % bis 100 % und ganz bevorzugt 80 % bis 100 % und insbesondere 90 % bis 100 % der Verbindungen der Formeln I bis VII, vorzugsweise ausgewählt aus der Gruppe der Verbindungen der Formeln der Formeln IA, IB und II bis VI, besonders bevorzugt der Formeln I bis V, insbesondere der Formeln IA, IB, II, III, IV, V, und VII und ganz besonders bevorzugt der Formeln IA, IB, II, III, IV und V. Vorzugsweise bestehen sie überwiegend daraus und ganz bevorzugt bestehen sie nahezu vollständig daraus. In einer bevorzugten Ausführungsform enthalten die Flüssigkristallmedien jeweils eine oder mehrere Verbindungen von jeder dieser Formeln.

In der vorliegenden Anmeldung beschreibt der Ausdruck dielektrisch positiv Verbindungen oder Komponenten mit Δε > 3,0, dielektrisch neutral mit -1,5 ≤ Δε ≤ 3,0 und dielektrisch negativ mit Δε < -1,5. Δε wird bei einer Frequenz von 1 kHz und 20°C bestimmt. Die dielektrische Anisotropie der jeweiligen Verbindung wird aus den Ergebnissen einer Lösung von 10 % der jeweiligen einzelnen Verbindung in einer nematischen Host-Mischung bestimmt. Wenn die Löslichkeit der jeweiligen Verbindung in der Host-Mischung weniger als 10 % beträgt, wird die Konzentration auf 5 % reduziert. Die Kapazitäten der Testmischungen werden sowohl in einer Zelle mit homeotroper als auch mit homogener Orientierung bestimmt. Die Schichtdicke beträgt bei beiden Zelltypen ca. 20 µm. Die angelegte Spannung ist eine Rechteckwelle mit einer Frequenz von 1 kHz und einem Effektivwert von typischerweise 0,5 V bis 1,0 V, wird jedoch stets so ausgewählt, dass sie unterhalb der kapazitiven Schwelle für die jeweilige Testmischung liegt.

Δε ist als (ε_{∥} - ε_{⊥}) definiert, während ε_{Drchschn}. (ε_{∥} + 2 ε_{⊥}) / 3 ist.

Als Host-Mischung wird für dielektrisch positive Verbindungen die Mischung ZLI-4792 und für dielektrisch neutrale sowie für dielektrisch negative Verbindungen die Mischung ZLI-3086 verwendet, beide von Merck KGaA, Deutschland. Die absoluten Werte der dielektrischen Konstanten der Verbindungen werden aus der Änderung der jeweiligen Werte der Host-Mischung bei Zugabe der interessierenden Verbindungen bestimmt. Die Werte werden auf eine Konzentration der interessierenden Verbindungen von 100 % extrapoliert.

Komponenten, die bei der Messtemperatur von 20 °C eine nematische Phase aufweisen, werden als solche gemessen, alle anderen werden wie Verbindungen behandelt.

Der Ausdruck Schwellenspannung bezeichnet in der vorliegenden Anmeldung die optische Schwelle und ist für 10 % relativen Kontrast (V₁₀) angegeben, der Ausdruck Sättigungsspannung bezeichnet die optische Sättigung und ist für 90 % relativen Kontrast (V₉₀) angegeben, in beiden Fällen, soweit nicht ausdrücklich etwas anderes angegeben ist. Die kapazitive Schwellenspannung (V₀), auch Freedericks-Schwelle V_{Fr} genannt, wird nur verwendet, wenn dies ausdrücklich genannt ist.

Die in dieser Anmeldung angegebenen Parameterbereiche schließen sämtlich die Grenzwerte ein, wenn nicht ausdrücklich etwas anderes angegeben ist.

Die unterschiedlichen für verschiedene Bereiche von Eigenschaften angegebenen oberen und unteren Grenzwerte ergeben in Kombination miteinander zusätzliche bevorzugte Bereiche.

In der gesamten Anmeldung gelten, wenn nicht ausdrücklich anders angegeben, die folgenden Bedingungen und Definitionen. Alle Konzentrationen sind in Massenprozent angegeben und beziehen sich jeweils auf die Gesamtmischung, alle Temperaturen und alle Temperaturunterschiede sind in Grad Celsius bzw. Differenzgrad angegeben. Alle physikalischen Eigenschaften werden nach "Merck Liquid Crystals, Physical Properties of Liquid Crystals", Stand Nov. 1997, Merck KGaA, Deutschland, bestimmt und sind für eine Temperatur von 20 °C aufgeführt, wenn nicht ausdrücklich anders angegeben. Die optische Anisotropie (Δn) wird bei einer Wellenlänge von 589,3 nm bestimmt. Die dielektrische Anisotropie (Δε) wird bei einer Frequenz von 1 kHz bestimmt. Die Schwellenspannungen sowie alle anderen elektrooptischen Eigenschaften werden mit bei Merck KGaA, Deutschland, hergestellten Testzellen bestimmt. Die Testzellen für die Bestimmung von Δε besitzen eine Schichtdicke von circa 20 µm. Bei der Elektrode handelt es sich um eine kreisförmige ITO-Elektrode mit einer Fläche von 1,13 cm² und einem Schutzring. Die Ausrichtungsschichten sind SE-1211 von Nissan Chemicals, Japan, für homöotrope Ausrichtung (ε_{∥}) und Polyimid AL-1054 von Japan Synthetic Rubber, Japan, für homogene Ausrichtung (ε_{⊥}). Die Bestimmung der Kapazitäten erfolgt mit einem Frequenzgang-Analysegerät Solatron 1260 unter Verwendung einer Sinuswelle mit einer Spannung von 0,3 Vᵣₘₛ. Als Licht wird bei den elektrooptischen Messungen weißes Licht verwendet. Dabei wird ein Aufbau mit einem im Handel erhältlichen Gerät DMS der Fa. Autronic-Melchers, Germany verwendet. Die charakteristischen Spannungen wurden unter senkrechter Beobachtung bestimmt. Die Schwellenspannung (V₁₀), "Mittgrau-Spannung" (V₅₀) und Sättigungsspannung (V₉₀) wurden für 10 %, 50 % bzw. 90 % relativen Kontrast bestimmt.

Die Flüssigkristallmedien gemäß der vorliegenden Erfindung können weitere Zusatzstoffe und chirale Dotierstoffe in den üblichen Konzentrationen beinhalten. Die Gesamtkonzentration dieser weiteren Bestandteile liegt im Bereich von 0 % bis 10 %, vorzugsweise 0,1 % bis 6 %, bezogen auf die Gesamtmischung. Die Konzentrationen der einzelnen verwendeten Verbindungen liegen vorzugsweise jeweils im Bereich von 0,1 % bis 3 %. Die Konzentration dieser und ähnlicher Zusatzstoffe wird bei der Angabe der Werte und Konzentrationsbereiche der Flüssigkristallkomponenten und -verbindungen der Flüssigkristallmedien in dieser Anmeldung nicht berücksichtigt.

Die erfindungsgemäßen Flüssigkristallmedien bestehen aus mehreren Verbindungen, vorzugsweise aus 3 bis 30, stärker bevorzugt aus 4 bis 20 und ganz bevorzugt aus 4 bis 16 Verbindungen. Diese Verbindungen werden auf herkömmliche Weise gemischt. In der Regel wird die gewünschte Menge der in der geringeren Menge verwendeten Verbindung in der in der größeren Menge verwendeten Verbindung gelöst. Liegt die Temperatur über dem Klärpunkt der in der höheren Konzentration verwendeten Verbindung, ist die Vervollständigung des Lösungsvorgangs besonders leicht zu beobachten. Es ist jedoch auch möglich, die Medien auf anderen üblichen Wegen, beispielsweise unter Verwendung von so genannten Vormischungen, bei denen es sich z.B. um homologe oder eutektische Mischungen von Verbindungen handeln kann, oder unter Verwendung von so genannten "Multi-Bottle"-Systemen, deren Bestandteile selbst gebrauchsfertige Mischungen sind, herzustellen.

Durch Zugabe geeigneter Zusatzstoffe können die Flüssigkristallmedien gemäß der vorliegenden Erfindung so modifiziert werden, dass sie in allen bekannten Arten von Flüssigkristallanzeigen verwendbar sind, entweder durch Verwendung der Flüssigkristallmedien als solcher, wie TN-, TN-AMD, ECB-AMD, VAN-AMD, IPS-AMD, FFS-AMD LCDs oder in Verbundsystemen, wie PDLC, NCAP, PN LCDs und speziell in ASM-PA LCDs.

Alle Temperaturen, wie z.B. der Schmelzpunkt T(K,N) bzw. T(K,S), der Übergang von der smektischen (S) zur nematischen (N) Phase T(S,N) und der Klärpunkt T (N,I) der Flüssigkristalle sind in Grad Celsius angegeben. Alle Temperaturdifferenzen sind in Differenzgraden angegeben.

In der vorliegenden Erfindung und insbesondere in den folgenden Beispielen sind die Strukturen der mesogenen Verbindungen durch Abkürzungen angegeben, die auch als Akronyme bezeichnet werden. In diesen Akronymen sind die chemischen Formeln unter Verwendung der folgenden Tabellen A bis C wie folgt abgekürzt. Alle Gruppen CₙH₂ₙ₊₁, CₘH₂ₘ₊₁ und CₗH₂ₗ₊₁ bzw. CₙH₂ₙ₋₁, CₘH₂ₘ₋₁ und CₗH₂ₗ₋₁ bedeuten geradkettiges Alkyl bzw. Alkenyl, vorzugsweise 1-E-Alkenyl, jeweils mit n, m bzw. I C-Atomen. In der Tabelle A werden die für die Ringelemente der Kernstrukturen der Verbindungen verwendeten Codes aufgeführt, während in der Tabelle B die Verknüpfungsgruppen gezeigt sind. Tabelle C gibt die Bedeutungen der Codes für die Endgruppen der linken bzw. rechten Seite. Die Akronyme werden aus den Codes für die Ringelemente mit optionalen Verknüpfungsgruppen, gefolgt von einem ersten Bindestrich und den Codes für die linke Endgruppe, sowie einem zweiten Bindestrich und den Codes für die rechts Endgruppe, zusammengesetzt. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 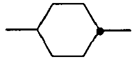 | | |
| **P** | 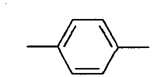 | | |
| **D** | 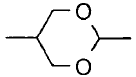 | **DI** | 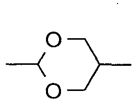 |
| **A** | 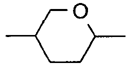 | **AI** | 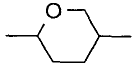 |
| **G** | 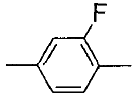 | **GI** | 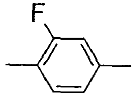 |
| **U** | 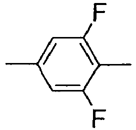 | **UI** | 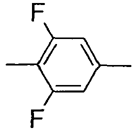 |
| **Y** | 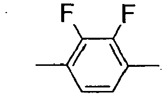 | | |
| **M** | 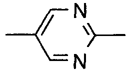 | **MI** | 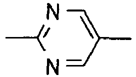 |
| **N** | 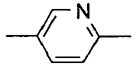 | **NI** | 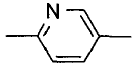 |
| **Np** | 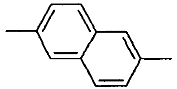 | **dH** | 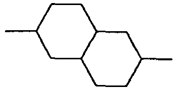 |
| **N3f** | 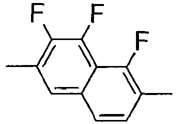 | **N3fl** | 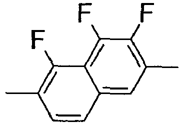 |
| **tH** | 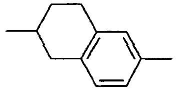 | **tHI** | 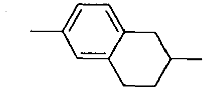 |
| **tH2f** | 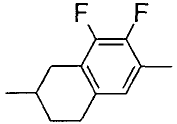 | **tH2fl** | 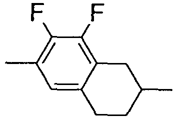 |
| **K** | 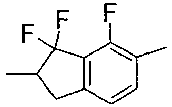 | **KI** | 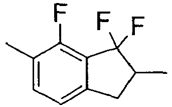 |
| **L** | 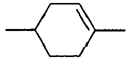 | **LI** | 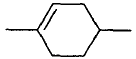 |
| **F** | 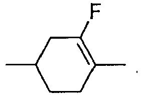 | **FI** | 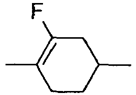 |
| **Nf** | 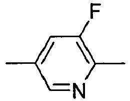 | **Nfl** | 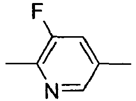 |

**Tabelle B: Verknüpfungsgruppen**

| | | | |
|---|---|---|---|
| **E** | -CH₂CH₂- | **Z** | -CO-O- |
| **V** | -CH=CH- | **ZI** | -O-CO- |
| **X** | -CF=CH- | **O** | -CH₂-O- |
| **XI** | -CH=CF- | **OI** | -O-CH₂- |
| **B** | -CF=CF- | **Q** | -CF₂-O- |
| **T** | -C≡C- | **QI** | -O-CF₂- |
| **W** | -CF₂CF₂- | **T** | -C≡C- |

**Tabelle C: Endgruppen**

| **Linke Seite** | | **Rechte Seite, Verwendung allein** | |
|---|---|---|---|
| **-n-** | CₙH₂ₙ₊₁- | **-n** | --CₙH₂ₙ₊₁ |
| **-nO-** | CₙH₂ₙ₊₁-O- | **-nO** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ₊₁- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O - | **-OM** | -OCFH₂ |
| **-DO-** | CF₂HO - | **-OD** | -OCF₂H |
| **-TO-** | CF₃O - | **-OT** | -OCF₃ |
| **-OXF-** | CF₂=CH-O- | **-OXF** | -O-CH=CF₂ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |

| **Verwendung zusammen miteinender und mit anderen** | | | |
|---|---|---|---|
| **-...A...-** | -C≡C- | **-...A...** | -C≡C- |
| **-...V...-** | CH=CH- | **-...V...** | -CH=CH- |
| **-...Z...-** | -CO-O- | **-...Z...** | -CO-O- |
| **...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

worin n und m jeweils ganze Zahlen bedeuten und die drei Punkte "..." Platzhalter für andere Abkürzungen aus dieser Tabelle sind.

In der folgenden Tabelle werden Beispielstrukturen zusammen mit ihren jeweiligen Abkürzungen angegeben. Diese werden gezeigt, um die Bedeutung der Regeln für die Abkürzungen zu demonstrieren. Weiterhin stellen sie Verbindungen dar, die vorzugsweise verwendet werden.

**Tabelle D: Beispielstrukturen**

| |
|---|
| 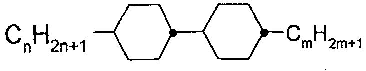 |
| **CC-n-m** |
| 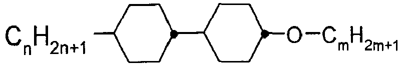 |
| **CC-n-Om** |
| 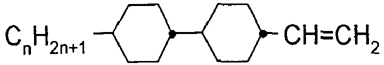 |
| **CC-n-V** |
| 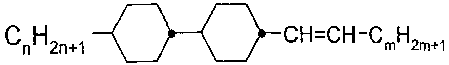 |
| **CC-n-Vm** |
| 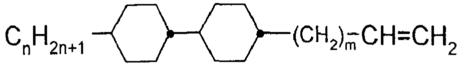 |
| **CC-n-mV** |
| 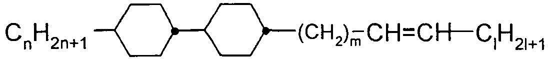 |
| **CC-n-mVI** |
| 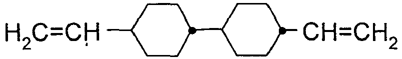 |
| **CC-V-V** |
| 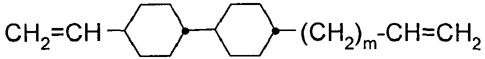 |
| **CC-V-mV** |
| 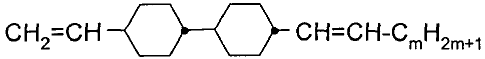 |
| **CC-V-Vm** |
| 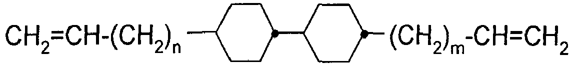 |
| **CC-Vn-mV** |
| 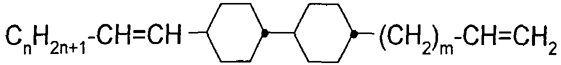 |
| **CC-nV-mV** |
| 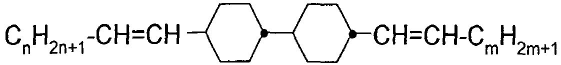 |
| **CC-nV-Vm** |
| 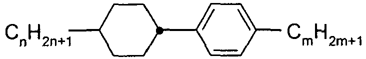 |
| **CP-n-m** |
| 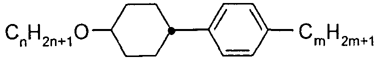 |
| **CP-nO-m** |
| 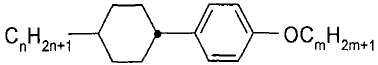 |
| **CP-n-Om** |
| 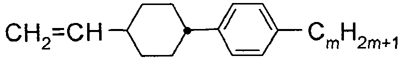 |
| **CP-V-m** |
| 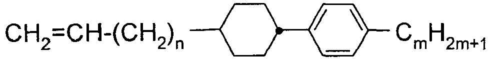 |
| **CP-Vn-m** |
| 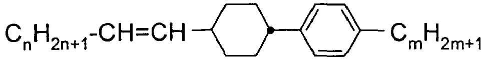 |
| **CP-nV-m** |
| 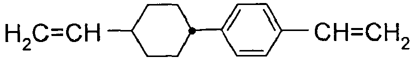 |
| **CP-V-V** |
| 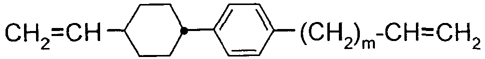 |
| **CP-V-mV** |
| 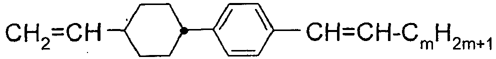 |
| **CP-V-Vm** |
| 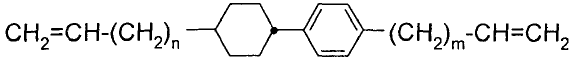 |
| **CP-Vn-mV** |
| 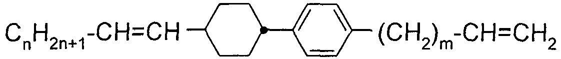 |
| **CP-nV-mV** |
| 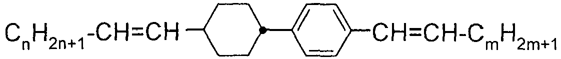 |
| **CP-nV-Vm** |
| 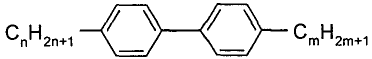 |
| **PP-n-m** |
| 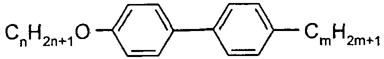 |
| **PP-nO-m** |
| 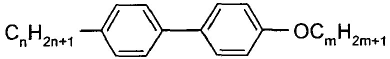 |
| **PP-n-Om** |
| 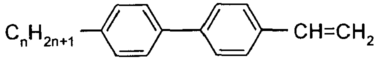 |
| **PP-n-V** |
| 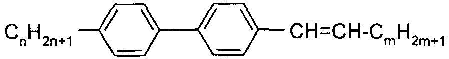 |
| **PP-n-Vm** |
| 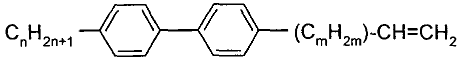 |
| **PP-n-mV** |
| 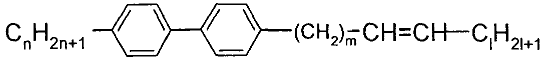 |
| **PP-n-mVI** |
| 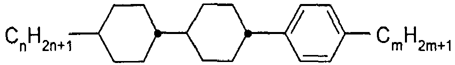 |
| **CCP-n-m** |
| 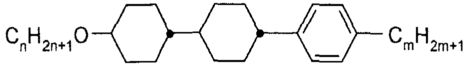 |
| **CCP-nO-m** |
| 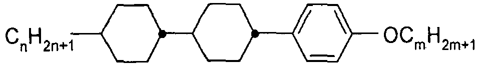 |
| **CCP-n-Om** |
| 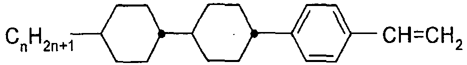 |
| **CCP-n-V** |
| 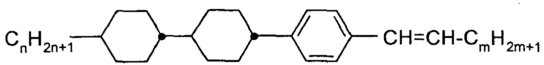 |
| **CCP-n-Vm** |
| 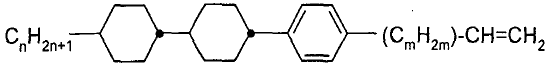 |
| **CCP-n-mV** |
| 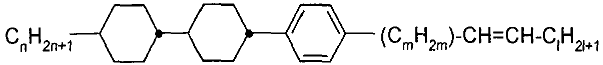 |
| **CCP-n-mVI** |
| 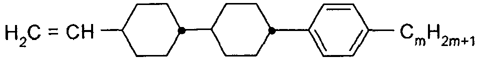 |
| **CCP-V-m** |
| 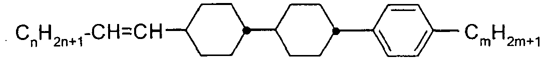 |
| **CCP-nV-m** |
| 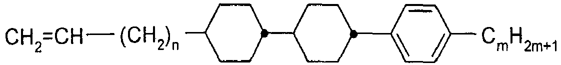 |
| **CCP-Vn-m** |
| 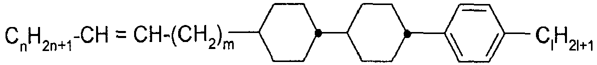 **CCP-nVm-I** |
| 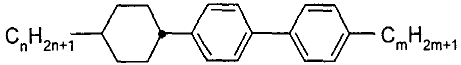 |
| **CPP-n-m** |
| 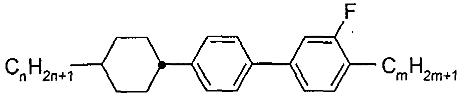 |
| **CPG-n-m** |
| 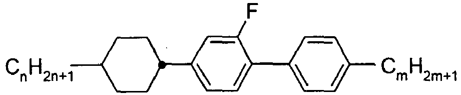 |
| **CGP-n-m** |
| 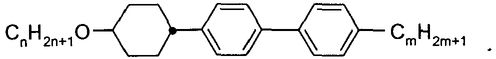 |
| **CPP-nO-m** |
| 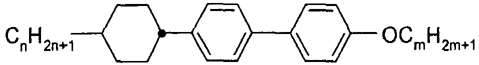 |
| **CPP-n-Om** |
| 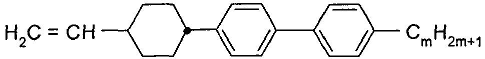 |
| **CPP-V-m** |
| 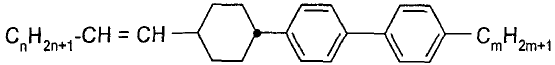 |
| **CPP-nV-m** |
| 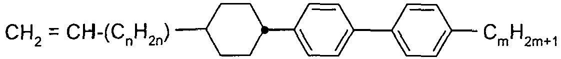 |
| **CPP-Vn-m** |
| 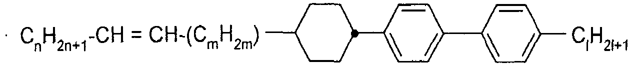 |
| **CPP-nVm-I** |
| 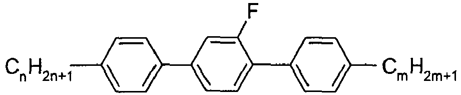 |
| **PGP-n-m** |
| 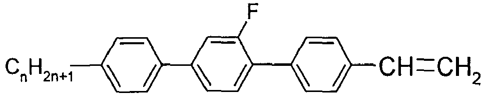 |
| **PGP-n-V** |
| 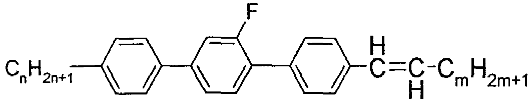 |
| **PGP-n-Vm** |
| 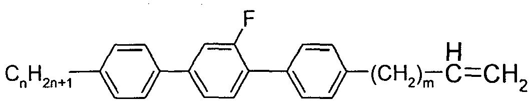 |
| **PGP-n-mV** |
| 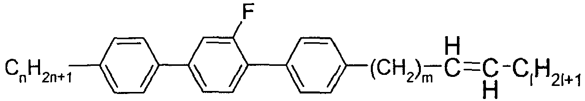 |
| **PGP-n-mVI** |
| 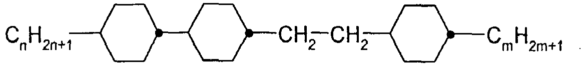 |
| **CCEC-n-m** |
| 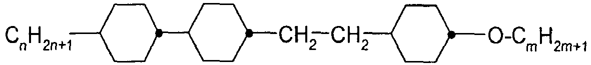 |
| **CCEC-n-Om** |
| 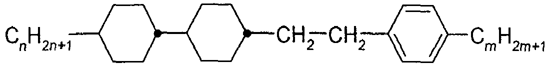 |
| **CCEP-n-m** |
| 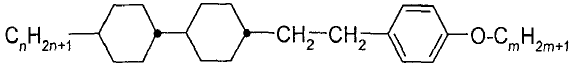 |
| **CCEP-n-Om** |
| 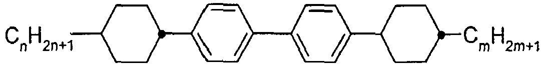 |
| **CPPC-n-m** |
| 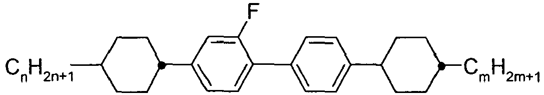 |
| **CGPC-n-m** |
| 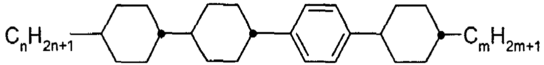 |
| **CCPC-n-m** |
| 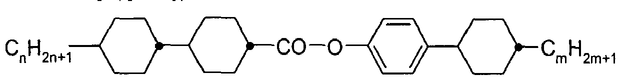 |
| **CCZPC-n-m** |
| 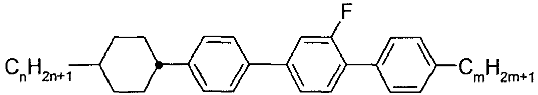 |
| **CPGP-n-m** |
| 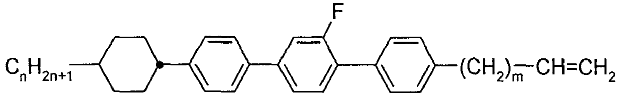 |
| **CPGP-n-mV** |
| 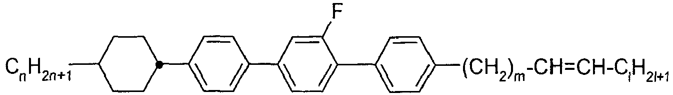 |
| **CPGP-n-mVI** |
| 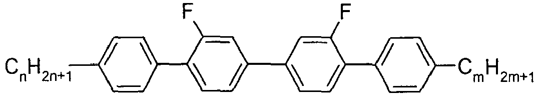 |
| **PGIGP-n-m** |
| 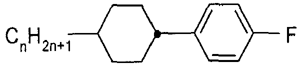 |
| **CP-n-F** |
| 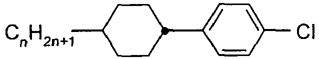 |
| **CP-n-CL** |
| 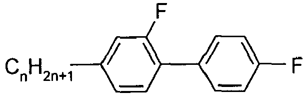 |
| **GP-n-F** |
| 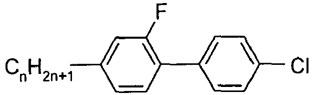 |
| **GP-n-CL** |
| 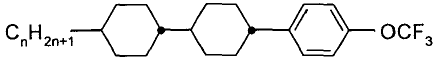 |
| **CCP-n-OT** |
| 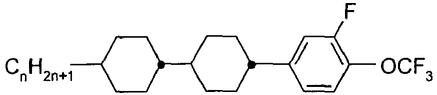 |
| **CCG-n-OT** |
| 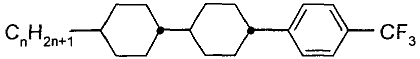 |
| **CCP-n-T** |
| 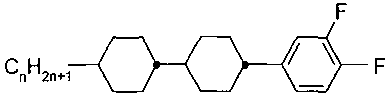 |
| **CCG-n-F** |
| 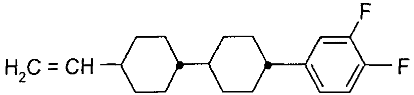 |
| **CCG-V-F** |
| 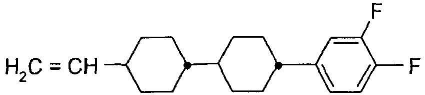 |
| **CCG-V-F** |
| 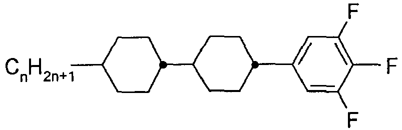 |
| **CCU-n-F** |
| 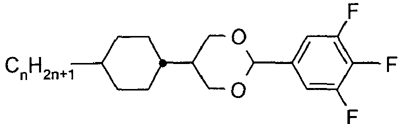 |
| **CDU-n-F** |
| 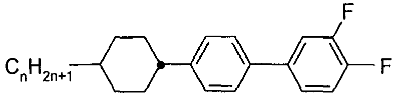 |
| **CPG-n-F** |
| 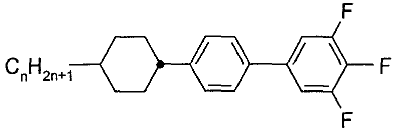 |
| **CPU-n-F** |
| 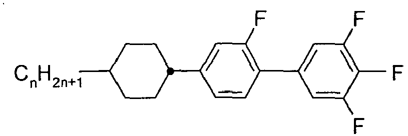 |
| **CGU-n-F** |
| 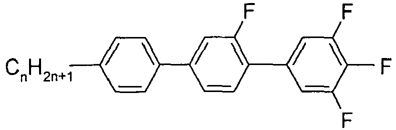 |
| **PGU-n-F** |
| 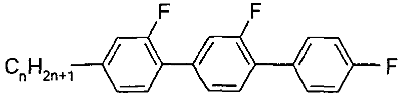 |
| **GGP-n-F** |
| 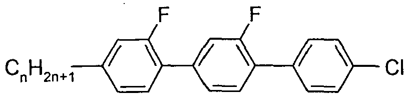 |
| **GGP-n-CL** |
| 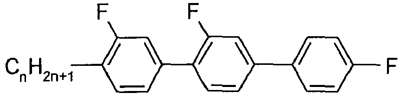 |
| **PGIGI-n-F** |
| 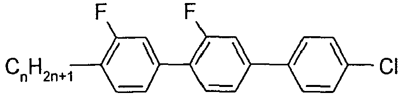 |
| **PGIGI-n-CL** |
| 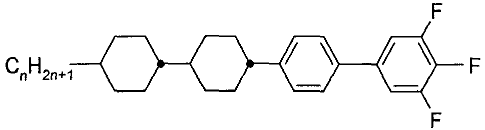 |
| **CCPU-n-F** |
| 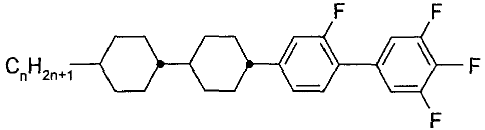 |
| **CCGU-n-F** |
| 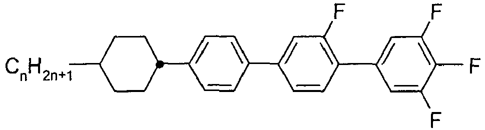 |
| **CPGU-n-F** |
| 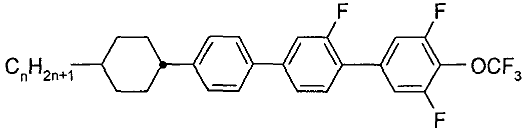 |
| **CPGU-n-OT** |
| 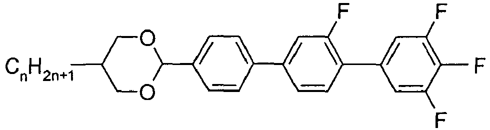 |
| **DPGU-n-F** |
| 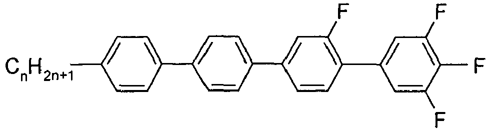 |
| **PPGU-n-F** |
| 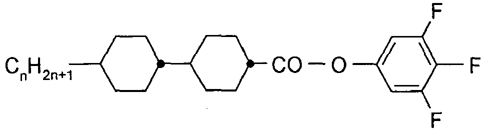 |
| **CCZU-n-F** |
| 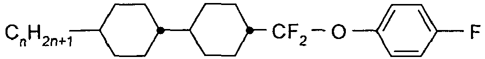 |
| **CCQP-n-F** |
| 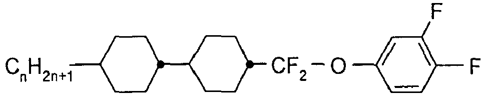 |
| **CCQG-n-F** |
| 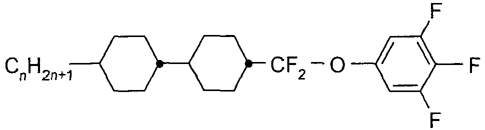 |
| **CCQU-n-F** |
| 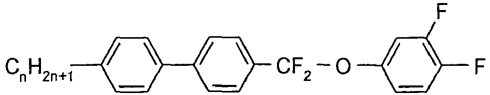 |
| **PPQG-n-F** |
| 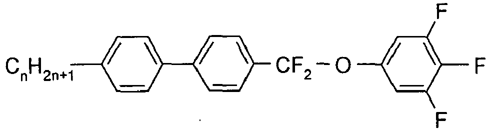 |
| **PPQU-n-F** |
| 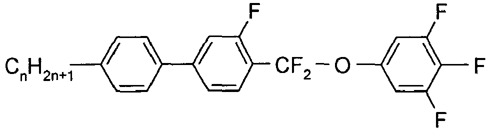 |
| **PGQU-n-F** |
| 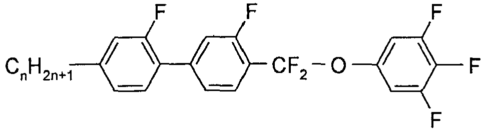 |
| **GGQU-n-F** |
| 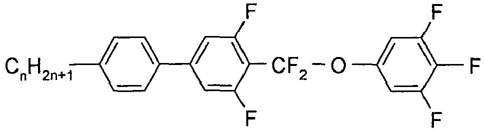 |
| **PUQU-n-F** |
| 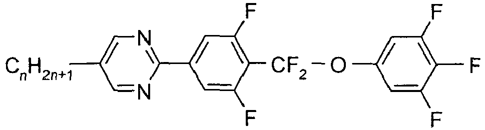 |
| **MUQU-n-F** |
| 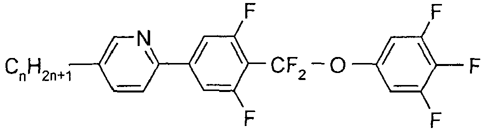 |
| **NUQU-n-F** |
| 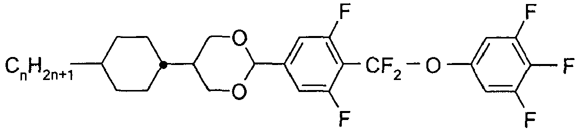 |
| **CDUQU-n-F** |
| 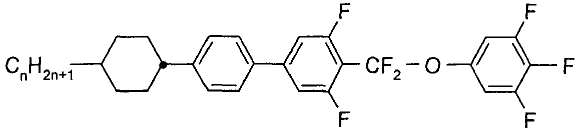 |
| **CPUQU-n-F** |
| 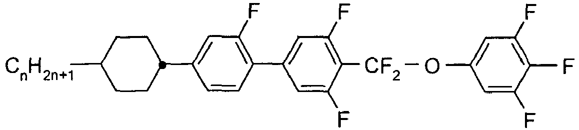 |
| **CGUQU-n-F** |
| 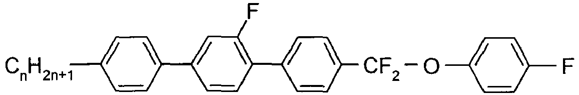 |
| **PGPQP-n-F** |
| 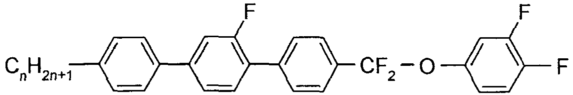 |
| **PGPQG-n-F** |
| 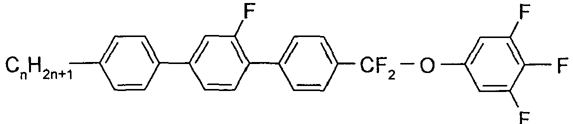 |
| **PGPQU-n-F** |
| 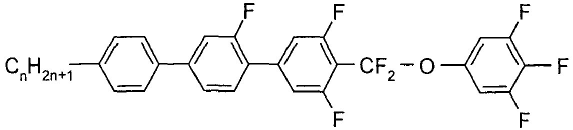 |
| **PGUQU-n-F** |
| 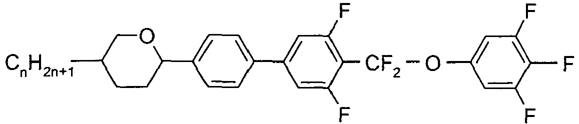 |
| **APUQU-n-F** |
| 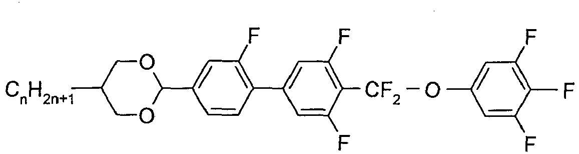 |
| **DGUQU-n-F** |

worin n, m und l bevorzugt unabhängig voneinander 1 bis 7 bedeuten.

In der folgenden Tabelle, Tabelle E, sind Beispielverbindungen zusammengestellt, die in den mesogenen Medien gemäß der vorliegenden Erfindung als zusätzliche Stabilisatoren verwendet werden können.

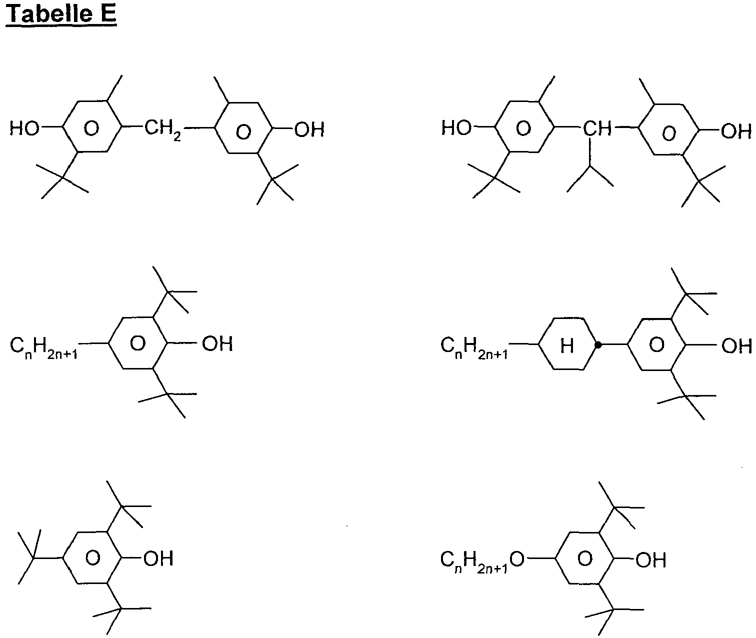

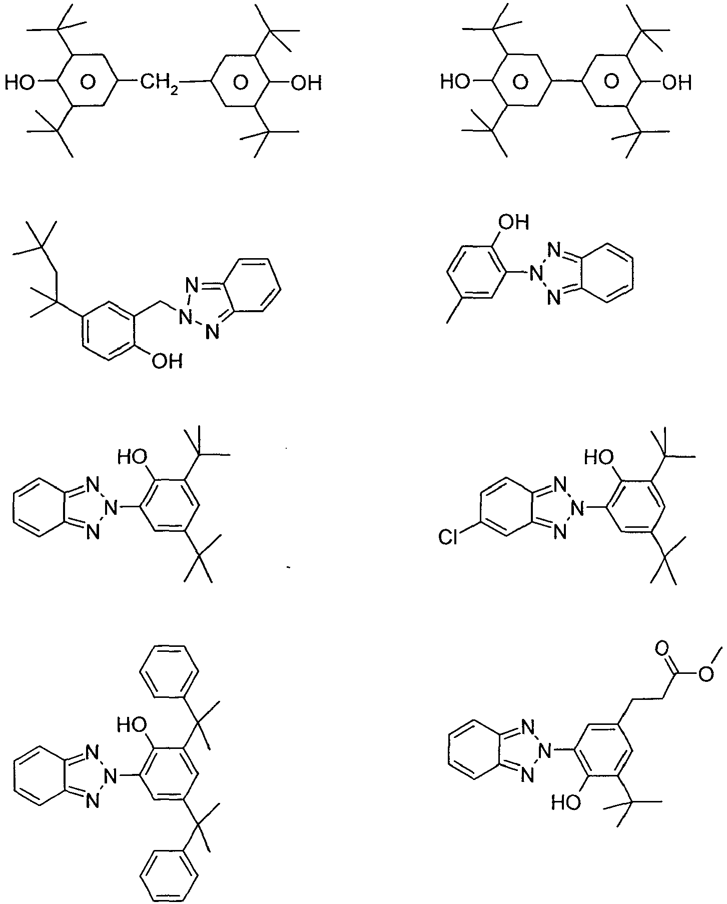

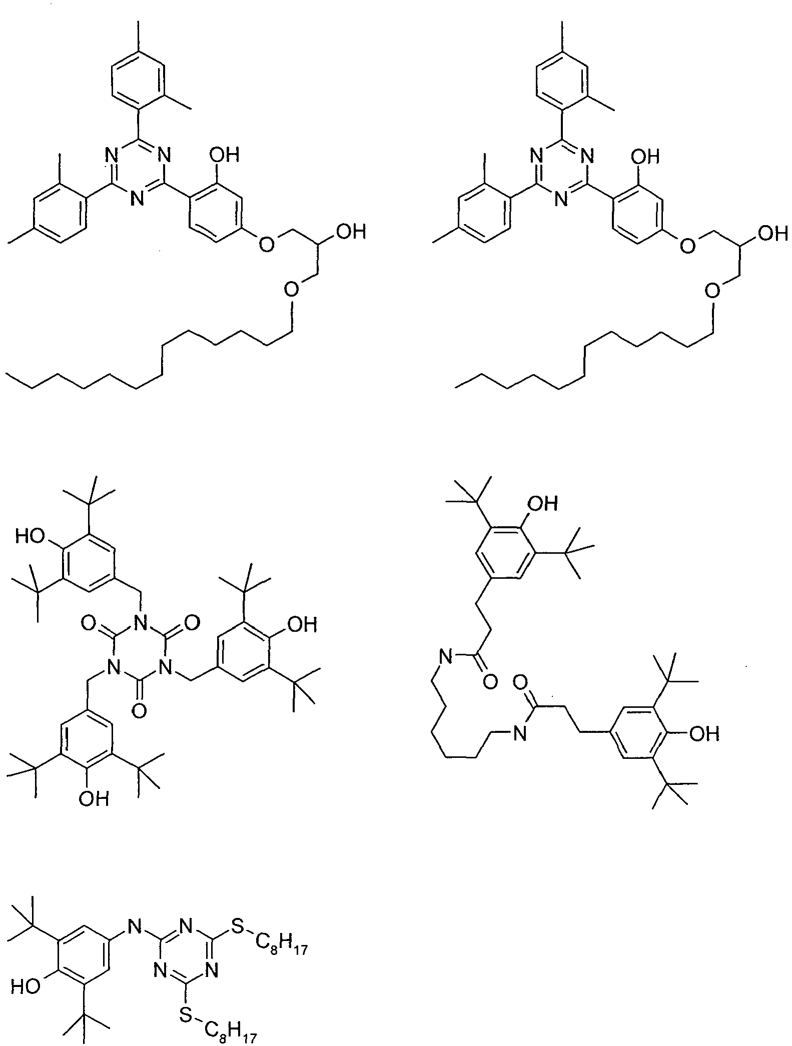

In einer bevorzugten Ausführungsform der vorliegenden Erfindung enthalten die mesogenen Medien eine oder mehrere Verbindungen ausgewählt aus der Gruppe der Verbindungen der Tabelle E.

In der folgenden Tabelle F, sind Beispielverbindungen zusammengestellt, die in den mesogenen Medien gemäß der vorliegenden Erfindung vorzugsweise als chirale Dotierstoffe verwendet werden können.

**Tabelle F**

| |
|---|
| 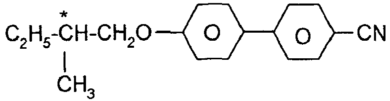 |
| **C 15** |
| 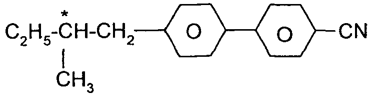 |
| **CB 15** |
| 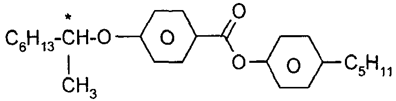 |
| **CM 21** |
| 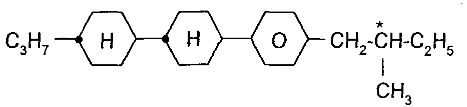 |
| **CM 44** |
| 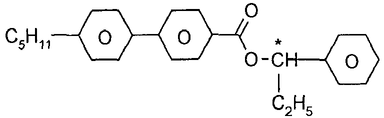 |
| **CM 45** |
| 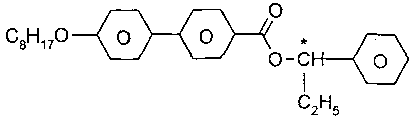 |
| **CM 47** |
| 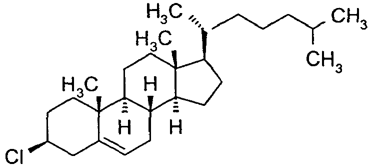 |
| **CC** |
| 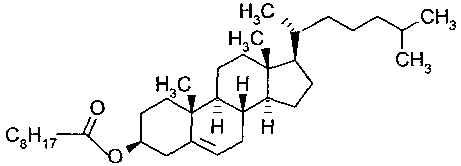 |
| **CN** |
| 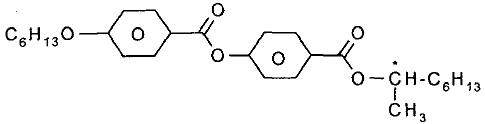 |
| **R/S-811** |
| 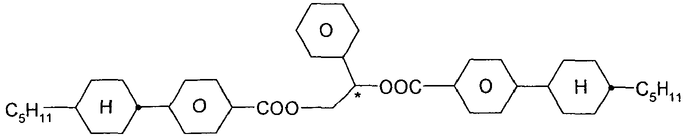 |
| **R/S-1011** |
| 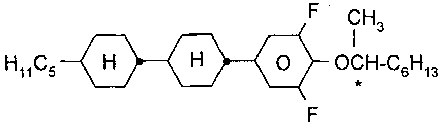 |
| **R/S-2011** |
| 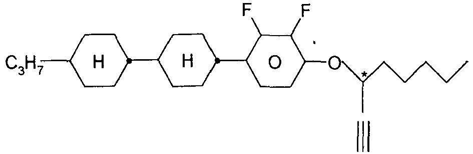 |
| **R/S-30**11 |
| 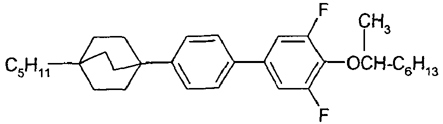 |
| **R/S-4011** |
| 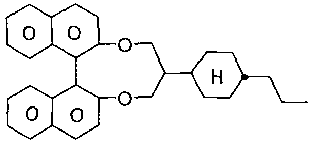 |
| **R/S-5011** |

In einer bevorzugten Ausführungsform der vorliegenden Erfindung enthalten die mesogenen Medien eine oder mehrere Verbindungen ausgewählt aus der Gruppe der Verbindungen der Tabelle F.

Vorzugsweise enthalten die mesogenen Medien gemäß der vorliegenden Anmeldung zwei oder mehr, vorzugsweise vier oder mehr, Verbindungen ausgewählt aus der Gruppe bestehend aus den Verbindungen der obigen Tabellen.

Die Flüssigkristallmedien gemäß der vorliegenden Erfindung enthalten vorzugsweise
- sieben oder mehr, vorzugsweise acht oder mehr Einzelverbindungen, vorzugsweise von drei oder mehr, besonders bevorzugt von vier oder mehr, unterschiedlichen Formeln, ausgewählt aus der Gruppe der Verbindungen der Tabelle D.

### Beispiele

Die folgenden Beispiele erläutern die vorliegende Erfindung, ohne sie in irgendeiner Weise zu beschränken.

Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

Es werden Flüssigkristallmischungen mit der Zusammensetzung und den Eigenschaften wie in den folgenden Tabellen angegeben hergestellt.

### Substanzbeispiele

Die folgenden Substanzen sind bevorzugt einzusetzende Substanzen der Formel I gemäß der vorliegenden Anmeldung.

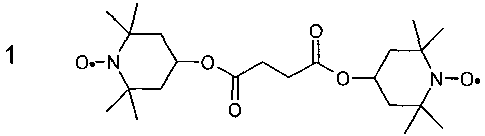

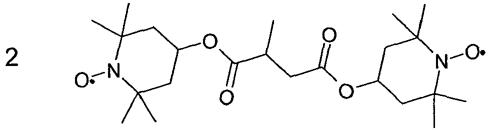

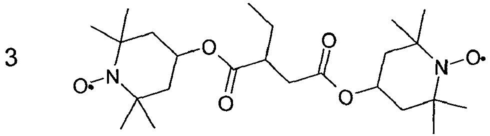

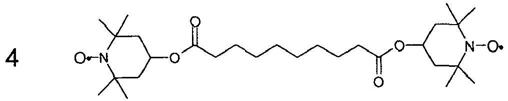

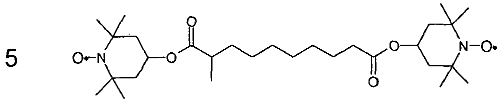

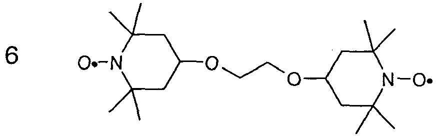

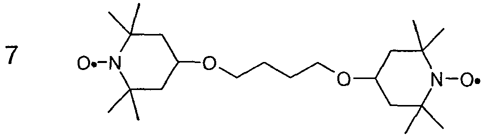

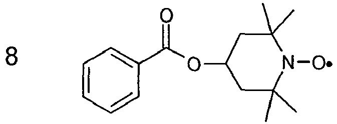

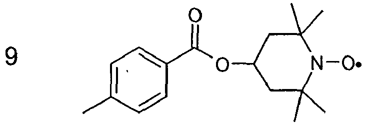

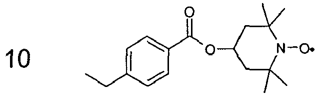

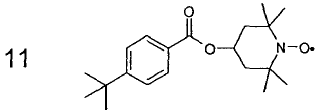

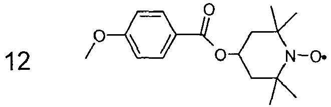

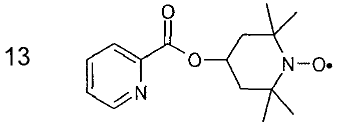

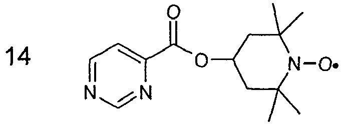

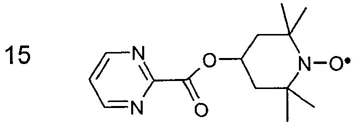

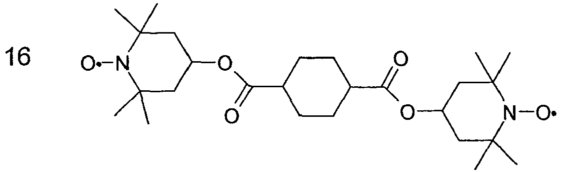

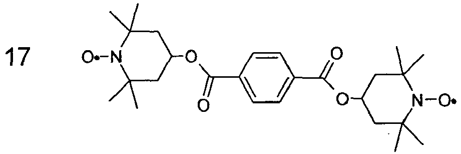

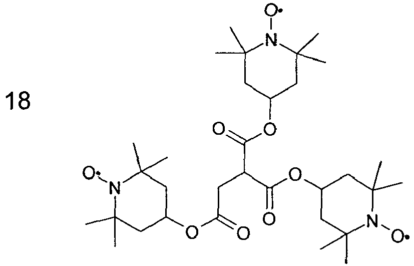

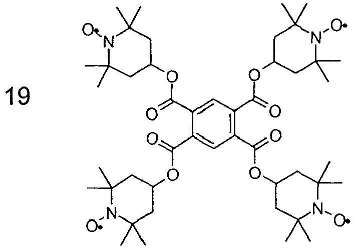

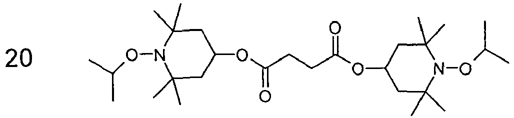

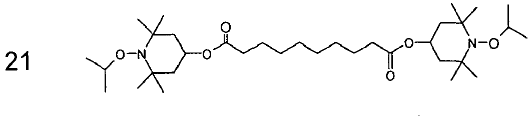

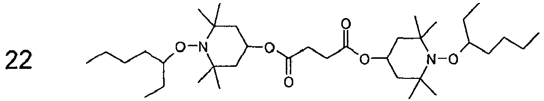

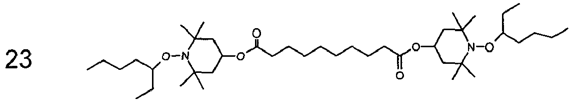

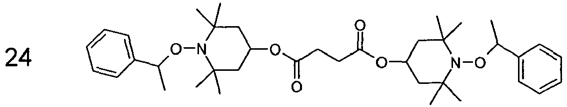

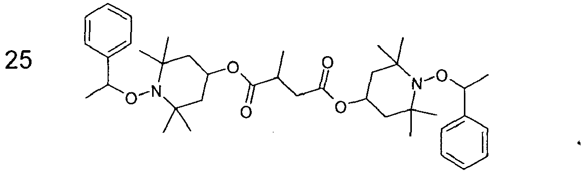

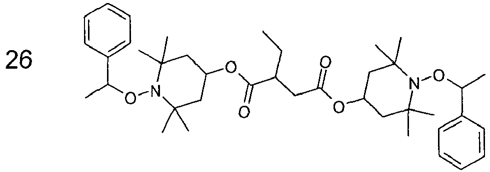

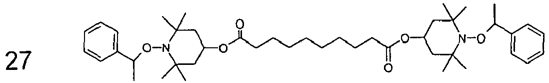

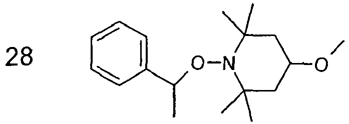

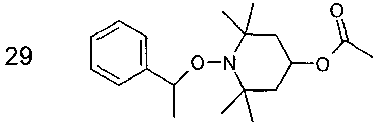

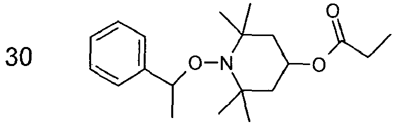

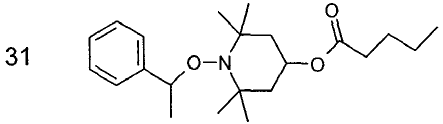

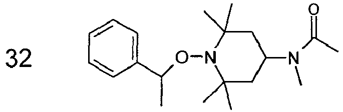

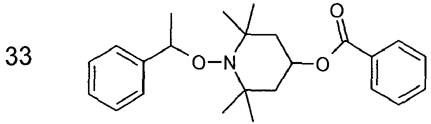

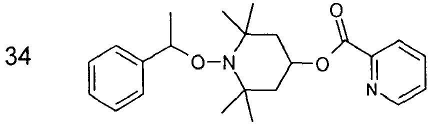

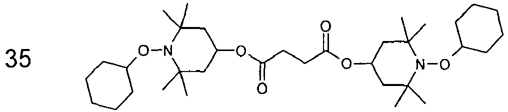

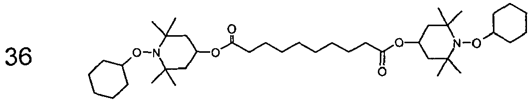

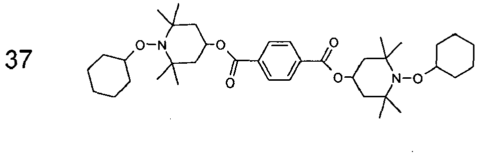

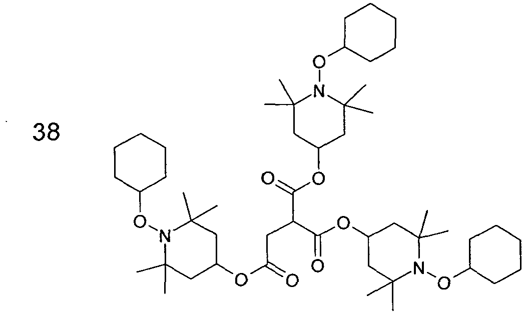

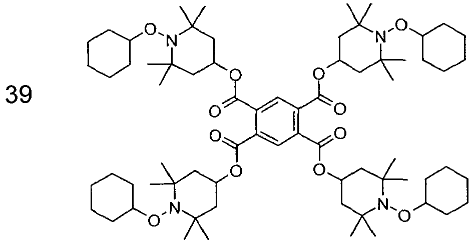

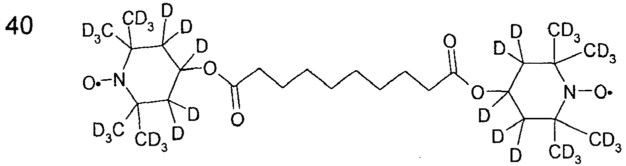

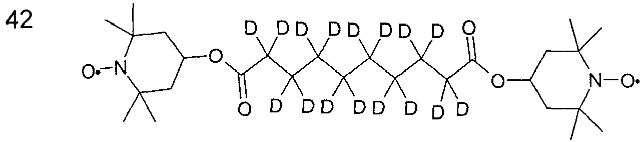

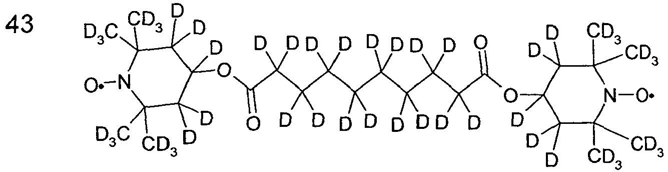

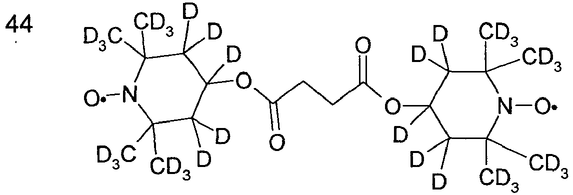

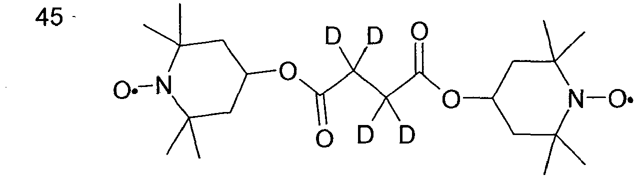

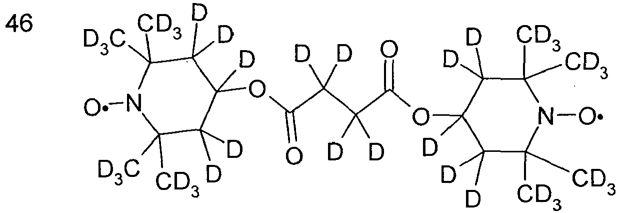

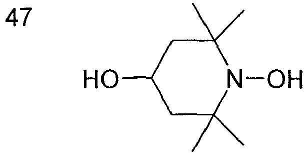

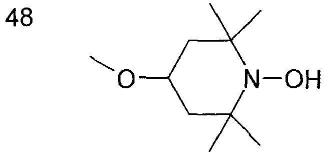

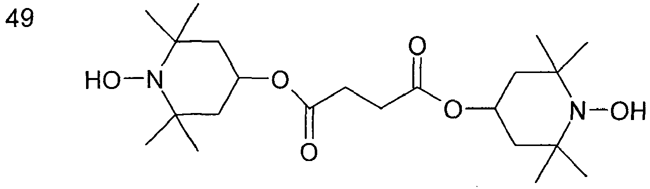

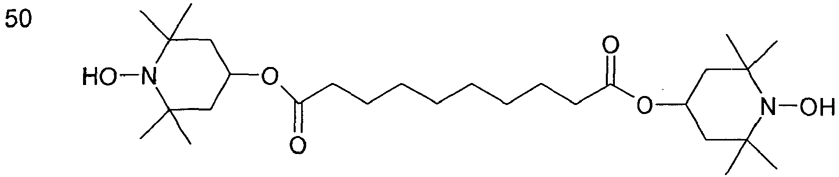

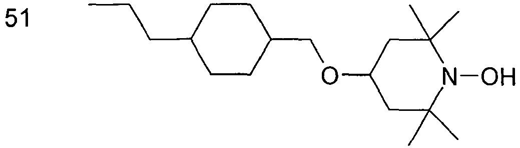

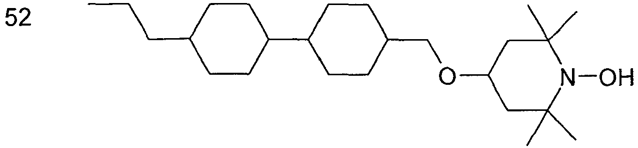

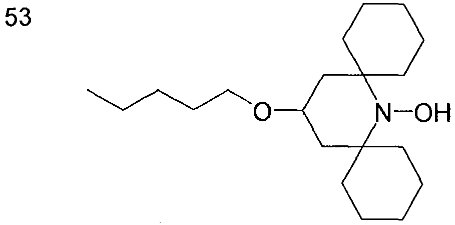

### Synthesebeispiel 1: Synthese von Bis(2,2,6,6-tetramethyl-4-piperidyl)-N,N'-dioxyl succinat (Substanzbeispiel 1)

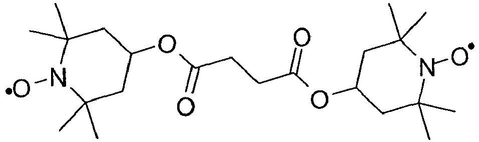

2,15g (12,26 mmol) 4-Hydroxy-2,2,6,6-tetramethylpiperidin-1-oxyl, 40 mg (0,33 mmol) 4-(Dimethylamino)-pyridin und 1 ml (12,4 mmol) getrocknetes Pyridin werden in 20 ml trockenem Dichlormethan vorgelegt. Anschließend wird aktiviertes Molsieb 4 Angström zugegeben und 90 min bei Raumtemperatur (kurz RT; ca. 22°C) gerührt. Die Reaktionslösung wird auf eine Temperatur im Bereich von 7 bis 10°C gekühlt und langsam mit 0,71 ml (6,13 mmol) Bernsteinsäuredichlorid versetzt und wird für 18 h bei RT gerührt. Die Reaktionslösung wird mit ausreichend ges. NaHCO₃-Lösung und Dichlormethan versetzt und die organische Phase abgetrennt. Es wird mit Wasser und ges. NaCl-Lösung gewaschen, über Na₂SO₄ getrocknet, filtriert und eingeengt. Das Rohprodukt wird über Kieselgel mit Dichlormethan / Methyl-tertbutylether (95:5) gereinigt und man erhält das Produkt als weißen Feststoff mit einer Reinheit von > 99.5 %.

### Synthesebeispiel 2: Synthese von Bis(2,2,6,6-tetramethylpiperidin-1-oxyl-4-yl)decandiat (Substanzbeispiel 4)

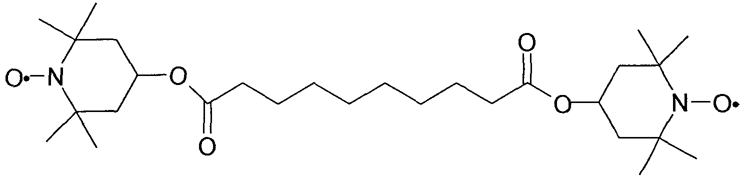

Es werden 28.5 g (166 mmol) 4-Hydroxy-2,2,6,6-tetramethylpiperidin-1-Oxyl (freies Radikal) und 250 mg (2.05 mmol) 4-(Dimethylamino)-pyridin in 300 ml entgastem Dichlormethan gelöst und mit 50.0 ml (361 mmol) Triethylamin versetzt. Es wird nachentgast und auf 0°C gekühlt und es werden 10 g (41.4 mmol) Sebacinsäure-chlorid gelöst in 100 ml entgastem Dichlormethan bei 0-5°C zugetropft und für 18 h bei Raumtemperatur gerührt. Nach vollständigem Umsatz wird unter Eiskühlung mit Wasser und HCl (pH = 4 - 5) versetzt und für 30 min. nachgerührt. Die organische Phase wird abgetrennt und die Wasserphase wird mit Dichlormethan nachextrahiert und die vereinigten Phasen mit gesättigter NaCl-Lösung gewaschen und über Na₂SO₄ getrocknet, filtriert und eingeengt. Man erhält 24.4 g einer roten Flüssigkeit, die zusammen über 100 g Al₂O₃ basisch und 500 g Kieselgel mit Dichlormethan / Methyltertbuthylether (95 / 5) gefrittet werden. Man erhält orangene Kristalle, die in entgastem Acetonitril bei 50°C gelöst und bei -25°C kristallisiert werden. Man erhält das Produkt als orangene Kristalle mit einer HPLC-Reinheit von 99.9%.

### Synthesebeispiel 3: Synthese von Bis(2,2,6,6-tetramethyl-4-piperidyl)-N,N'-dioxyl butandiol (Substanzbeispiel 7)

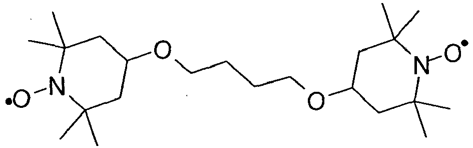

15,0g (60 %-ig in Mineralöl, 375 mmol) NaH werden unter Schutzgas mit ausreichend Pentan versetzt und absetzen gelassen. Der Pentanüberstand wird abpipetiert und vorsichtig unter Kühlung mit Isopropanol gequencht. Das gewaschene NaH wird nun vorsichtig mit 100 ml THF versetzt. Die Reaktionsmischung wird auf 55°C erhitzt und tropfenweise vorsichtig mit einer Lösung aus 50,0 g (284 mmol) 4-Hydroxy-2,2,6,6-tetramethylpiperidin-1-oxyl in 400 ml THF versetzt. Der entstehende Wasserstoff wird direkt abgeführt. Es wird nach vollständiger Zugabe der Lösung über Nacht (16 h) bei 60°C nachgerührt. Die Reaktionsmischung wird anschließend auf 5°C gekühlt und portionsweise mit 1,4-Butandioldimethylsulfonat versetzt. Anschließend wird die Mischung langsam auf 60°C erhitzt und für 16 h bei dieser Temperatur gerührt. Nach vollständigem Umsatz wird auf RT abgekühlt und unter Kühlung mit 200 ml 6 %-iger Ammoniaklösung in Wasser versetzt und 1 h lang gerührt. Anschließend wird die organische Phase abgetrennt, die wässrige Phase mit Methyl-tertbutylether nachgewaschen, die vereinigten organischen Phasen mit ges. NaCl-Lösung gewaschen, getrocknet und eingeengt. Das Rohprodukt wird über Kieselgel mit Dichlormethan / Methyl-tertbutylether (8:2) gereinigt und aus Acetonitril bei -20°C kristallisiert. Man erhält das Produkt als rosa kristallinen Feststoff mit einer Reinheit von > 99.5 %.

### Synthesebeispiel 4: Synthese von Bernsteinsäure bis-[2,2,6,6-tetramethyl-1-(1-phenyl-ethoxy)-piperidin-4-yl] ester (Substanzbeispiel 24)

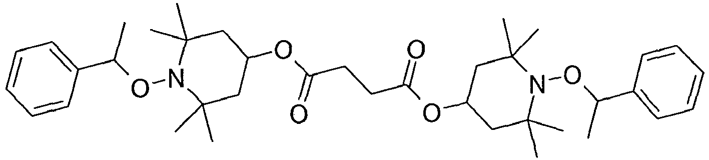

### Schritt 4.1: Synthese von 2,2,6,6-Tetramethyl-1-(1-phenyl-ethoxy)-piperidin-4-ol

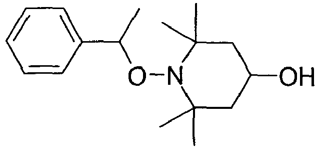

5,0g (29,03 mmol) 4-Hydroxy-2,2,6,6-tetramethylpiperidin-1-oxyl, 7,80 g (58,1 mmol) 2-Phenyl-propionaldehyd und 100,6 mg (1.02 mmol) Kupfer(I)chlorid werden in 20 ml *tert*-Butanol vorgelegt. Dann werden 6,45 ml (58,06 mmol) 35 %-ige Wasserstoffperoxidlösung vorsichtig und langsam zugetropft so, dass die Innentemperatur 30°C nicht überschreitet. Es wird daher während des Zutropfens mittels Eiskühlung gekühlt. Bei der Reaktion entsteht Sauerstoff, der bei zu schneller Zugabe und zu hoher Temperatur spontan in großem Umfang frei würde. Nach vollständiger Zugabe wird die Reaktionslösung für weitere 16 h bei RT nachgerührt und anschließend mit ausreichend Wasser / Methyltertbutylether versetzt und die organische Phase abgetrennt. Die organische Phase wird mit 10 %-iger Ascorbinsäure peroxidfrei gewaschen und der Peroxidgehalt überprüft. Es wird anschließend mit 10 %-iger NaOH-Lösung, Wasser und ges. NaCl-Lösung gewaschen, über Na₂SO₄ getrocknet, filtriert und eingeengt. Das erhaltene Rohprodukt wird mit Heptan / Methyltertbutylether (1:1) über Kieselgel gereinigt und man erhält das Produkt als farblose Kristalle.

### Schritt 4.2: Synthese von Bernsteinsäure bis-[2,2,6,6-tetramethyl-1-(1-phenyl-ethoxy)-piperidin-4-yl] ester

1.52g (5.5 mmol) des Produkts der vorherigen Stufe, der Verbindung 2,2,6,6-Tetramethyl-1-(1-phenyl-ethoxy)-piperidin-4-ol, 15,3 mg (0,125 mmol) Dimethylaminopyridin und 1,02 ml (12,6 mmol) getrocknetes Pyridin werden in 10 ml Dichlormethan vorgelegt und auf eine Temperatur im Bereich von 7 bis 10°C gekühlt. Dann werden 0,255 ml (2,199 mmol) Bernsteinsäuredichlorid als solches zugetropft und gegebenenfalls nachdosiert, wenn noch Hydroxyverbindung vorhanden ist. Die Reaktionsmischung wird nach vollständigem Umsatz mit Dichlormethan direkt über Kieselgel filtriert und anschließend mit Heptan / Methyltertbuthylether (1:1) und reinem Methyl-tertbutylether eluiert. Das erhaltene Produkt wird gelöst in Acetonitril mittels präperativer HPLC (2 Chromolithsäulen mit Acetonitril 50 ml/min) gereinigt. Man erhält das Produkt als gelbes Öl mit einer Reinheit von > 99.9 %.

### Synthesebeispiel 5: Synthese von Pentansäure 2,2,6,6-tetramethyl-1-(1-phenyl-ethoxy)-piperidin-4-yl ester (Substanzbeispiel 31)

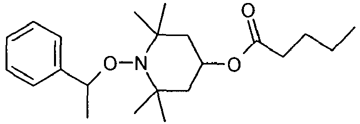

Es werden 2,5g (9,01 mmol) der Verbindung 2,2,6,6-Tetramethyl-1-(1-phenyl-ethoxy)-piperidin-4-ol des Schritts 3.1 und 55,1 mg (0,45 mmol) (4-Dimethylaminopyridin) in 50,0 ml trockenem Dichlormethan gelöst und auf 3°C gekühlt. Es wird bei dieser Temperatur mit 5,47 ml (27,03 mmol) Valeriansäureanhydrid versetzt und 14 h bei Raumtemperatur gerührt. Nach vollständigem Umsatz wird vorsichtig auf Eiswasser gegossen, mit 2N HCl auf pH 6 eingestellt und die organische Phase angetrennt. Die wässrige Phase wird mit Dichlormethan extrahiert und die vereinigten organischen Phasen mit gesättigter NaCl-Lösung, einem Gemisch aus Wasser und Triethylamin (300 : 50 ml) gewaschen und über MgSO₄ getrocknet, filtriert und eingeengt. Nach Aufreinigung an Kieselgel mit Heptan / Methyltertbuthylether (9:1) erhält man das Produkt als farbloses Öl.

### Synthesebeispiel 6: Synthese von Butandisäure-1,4-bis(1-hydroxy-2,2,6,6-tetramethyl-4-piperidinyl)ester (Substanzbeispiel 49)

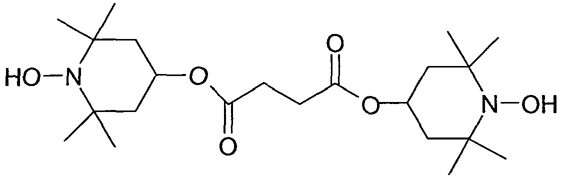

Es werden 40 ml Wasser und 80 ml Dioxan gemischt und mittels Argonstrom sorgfältig entgast. In das Lösungsmittelgemisch werden 2,0 g (4,7 mmol) des freien Radikals des Substanzbeispiels 1 (Synthesebeispiel 1) gelöst und portionsweise mit 4,95 g (28,1 mmol) Ascorbinsäure versetzt. Das Reaktionsgemisch entfärbt sich hierbei und es wird bei 40°C für 18 h unter Schutzgasatmosphäre gerührt. Es wird auf Raumtemperatur abgekühlt und mit 100 ml Wasser versetzt kurz nachgerührt und die anfallenden Kristalle abgesaugt. Das Kristallisat wird in 50 ml entgastem THF heiß gelöst und die unlöslichen Bestandteile abfiltriert und das Filtrat bei -25°C kristallisiert. Die leicht rosa gefärbten Kristalle werden dann bei Raumtemperatur aus Acetonitril für 18 h ausgerührt und man erhält das Produkt als schwach rosa gefärbte Kristalle mit einer HPLC-Reinheit von 100 %.

### Synthesebeispiel 8: Synthese von Decandisäure-1,10-bis(1-hydroxy-2,2,6,6-tetramethyl-4-piperidinyl) ester (Substanzbeispiel 50)

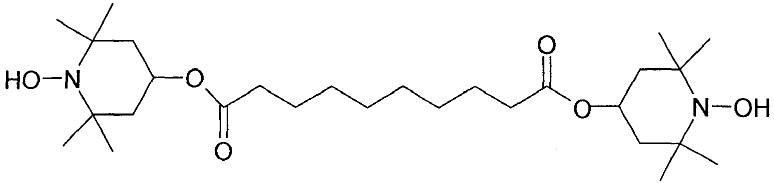

Alle verwendeten Lösungsmittel werden zuvor mittels Argonstrom gründlich entgast. Bei der Aufarbeitung sind Braunglasgeräte zu verwenden. Es wird 1,70 g (3,32 mmol) des freien Radikals des Substanzbeispiels 4 (Synthesebeispiel 2) in 60 ml Dioxan gelöst. Anschließend werden 3,6 g (20 mmol) Ascorbinsäuregelöst in 30 ml Wasser zu der Lösung bei Raumtemperatur zugetropft. Es tritt hierbei eine Entfärbung der Reaktionslösung ein und nach 1 h Rühren bei Raumtemperatur ist die Umsetzung vollständig. Es wird mit 100 mL Dichlormethan extrahiert, die organischen Phase mit Wasser gewaschen und über Na₂SO₄ getrocknet, filtriert und eingeengt. Die anfallenden gelben Kristalle werden bei 160°C und 10⁻² mbar für 5 min getrocknet und man erhält ein zähes, langsam kristallisierendes Öl.

Es werden Flüssigkristallmischungen mit den Zusammensetzungen und den Eigenschaften wie in den folgenden Tabellen angegeben hergestellt und untersucht.

### Anwendungsbeispiele

### Vergleichsbeispiele 1.0 und 1.1

| Mischung M-1: | | | | | |
|---|---|---|---|---|---|
| Zusammensetzung | | | Physikalische Eigenschaften | | |
| Verbindung | | | T(N,I) | = 80,5 | °C |
| Nr. | Abkürzung | c/% | ne (20°C, 589,3 nm) | = 1,5780 | |
| 1 | APUQU-3-F | 4,5 | Δn (20°C, 589,3 nm) | = 0,0990 | |
| 2 | PGUQU-3-F | 5,0 | ε∥ (20°C, 1 kHz) | = 12,3 | |
| 3 | PGUQU-4-F | 9,0 | Δε(20°C, 1 kHz) | = 9,1 | |
| 4 | PGUQU-5-F | 1,5 | k₁(20°C) | = 12,6 | pN |
| 5 | CCQU-3-F | 4,0 | k₃(20°C) | = 14,0 | pN |
| 6 | CCQU-5-F | 9,0 | γ₁(20°C) | = 76 | mPa · s |
| 7 | CCU-3-F | 9,0 | V₀(20°C) | = 1,24 | V |
| 8 | CCU-5-F | 9,0 | | | |
| 9 | CC-3-V | 38,5 | | | |
| 10 | CC-3-V1 | 4,0 | | | |
| 11 | PGP-2-3 | 6,5 | | | |
| ∑ | | 100,0 | | | |

Diese Mischung (Mischung M-1) wird hergestellt und in zwei Teile geteilt. Der erste Teil wird ohne Zugabe einer weiteren Verbindung untersucht. Zu dem zweiten Teil der Mischung werden 100 ppm der zu untersuchenden Verbindung, hier der Verbindung der Formel I-1a-1, gegeben. Die beiden Teile der Mischung werden wie folgt untersucht.

Es werden jeweils sechs Testzellen mit der Orientierungsschicht AL-16301 (Fa. Japan Synthetic Rubber (JSR), Japan) und einer Schichtdicke von 3,2 µm und transversalen Elektroden wie für TN-Zellen gefüllt und bezüglich ihrer Voltage Holding Ratio untersucht. Dabei wird der Anfangswert und der Wert nach UV-Belastung bei einer Temperatur von 25°C mit einer Hochdruck-Quecksilberdampf-Lampe Execure 3000 von Hoya mit einem Kantenfilter (T = 50 % bei 340 nm), bei einer bestimmten Belastungsintensität in J/cm² bestimmt. Die jeweilige Belastungsintensität wird mit einem Sensor Ushio UIT-101 + UVD-365PD bei einer Wellenlänge von 365 nm gemessen. Es wird jeweils die HR bei einer Temperatur von 100°C, nach 5 Minuten im Ofen gemessen. Die Spannung beträgt 1 V bei 60 Hz. Die Ergebnisse sind in der folgenden Tabelle zusammengestellt.

| | | I_{UV} / J/cm² | 0 | 3 | 6 | 12 |
|---|---|---|---|---|---|---|
| Beispiel | X: Formel | c(X) / ppm | HR₀ / % | HR_{UV} / % | | |
| V1.0 | None | 0 | 98,6 | 94,2 | 90,8 | 85,2 |
| V1.1 | I-1a-1 | 100 | 98,0 | 95,7 | 94,8 | 93,9 |

| | | | | | | |
|---|---|---|---|---|---|---|
| Bemerkung: X: Verbindung der Formel I-1a-1, I_{UV} bei 365 nm. | | | | | | |

Die Mischungen des Vergleichsbeispiels 1.1, die eine Verbindung der Formel I (I-1a-2) enthält, zeichnet sich insbesondere durch eine ausgezeichnete Stabilität gegen UV-Bestrahlung aus.

Danach wurden entsprechende Untersuchungen der beiden verschiedenen Mischungen in verschlossenen Testzellen unter Belastung mit einer kommerziellen TV-LCD-Hintergrundbeleuchtung (CCFL) durchgeführt. Dabei betrug die Temperatur der Testzellen bedingt durch die Wärmentwicklung der Hintergrundbeleuchtung ca. 40°C. Die Ergebnisse sind in der folgenden Tabelle zusammengefasst.

| | | t / h | 0 | 24 | 168 | 1.000 |
|---|---|---|---|---|---|---|
| Beispiel | X: Formel | c(X) / ppm | HR₀ / % | HR_{BL} / % | | |
| V1.0 | None | 0 | 98,1 | 89,8 | 69,3 | 36 |
| V1.1 | I-1a-1 | 100 | 97,9 | 98,3 | 95,8 | 68,5 |

| | | | | | | |
|---|---|---|---|---|---|---|
| Bemerkungen: X: Verbindung der Formel I-1a-1. | | | | | | |

Anschließend wurden entsprechende Untersuchungen der beiden verschiedenen Mischungen in verschlossenen Testzellen unter Temperaturbelastung durchgeführt. Die Temperaturstabilität wird durch einen Hitzetest überprüft. Dazu wird die HR vor und nach Hitzebelastung bestimmt. Dazu werden die Zellen für bestimmte Zeiten in einem Ofen bei einer Temperatur von 100°C gelagert. Danach wird die HR wie oben beschreiben bestimmt. Die Ergebnisse sind in der folgenden Tabelle zusammengefasst.

| | | t / h | 0 | 24 | 72 | 336 |
|---|---|---|---|---|---|---|
| Beispiel | X: Formel | c(X) / ppm | HRo / % | HR_{T} (t) / % | | |
| V1.0 | None | 0 | 98,5 | 97,1 | 95,8 | 93,9 |
| V1.1 | I-1a-1 | 100 | 98,0 | 97,8 | 97,5 | 95,8 |

| | | | | | | |
|---|---|---|---|---|---|---|
| Bemerkungen: X: Verbindung der Formel I-1a-1, Temperatur: 100°C. | | | | | | |

### Anwendungsbeispiel 2:

Vergleichsbeispiele 2.0 bis 2.2 und Anwendungsbeispiele 2.1 und 2.2

| Mischung M-2: | | | | | |
|---|---|---|---|---|---|
| Zusammensetzung | | | Physikalische Eigenschaften | | |
| Verbindung | | | T(N,I) | = 93,0 | °C |
| Nr. | Abkürzung | c/% | nₑ (20°C, 589,3 nm) | = 1,5876 | |
| 1 | DGUQU-4-F | 8,0 | Δn (20°C, 589,3 nm) | = 0,1086 | |
| 2 | APUQU-2-F | 8,0 | ε∥ (20°C, 1 kHz) | = 19,0 | |
| 3 | APUQU-3-F | 6,5 | Δε (20°C, 1 kHz) | = 15,4 | |
| 4 | PGUQU-3-F | 3,5 | k₁ (20°C) | = 14,7 | pN |
| 5 | PGUQU-4-F | 9,0 | k₃ (20°C) | = 15,6 | pN |
| 6 | DPGU-4-F | 6,0 | γ₁ (20°C) | = 97 | mPa · s |
| 7 | CCP-3-OT | 8,0 | V₀ (20°C) | = 1,03 | V |
| 8 | CC-3-V | 33,5 | | | |
| 9 | CC-3-V1 | 11,5 | | | |
| 10 | CCP-V2-1 | 6,0 | | | |
| ∑ | | 100,0 | | | |

Wie bei Anwendungsbeispiel 1 wird hier die Mischung M-2 hergestellt, hier jedoch in fünf Teile geteilt. Der erste Teil wird ohne Zugabe einer weiteren Verbindung untersucht. Zu den vier weiteren Teilen der Mischung werden 100 ppm bzw. 200 ppm der Verbindung der Formel TINUVIN 770®, bzw. 100 ppm bzw. 200 ppm der Verbindung der Formel I-1a-1 gegeben.
Es werden jeweils sechs Testzellen mit der Orientierungsschicht AL-16301 (Fa. Japan Synthetic Rubber (JSR), Japan) und einer Schichtdicke von 3,2 µm gefüllt (Elektroden: TN-layout) und bezüglich ihrer Voltage Holding Ratio untersucht. Dabei wird der Anfangswert und der Wert nach UV-Belastung bei einer Temperatur von 25°C mit einer Hochdruck-Quecksilberdampf-Lampe von Hoya (Execure 3000) mit einem Kantenfilter (T = 50 % bei 340 nm), bei einer bestimmten Belastungsintensität in J/cm² bestimmt. Die Belastungsintensität wird mit einem Sensor Ushio UIT-101 + UVD-365PD bei einer Wellenlänge von 365 nm gemessen. Es wird jeweils die HR bei einer Temperatur von 100°C, nach 5 Minuten im Ofen gemessen. Die Spannung beträgt 1 V bei 60 Hz. Die Ergebnisse sind in der folgenden Tabelle zusammengestellt.

| | | I_{UV} / J/cm² | 0 | 3 |
|---|---|---|---|---|
| Beispiel | X: Formel | c(X) / ppm | HR₀ / % | HR_{UV} / % |
| V2.0 | None | 0 | 95,8 | 90,0 |
| 2.1 | TINUVIN 770® | 100 | 97,0 | 94,5 |
| 2.2 | TINUVIN 770® | 200 | 97,7 | 96,8 |
| V2.1 | I-1a-1 | 100 | 95,1 | 93,4 |
| V2.2 | I-1a-1 | 200 | 95,2 | 94,1 |

| | | | | |
|---|---|---|---|---|
| Bemerkungen: X: Bei Beispielen 2.1 und 2.2 TINUVIN 770® und bei Vergleichsbeispielen 2.1 und 2.2 Verbindung der Formel I-1a-1, I_{UV} bei 365 nm. | | | | |

Die Mischungen der Anwendungsbeispiele 2.1 und 2.2, die jeweils eine Verbindung der Formel TINUVIN 770®, zeichnen sich insbesondere durch eine ausgezeichnete Stabilität gegen UV-Bestrahlung aus. Dabei nimmt bei den entsprechenden beiden Mischungspaaren die Stabilität mit zunehmender Konzentration der Verbindung der Formel TINUVIN 770® bzw. der Formel I-1a-2 zu.

Danach wurden entsprechende Untersuchungen der fünf verschiedenen Mischungen in Testzellen unter Belastung mit einer LCD-Hintergrundbeleuchtung wie oben beschrieben durchgeführt. Die Ergebnisse sind in der folgenden Tabelle zusammengefasst.

| | | t/h | 0 | 24 | 168 |
|---|---|---|---|---|---|
| Beispiel | X: Formel | c(X) / ppm | HR₀ / % | HR_{BL} /(t)/ % | |
| V2.0 | None | 0 | 96,2 | 82,9 | 56,8 |
| 2.1 | TINUVIN 770® | 100 | 97,6 | 95,1 | 93,0 |
| 2.2 | TINUVIN 770® | 200 | 98,7 | 98,5 | 95,8 |
| V2.1 | I-1a-1 | 100 | 96,1 | 97,2 | 92,4 |
| V2.2 | I-1a-1 | 200 | 95,7 | 97,3 | 95,5 |

| | | | | | |
|---|---|---|---|---|---|
| Bemerkungen: X: Bei Beispielen 2.1 und 2.2 TINUVIN 770® und bei Vergleichsbeispielen 2.1 und 2.2 Verbindung der Formel I-1a-1. | | | | | |

Die Abweichung der HR des Hosts bei dem Vergleichsbeispiel 2.0 in dieser Tabelle von denen der vorherigen Tabelle dieses Vergleichsbeispiels ist auf die Reproduzierbarkeit der Messwerte zurückzuführen. Innerhalb einer Messserie bei einem Beispiel und den zugehörigen Vergleichsmessungen ist die Reproduzierbarkeit deutlich besser (etwa 1/2 bis 1/3 mal so groß) und damit die Schwankungsbreite entsprechend deutlich niedriger.

Anschließend wurden entsprechende Untersuchungen der fünf verschiedenen Mischungen in Testzellen unter Temperaturbelastung durchgeführt, wie oben beschreiben. Die Ergebnisse sind in der folgenden Tabelle zusammengefasst.

| | | t/h | 0 | 24 | 48 | 96 |
|---|---|---|---|---|---|---|
| Beispiel | X: Formel | c(X) / ppm | HR₀ / % | HR_{T} (t) / % | | |
| V2.0 | None | 0 | 95,8 | 95,0 | 93,7 | 92,8 |
| 2.1 | TINUVIN 770® | 100 | 97,0 | 98,3 | 98,8 | 98,8 |
| 2.2 | TINUVIN 770® | 200 | 97,7 | 98,8 | 98,9 | 98,9 |
| V2.1 | I-1a-1 | 100 | 95,1 | 96,1 | 96,8 | 96,6 |
| V1.2 | I-1a-1 | 200 | 95,2 | 96,6 | 96,8 | 96,7 |

| | | | | | | |
|---|---|---|---|---|---|---|
| Bemerkungen: X: Bei Beispielen 2.1 und 2.2 TINUVIN 770® und bei Vergleichsbeispielen 2.1 und 2.2 Verbindung der Formel I-1a-1, Temperatur: 100 °C. | | | | | | |

### Vergleichsbeispiele 3.0 und 3.1

| Mischung M-3: | | | | | | |
|---|---|---|---|---|---|---|
| Zusammensetzung | | | Physikalische Eigenschaften | | | |
| Verbindung | | | T(N,I) | = | 93,0 | °C |
| Nr. | Abkürzung | c/% | ne (20°C, 589,3 nm) | = | 1,5870 | |
| 1 | CDUQU-3-F | 8,0 | Δn (20°C, 589,3 nm) | = | 0,1089 | |
| 2 | APUQU-2-F | 8,0 | ε∥ (20°C, 1 kHz) | = | 19,2 | |
| 3 | APUQU-3-F | 8,5 | Δε (20°C, 1 kHz) | = | 15,4 | |
| 4 | PGUQU-3-F | 1,5 | k₁(20°C) | = | 14,9 | pN |
| 5 | PGUQU-4-F | 9,0 | k₃(20°C) | = | 15,2 | pN |
| 6 | PGUQU-5-F | 4,0 | γ₁ (20°C) | = | 99 | mPa · s |
| 7 | DPGU-4-F | 6,0 | V₀ (20°C) | = | 1,03 | V |
| 8 | CCP-3-OT | 8,0 | | | | |
| 9 | CC-3-V | 32,5 | | | | |
| 10 | CC-3-V1 | 12,5 | | | | |
| 11 | CCP-V2-1 | 2,0 | | | | |
| ∑ | | 100,0 | | | | |

Wie bei Anwendungsbeispiel 1 wird hier die Mischung M-3 hergestellt und in zwei Teile geteilt. Der erste Teil wird ohne Zugabe einer weiteren Verbindung untersucht. Zu dem zweiten Teil der Mischung werden 200 ppm der zu untersuchenden Verbindung, hier der Verbindung der Formel I-1a-1 gegeben. Es werden jeweils sechs Testzellen mit der Orientierungsschicht AL-16301 (Fa. Japan Synthetic Rubber (JSR), Japan) und einer Schichtdicke von 3,2 µm gefüllt (Elektroden: TN-layout) und bezüglich ihrer Voltage Holding Ratio untersucht. Dabei wird der Anfangswert und der Wert nach UV-Belastung bei einer Temperatur von 25°C mit einer Hochdruck-Quecksilberdampf-Lampe von Hoya (Execure 3000) mit einem Kantenfilter (T = 50 % bei 340 nm), bei einer bestimmten Belastungsintensität in J/cm² bestimmt. Die Belastungsintensität wird mit einem Sensor Ushio UIT-101 + UVD-365PD bei einer Wellenlänge von 365 nm gemessen. Es wird jeweils die HR bei einer Temperatur von 100°C, nach 5 Minuten im Ofen gemessen. Die Spannung beträgt 1 V bei 60 Hz. Die Ergebnisse sind in der folgenden Tabelle zusammengestellt.

| | I_{UV} / J/cm² | 0 | 3 | 6 | 12 |
|---|---|---|---|---|---|
| Beispiel | c(X) / ppm | HR₀ / % | HR_{UV} / % | | |
| V3.0 | 0 | 97,0 | 91,6 | n.z.b. | n.z.b. |
| V3.1 | 200 | 96,0 | 93,4 | n.z.b. | n.z.b. |

| | | | | | |
|---|---|---|---|---|---|
| Bemerkungen: X: Verbindung der Formel I-1a-1, n.z.b.: noch zu bestimmen, luv bei 365 nm. | | | | | |

Die Mischungen des Vergleichsbeispiels 3.1, die eine Verbindung der Formel I (der Formel I-1a-1) enthält, zeichnet sich insbesondere durch eine ausgezeichnete Stabilität gegen UV-Bestrahlung aus.

## Patentansprüche

1. Flüssigkristallmedium mit positiver dielektrischer Anisotropie, **dadurch gekennzeichnet, dass** es
a) eine Verbindung der Formel TINUVIN 770®, 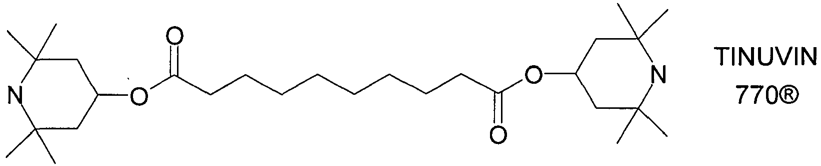
b) eine oder mehrere Verbindungen ausgewählt aus der Gruppe der Verbindungen der Formeln II und III 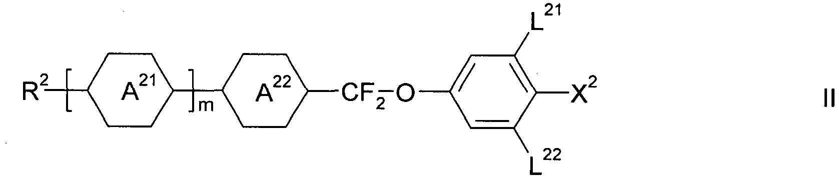 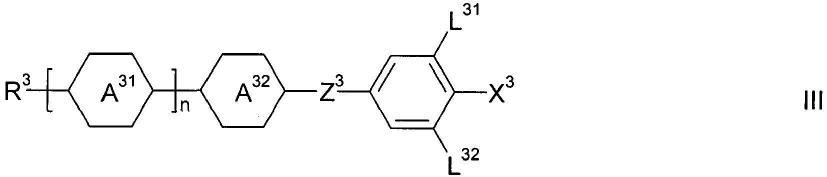 worin
R² und R³ unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugsweise R² und R³ Alkyl oder Alkenyl, 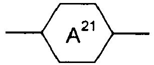 bis 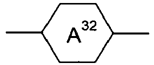 bei jedem Erscheinen unabhängig voneinander 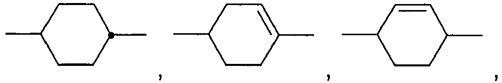 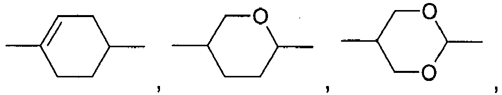 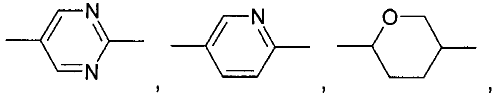 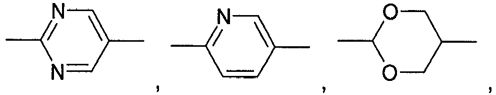 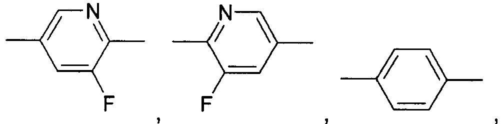 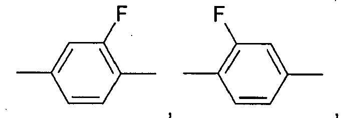 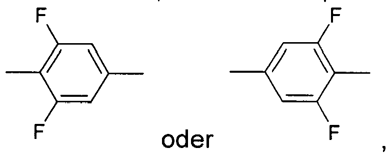
L²¹, L²², L³¹ und L³² unabhängig voneinander H oder F,
X² und X³ unabhängig voneinander Halogen, halogeniertes Alkyl oder Alkoxy mit 1 bis 3 C-Atomen oder halogeniertes Alkenyl oder Alkenyloxy mit 2 oder 3 C-Atomen,
Z³ -CH₂CH₂-, -CF₂CF₂-, -COO-, *trans-* -CH=CH-, *trans-*-CF=CF-, -CH₂O- oder eine Einfachbindung und
m und n unabhängig voneinander 0, 1, 2 oder 3,
bedeuten,
und
c) eine Verbindung der Formel CC-3-V 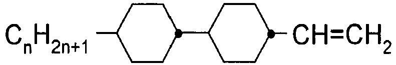 worin
n 3
bedeutet,
enthält.

2. Medium nach Anspruch 1, **dadurch gekennzeichnet, dass** es
- eine oder mehrere Verbindungen der Formel I 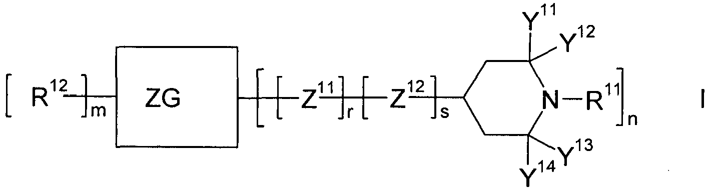 worin
n eine ganze Zahl von 1 bis 4,
m (4-n), 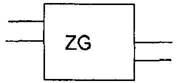 ein organischer Rest mit 4 Bindungsstellen, bevorzugt eine Alkantetrayleinheit mit 1 bis 20 C-Atomen in der zusätzlich zu den im Molekül vorhandenen m Gruppen R¹², aber unabhängig davon, ein weiteres H-Atom durch R¹² ersetzt sein kann oder mehrere weitere H-Atome durch R¹² ersetzt sein können, bevorzugt eine geradkettige Alkantetrayleinheit mit je einer Valenz an je einem der beiden endständigen C-Atome worin eine -CH₂- -Gruppe oder mehrere -CH₂--Gruppen durch -O- oder -(C=O)- so ersetzt sein können, dass nicht zwei O-Atome direkt miteinander verbunden sind, oder ein substituierter oder unsubstituierter aromatischer oder heteroaromatischer Kohlenwasserstoffrest mit 1 bis 4 Valenzen, in dem zusätzlich zu den im Molekül vorhandenen m Gruppen R¹², aber unabhängig davon, ein weiteres H-Atom durch R¹² ersetzt sein kann oder mehrere weitere H-Atome durch R¹² ersetzt sein können,
Z¹¹ und Z¹² unabhängig voneinander -O-, -(C=O)-, -(N-R¹⁴)- oder eine Einfachbindung, jedoch nicht beide gleichzeitig -O-,
r und s unabhängig voneinander 0 oder 1,
Y¹¹ bis Y¹⁴ jeweils unabhängig voneinander Alkyl mit 1 bis 4 C-Atomen und alternativ auch unabhängig voneinander eines oder beide der Paare (Y¹¹ und Y¹²) und (Y¹³ und Y¹⁴) gemeinsam eine zweibindige Gruppe mit 3 bis 6 C-Atomen,
R¹¹ O-R¹³, O^{•} oder OH,
R¹² bei jedem Auftreten unabhängig voneinander H, F, OR¹⁴, NR¹⁴R¹⁵ eine geradkettige oder verzweigte Alkylkette mit 1-20 C-Atomen, in der eine -CH₂- -Gruppe oder mehrere -CH₂- -Gruppen durch -O- oder -C(=O)-ersetzt sein können, jedoch nicht zwei benachbarte -CH₂- -Gruppen durch -O- ersetzt sein können, einen Kohlenwasserstoffrest, der eine Cycloalkyl- oder eine Alkylcycloalkyleinheit enthält, und, in dem eine -CH₂--Gruppe oder mehrere -CH₂- -Gruppen durch -O- oder -C(=O)- ersetzt sein können, jedoch nicht zwei benachbarte -CH₂- -Gruppen durch -O- ersetzt sein können, und in dem ein H-Atom oder mehrere H-Atome durch OR¹⁴, N(R¹⁴)(R¹⁵) oder R¹⁶ ersetzt sein können, oder ein aromatischer oder heteroaromatischen Kohlenwasserstoffrest, in denen ein H-Atom oder mehrere H-Atome durch OR¹⁴, N(R¹⁴)(R¹⁵) oder R¹⁶ ersetzt sein können,
R¹³ bei jedem Auftreten unabhängig voneinander eine geradkettige oder verzweigte Alkylkette mit 1-20 C-Atomen, in der eine -CH₂- -Gruppe oder mehrere -CH₂--Gruppen durch -O- oder -C(=O)- ersetzt sein können, jedoch nicht zwei benachbarte -CH₂- -Gruppen durch -O- ersetzt sein können, ein Kohlenwasserstoffrest, der eine Cycloalkyl- oder eine Alkylcycloalkyleinheit enthält, und, in dem eine -CH₂- -Gruppe oder mehrere -CH₂--Gruppen durch -O- oder -C(=O)- ersetzt sein können, jedoch nicht zwei benachbarte -CH₂- -Gruppen durch-O- ersetzt sein können, und in denen ein H-Atom oder mehrere H-Atome durch OR¹⁴, N(R¹⁴)(R¹⁵) oder R¹⁶ ersetzt sein können, oder ein aromatischer oder hetero-aromatischer Kohlenwasserstoffrest, in denen ein H-Atom oder mehrere H-Atome durch OR¹⁴, N(R¹⁴)(R¹⁵) oder R¹⁶ ersetzt sein können,
oder 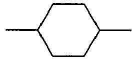 (1,4-Cyclohexylen), worin eine oder mehrere -CH₂- -Gruppen durch -O-, -CO oder -NR¹⁴⁻ersetzt sein können, oder ein Acetophenyl- Isopropyl- oder 3-Heptylrest sein kann,
R¹⁴ bei jedem Auftreten unabhängig voneinander eine geradkettige oder verzweigte Alkyl- oder Acylgruppe mit 1 bis 10 C-Atomen oder einen aromatischen Kohlenwasserstoff- oder Carbonsäurerest mit 6-12 C-Atomen,
R¹⁵ bei jedem Auftreten unabhängig voneinander eine geradkettige oder verzweigte Alkyl- oder Acylgruppe mit 1 bis 10 C-Atomen oder einen aromatischen Kohlenwasserstoff- oder Carbonsäurerest mit 6-12 C-Atomen,
R¹⁶ bei jedem Auftreten unabhängig voneinander eine geradkettige oder verzweigte Alkylgruppe mit 1 bis 10 C-Atomen in dem eine -CH₂- -Gruppe oder mehrere -CH₂- -Gruppen durch -O- oder -C(=O)- ersetzt sein können, jedoch nicht zwei benachbarte -CH₂- -Gruppen durch -O- ersetzt sein können,
bedeutet, mit den Maßgaben, dass,
im Fall n = 1, R¹¹ = O^{•} und
-[Z¹¹-]r-[Z¹²]s- = -O-, -(CO)-O-, -O-(CO)-, -O-(CO)-O-, -NR¹⁴- oder -NR¹⁴-(CO)-, 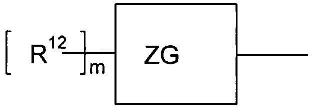
nicht
geradkettiges oder verzweigtes Alkyl mit 1 bis 10 C-Atomen, auch Cycloalkyl, Cycloalkylalkyl, oder Alkylcyloalkyl, wobei in allen diesen Gruppen eine oder mehrere -CH₂- Gruppen durch -O- so ersetzt sein können, dass im Molekül keine zwei O-Atome direkt miteinander verbunden sind, bedeutet
im Fall n = 2 und R¹¹ = O^{•}, 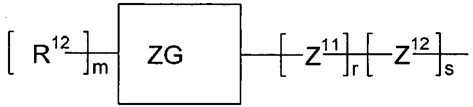 nicht 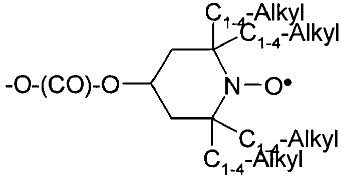 bedeutet, und
im Fall n = 2 und R¹¹ = O-R¹³,
R¹³ nicht n-C₁-₉-Alkyl bedeutet, 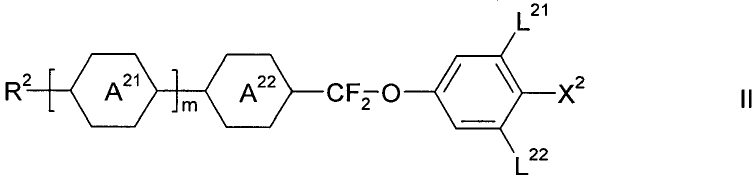 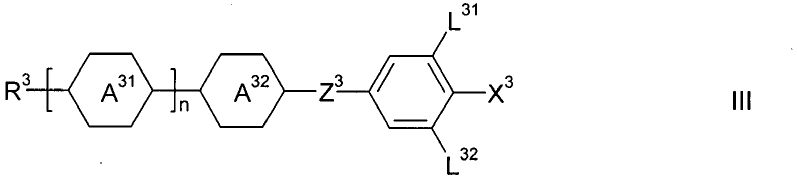 worin
R² und R³ unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen, 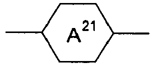 bis 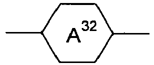 bei jedem Erscheinen unabhängig voneinander 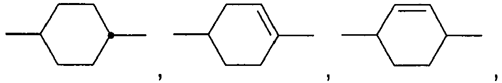 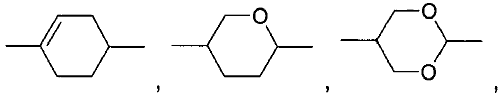 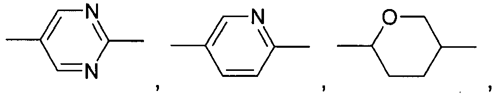 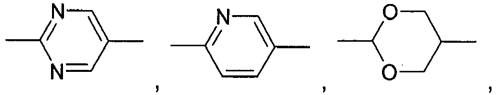 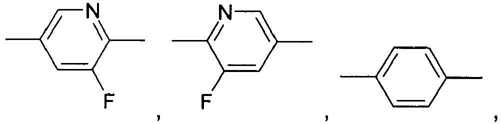 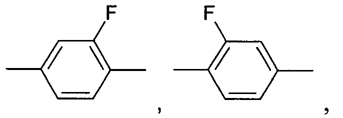 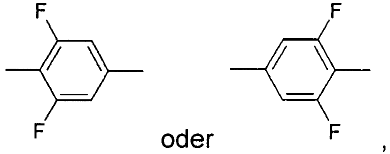
L²¹, L²², L³¹ und L³² unabhängig voneinander H oder F,
X² und X³ unabhängig voneinander Halogen, halogeniertes Alkyl oder Alkoxy mit 1 bis 3 C-Atomen oder halogeniertes Alkenyl oder Alkenyloxy mit 2 oder 3 C-Atomen,
Z³ -CH₂CH₂-, -CF₂CF₂-, -COO-, *trans-* -CH=CH-, *trans-*-CF=CF-, -CH₂O- oder eine Einfachbindung und
m und n unabhängig voneinander 0, 1, 2 oder 3,
bedeuten,
enthält.

3. Medium nach einem der Ansprüche 1 oder 2, **dadurch gekennzeichnet, dass** es
- eine oder mehrere Verbindungen der Formel IV 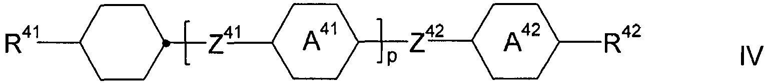 worin
R⁴¹ und R⁴² unabhängig voneinander die in Anspruch 2 oben unter Formel II für R² angegebene Bedeutung besitzen, 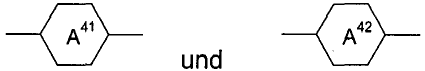 unabhängig voneinander und bei zweifachem Auftreten von 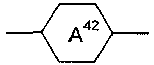 auch diese unabhängig voneinander 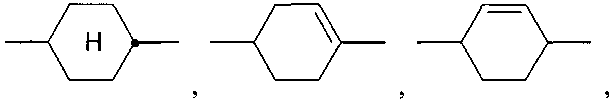 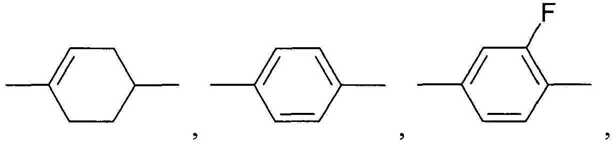 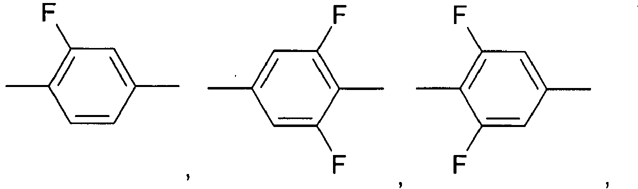 oder 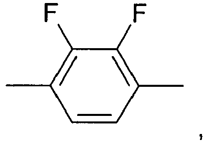
Z⁴¹ und Z⁴² unabhängig voneinander und bei zweifachem Auftreten von Z⁴¹ auch diese unabhängig voneinander -CH₂CH₂-, -COO-, *trans-* -CH=CH-, *trans-* -CF=CF-, -CH₂O-, -CF₂O-, -C≡C- oder eine Einfachbindung und
p 0, 1 oder 2 bedeutet,
von denen jedoch die Verbindung der Formel CC-3-V wie in Anspruch 1 angegeben, ausgeschlossen sind,
enthält.

4. Medium nach einem oder mehreren der Ansprüche 1 bis 3, **dadurch gekennzeichnet, dass** die Gesamtkonzentration der Verbindungen der Formeln I und TINUVIN 770® im Medium im Bereich von 1 ppm bis 2.000 ppm liegt.

5. Medium nach einem oder mehreren der Ansprüche 2 bis 4, **dadurch gekennzeichnet, dass** die Verbindungen der Formel I Verbindungen ausgewählt aus der Gruppe der Verbindungen der Formeln I-1 bis I-9 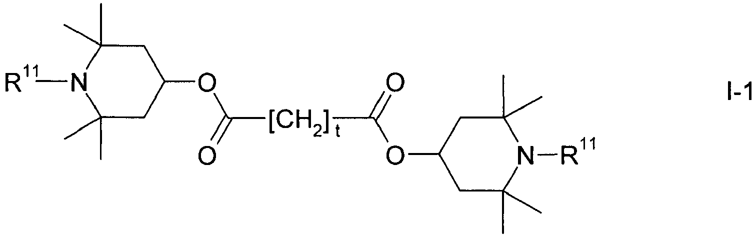 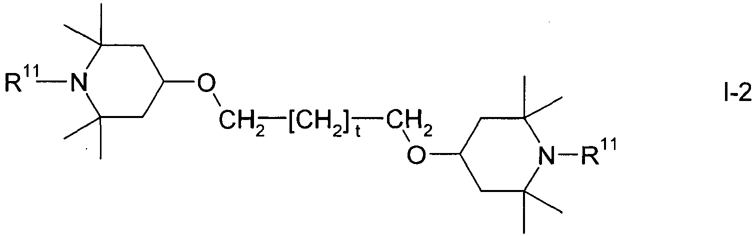 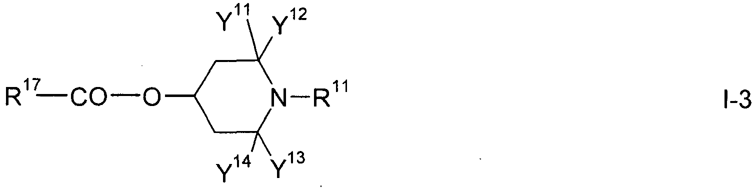 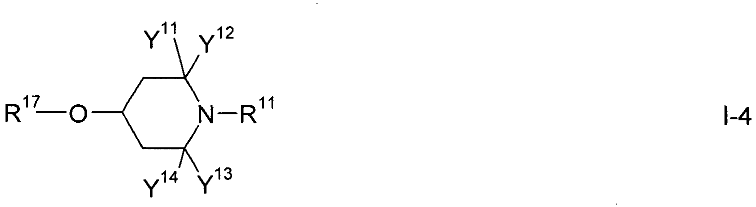 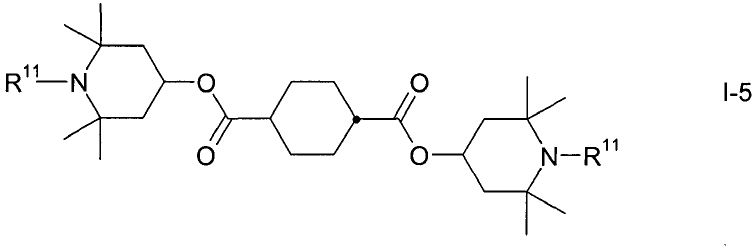 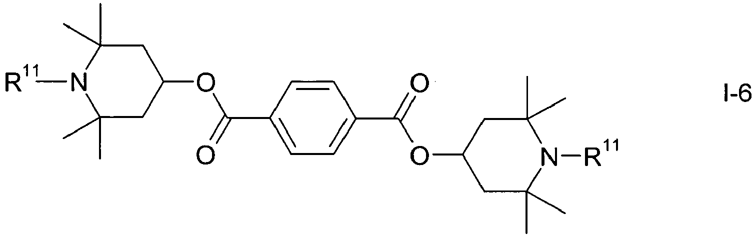 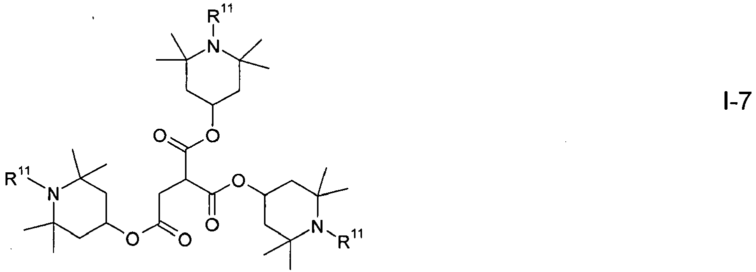 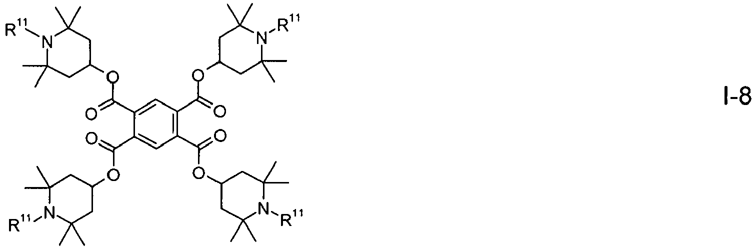 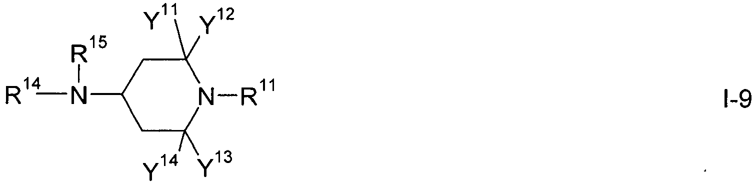 worin die Parameter die die in Anspruch 1 unter Formel I angegebenen Bedeutungen haben und
t eine ganze Zahl von 1 bis12
R¹⁷ eine geradkettige oder verzweigte Alkylkette mit 1-12 C-Atomen in der eine -CH₂- -Gruppe oder mehrere -CH₂--Gruppen durch -O- oder -C(=O)- ersetzt sein können, jedoch nicht zwei benachbarte -CH₂- -Gruppen durch -O- ersetzt sein können oder ein aromatischer oder heteroaromatischer Kohlenwasserstoffrest in denen ein H-Atom oder mehrere H-Atome durch OR¹⁴, N(R¹⁴)(R¹⁵) oder R¹⁶ ersetzt sein können,
bedeuten,
sind.

6. Medium nach einem oder mehreren der Ansprüche 1 bis 5, **dadurch gekennzeichnet, dass** es eine oder mehrere Verbindungen der Formel II, wie in Anspruch 1 angegeben, enthält.

7. Medium nach einem oder mehreren der Ansprüche 1 bis 6, **dadurch gekennzeichnet, dass** es eine oder mehrere Verbindungen der Formel III, wie in Anspruch 1 angegeben, enthält.

8. Medium nach einem oder mehreren der Ansprüche 1 bis 7, **dadurch gekennzeichnet, dass** es eine oder mehrere dielektrisch neutrale Verbindungen der Formel V 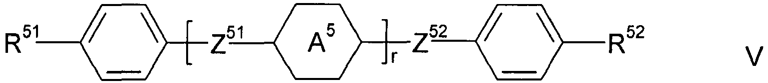 worin
R⁵¹ und R⁵² unabhängig voneinander die für R² unter Formel II in Anspruch 2 angegebene Bedeutung besitzen, 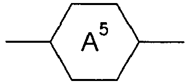 bei jedem Auftreten unabhängig voneinander 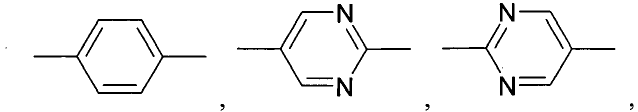 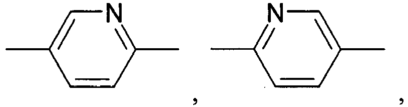 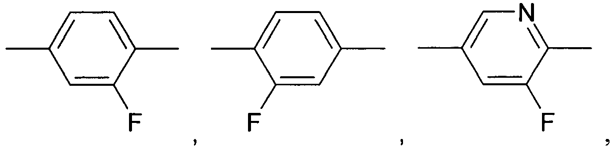 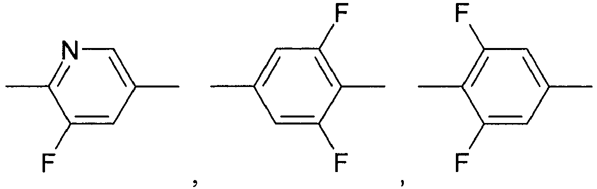 oder 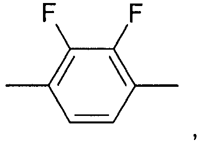
Z⁵¹ und Z⁵² unabhängig voneinander und bei zweifachem Auftreten von Z⁵¹ auch diese unabhängig voneinander -CH₂CH₂-, -COO-, *trans-* -CH=CH-, *trans-* -CF=CF-, -CH₂O-, -CF₂O- oder eine Einfachbindung und
r 0, 1 oder 2 bedeutet
enthält.

9. Flüssigkristallanzeige, **dadurch gekennzeichnet, dass** sie ein Medium nach einem oder mehreren der Ansprüche 1 bis 8 enthält.

10. Anzeige nach Anspruch 9, **dadurch gekennzeichnet, dass** sie durch eine Aktivmatrix adressiert wird.

11. Verwendung eines Mediums nach einem oder mehreren der Ansprüche 1 bis 8 in einer Flüssigkristallanzeige.

12. Verfahren zur Herstellung eines Mediums nach einem oder mehreren der Ansprüche 1 bis 8, **dadurch gekennzeichnet, dass** eine oder mehrere Verbindungen der Formel I, wie in Anspruch 1 gegeben, mit einer oder mehreren der in einem oder mehreren der Ansprüchen 2 und 3 genannten Verbindungen und/oder einer oder mehreren weiteren mesogenen Verbindungen und/oder einem oder mehreren Additiven gemischt wird.

## Claims

1. Liquid-crystal medium having positive dielectric anisotropy, **characterised in that** it comprises
a) a compound of the formula TINUVIN 770®, 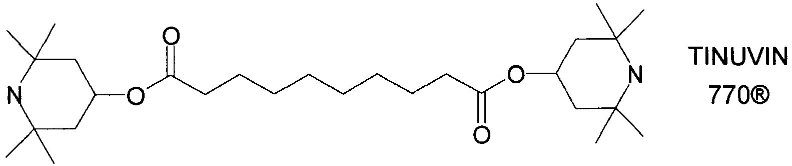
b) one or more compounds selected from the group of the compounds of the formulae II and III 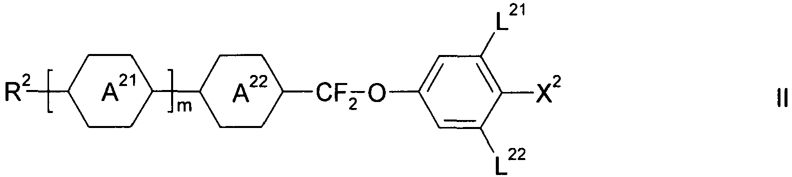 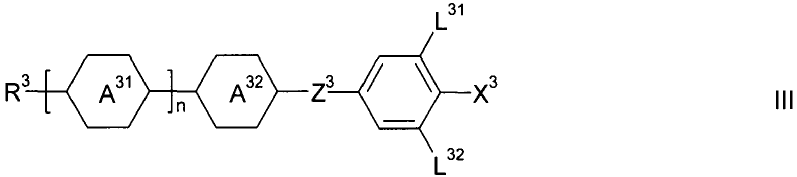 in which
R² and R³, independently of one another, denote alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, and R² and R³ preferably denote alkyl or alkenyl, 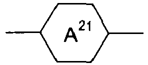 to 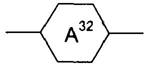 on each appearance, independently of one another, denote 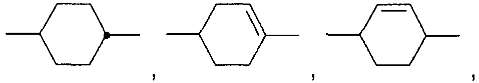 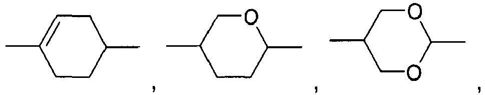 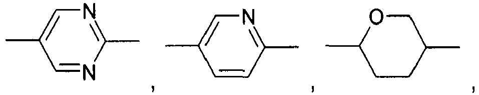 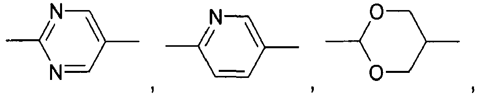 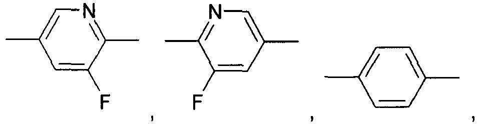 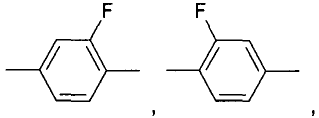 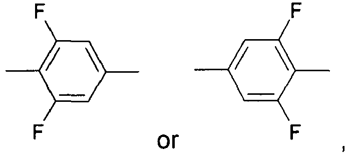
L²¹, L²², L³¹ and L³², independently of one another, denote H or F,
X² and X³, independently of one another, denote halogen, halogenated alkyl or alkoxy having 1 to 3 C atoms or halogenated alkenyl or alkenyloxy having 2 or 3 C atoms,
Z³ denotes -CH₂CH₂-, -CF₂CF₂-, -COO-, *trans* -CH=CH-, *trans* -CF=CF-, -CH₂O- or a single bond, and
m and n, independently of one another, denote 0, 1, 2 or 3,
and
c) a compound of the formula CC-3-V 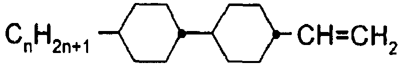 in which
n denotes 3.

2. Medium according to Claim 1, **characterised in that** it comprises
- one or more compounds of the formula I 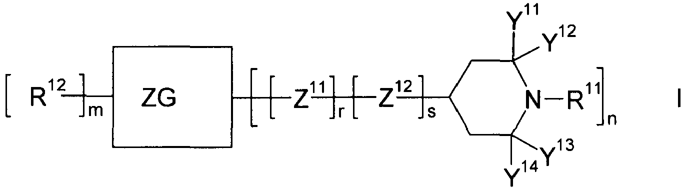 in which
n denotes an integer from 1 to 4,
m denotes (4-n), 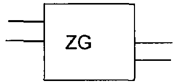 denotes an organic radical having 4 bonding sites, preferably an alkanetetrayl unit having 1 to 20 C atoms, in which, in addition to the m groups R¹² present in the molecule, but independently thereof, a further H atom may be replaced by R¹² or a plurality of further H atoms may be replaced by R¹², preferably a straight-chain alkanetetrayl unit having in each case one valence on each of the two terminal C atoms, in which one -CH₂-group or a plurality of -CH₂- groups may be replaced by -O- or -(C=O)- in such a way that two O atoms are not bonded directly to one another, or denotes a substituted or unsubstituted aromatic or heteroaromatic hydrocarbon radical having 1 to 4 valences, in which, in addition to the m groups R¹² present in the molecule, but independently thereof, a further H atom may be replaced by R¹² or a plurality of further H atoms may be replaced by R¹²,
Z¹¹ and Z¹², independently of one another, denote -O-, -(C=O)-, -(N-R¹⁴)- or a single bond, but do not both simultaneously denote -O-,
r and s, independently of one another, denote 0 or 1,
Y¹¹ to Y¹⁴ each, independently of one another, denote alkyl having 1 to 4 C atoms and alternatively, independently of one another, one or both of the pairs (Y¹¹ and Y¹²) and (Y¹³ and Y¹⁴) together also denote a divalent group having 3 to 6 C atoms,
R¹¹ denotes O-R¹³, O^{•} or OH,
R¹² on each occurrence, independently of one another, denotes H, F, OR¹⁴, NR¹⁴R¹⁵, a straight-chain or branched alkyl chain having 1-20 C atoms, in which one -CH₂- group or a plurality of -CH₂- groups may be replaced by -O- or -C(=O)-, but two adjacent -CH₂-groups cannot be replaced by -O-, or denotes a hydrocarbon radical which contains a cycloalkyl or alkylcycloalkyl unit, and in which one -CH₂- group or a plurality of -CH₂- groups may be replaced by -O- or -C(=O)-, but two adjacent -CH₂- groups cannot be replaced by -O-, and in which one H atom or a plurality of H atoms may be replaced by OR¹⁴, N(R¹⁴)(R¹⁵) or R¹⁶, or denotes an aromatic or heteroaromatic hydrocarbon radical, in which one H atom or a plurality of H atoms may be replaced by OR¹⁴, N(R¹⁴)(R¹⁵) or R¹⁶,
R¹³ on each occurrence, independently of one another, denotes a straight-chain or branched alkyl chain having 1-20 C atoms, in which one -CH₂- group or a plurality of -CH₂- groups may be replaced by -O- or -C(=O)-, but two adjacent -CH₂- groups cannot be replaced by -O-, or denotes a hydrocarbon radical which contains a cycloalkyl or alkylcycloalkyl unit, and in which one -CH₂-group or a plurality of -CH₂- groups may be replaced by -O- or -C(=O)-, but two adjacent -CH₂- groups cannot be replaced by -O-, and in which one H atom or a plurality of H atoms may be replaced by OR¹⁴, N(R¹⁴)(R¹⁵) or R¹⁶, or denotes an aromatic or heteroaromatic hydrocarbon radical, in which one H atom or a plurality of H atoms may be replaced by OR¹⁴, N(R¹⁴)(R¹⁵) or R¹⁶, or can be 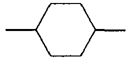 (1,4-cyclohexylene), in which one or more -CH₂- groups may be replaced by -O-, -CO- or -NR¹⁴-, or an acetophenyl, isopropyl or 3-heptyl radical,
R¹⁴ on each occurrence, independently of one another, denotes a straight-chain or branched alkyl or acyl group having 1 to 10 C atoms or an aromatic hydrocarbon or carboxyl radical having 6-12 C atoms,
R¹⁵ on each occurrence, independently of one another, denotes a straight-chain or branched alkyl or acyl group having 1 to 10 C atoms or an aromatic hydrocarbon or carboxyl radical having 6-12 C atoms,
R¹⁶ on each occurrence, independently of one another, denotes a straight-chain or branched alkyl group having 1 to 10 C atoms, in which one -CH₂- group or a plurality of -CH₂- groups may be replaced by -O- or -C(=O)-), but two adjacent -CH₂- groups cannot be replaced by -O-,
with the provisos that,
in the case where n = 1, R¹¹ = O^{•} and
-[Z¹¹-]ᵣ-[Z¹²]ₛ- = -O-, -(CO)-O-, -O-(CO)-, -O-(CO)-O-, -NR¹⁴- or
-NR¹⁴-(CO)-, 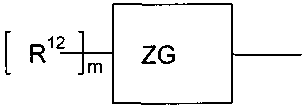 does not denote
straight-chain or branched alkyl having 1 to 10 C atoms, also cycloalkyl, cycloalkylalkyl or alkylcycloalkyl, where in all these groups one or more -CH₂- groups may be replaced by -O- in such a way that no two O atoms in the molecule are bonded directly to one another,
in the case where n = 2 and R¹¹ = O^{•}, 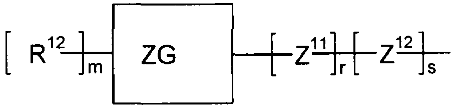 does not denote 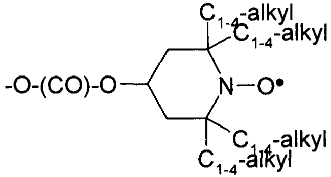 and
in the case where n = 2 and R¹¹ = O-R¹³,
R¹³ does not denote n-C₁₋₉-alky), 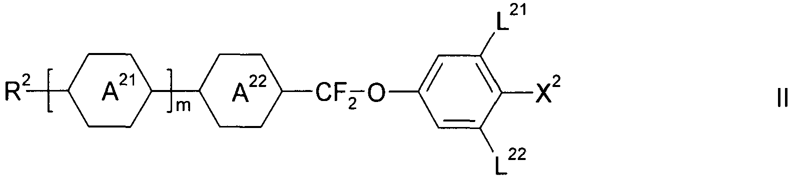 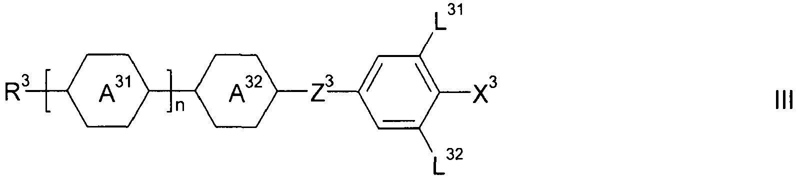 in which
R² and R³, independently of one another, denote alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, 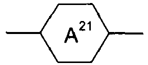 to 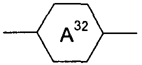 on each appearance, independently of one another, denote 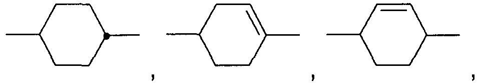 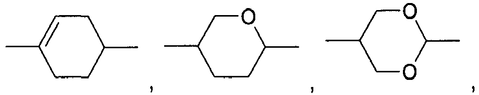 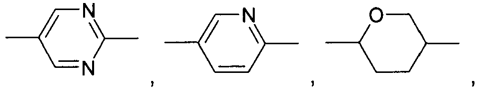 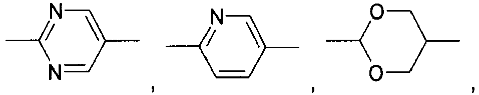 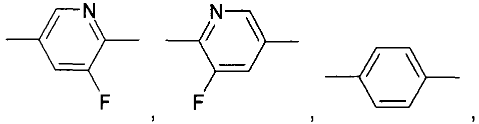 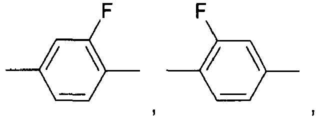 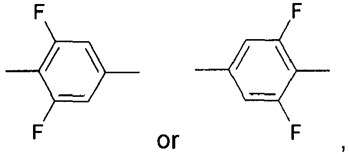
L²¹, L²², L³¹ and L³², independently of one another, denote H or F,
X² and X³, independently of one another, denote halogen, halogenated alkyl or alkoxy having 1 to 3 C atoms or halogenated alkenyl or alkenyloxy having 2 or 3 C atoms,
Z³ denotes -CH₂CH₂-, -CF₂CF₂-, -COO-, *trans*-CH=CH-, trans-CF=CF-, -CH₂O- or a single bond, and
m and n, independently of one another, denote 0, 1, 2 or 3.

3. Medium according to one of Claims 1 or 2, **characterised in that** it comprises
- one or more compounds of the formula IV 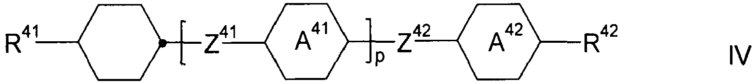 in which
R⁴¹ and R⁴², independently of one another, have the meaning indicated for R² in Claim 2 above under formula II, 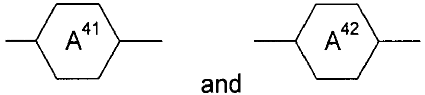 independently of one another and, if 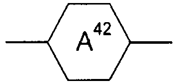 occurs twice, also these independently of one another, denote 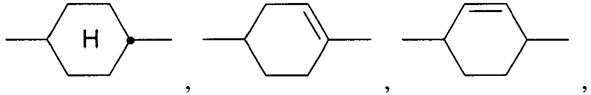 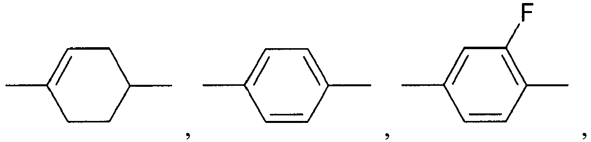 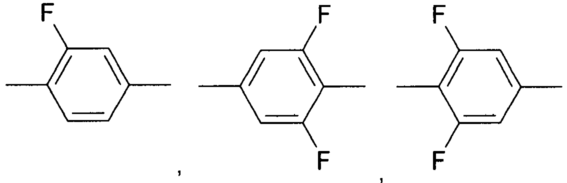 or 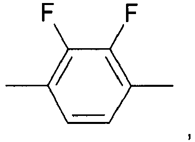
Z⁴¹ and Z⁴², independently of one another and, if Z⁴¹ occurs twice, also these independently of one another, denote -CH₂CH₂-, -COO-, *trans* -CH=CH-, *trans* -CF=CF-, -CH₂O-, -CF₂O-, -C=C- or a single bond, and
p denotes 0, 1 or 2, from which, however, the compound of the formula CC-3-V as indicated in Claim 1 is excluded.

4. Medium according to one or more of Claims 1 to 3, **characterised in that** the total concentration of the compounds of the formula I and TINUVIN 770® in the medium is in the range from 1 ppm to 2000 ppm.

5. Medium according to one or more of Claims 2 to 4, **characterised in that** the compounds of the formula I are compounds selected from the group of the compounds of the formulae I-1 to I-9 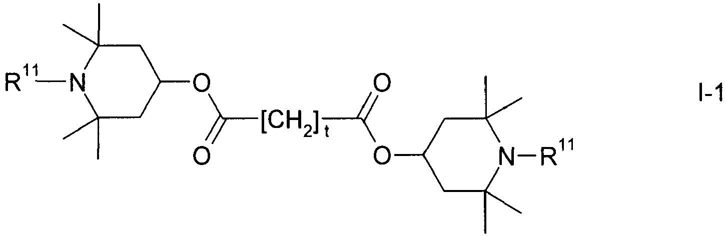 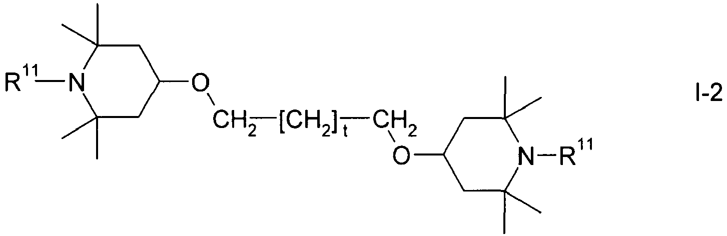 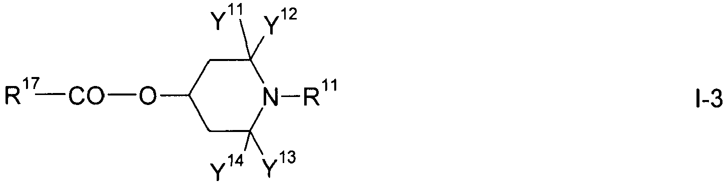 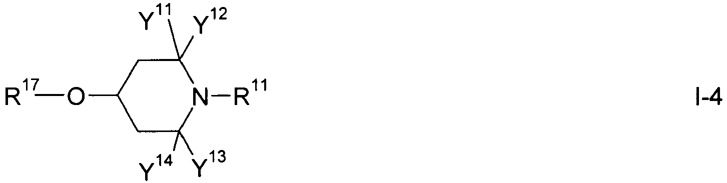 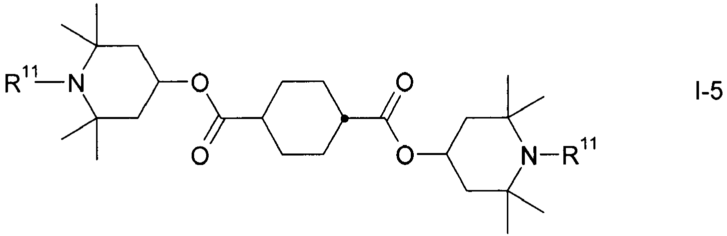 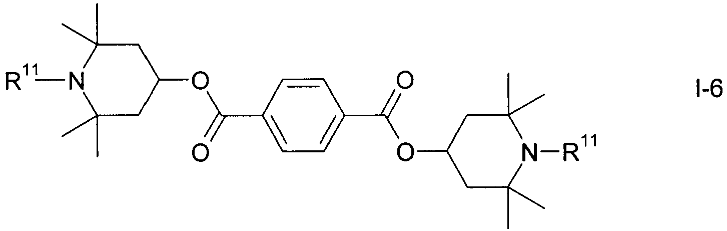 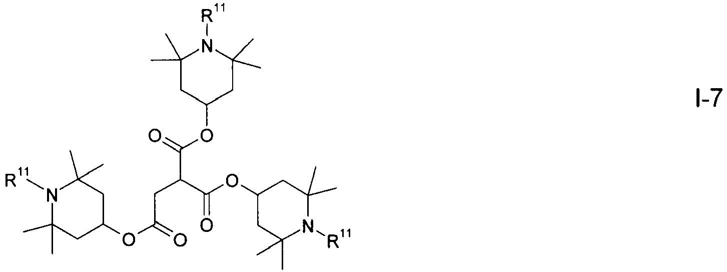 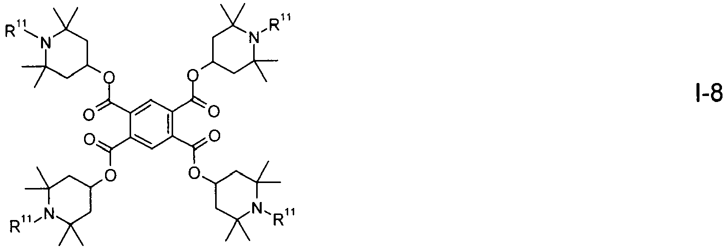 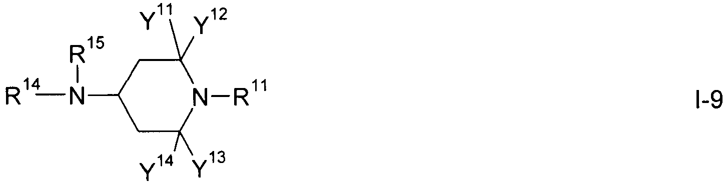 in which the parameters have the meanings indicated in Claim 1 under formula I, and
t denotes an integer from 1 to 12,
R¹⁷ denotes a straight-chain or branched alkyl chain having 1-12 C atoms, in which one -CH₂- group or a plurality of -CH₂- groups may be replaced by -O- or -C(=O)-, but two adjacent -CH₂- groups cannot be replaced by -O-, or denotes an aromatic or heteroaromatic hydrocarbon radical, in which one H atom or a plurality of H atoms may be replaced by OR¹⁴, N(R¹⁴)(R¹⁵) or R¹⁶.

6. Medium according to one or more of Claims 1 to 5, **characterised in that** it comprises one or more compounds of the formula II as indicated in Claim 1.

7. Medium according to one or more of Claims 1 to 6, **characterised in that** it comprises one or more compounds of the formula III as indicated in Claim 1.

8. Medium according to one or more of Claims 1 to 7, **characterised in that** it comprises one or more dielectrically neutral compounds of the formula V 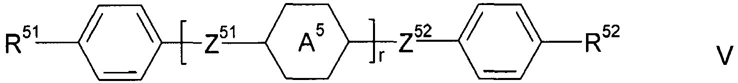 in which
R⁵¹ and R⁵², independently of one another, have the meaning indicated for R² under formula II in Claim 2, 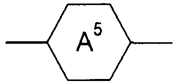 on each occurrence, independently of one another, denotes 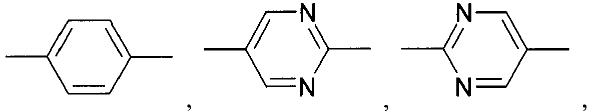 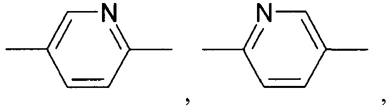 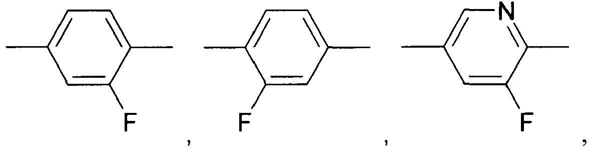 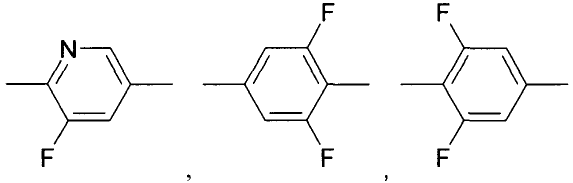 or 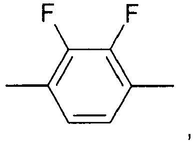
Z⁵¹ and Z⁵², independently of one another and, if Z⁵¹ occurs twice, also these independently of one another, denote -CH₂CH₂-, -COO-, *trans-*CH=CH-*, trans*-CF=CF-, -CH₂O-, -CF₂O- or a single bond, and
r denotes 0, 1 or 2.

9. Liquid-crystal display, **characterised in that** it contains a medium according to one or more of Claims 1 to 8.

10. Display according to Claim 9, **characterised in that** it is addressed by an active matrix.

11. Use of a medium according to one or more of Claims 1 to 8 in a liquid-crystal display.

12. Process for the preparation of a medium according to one or more of Claims 1 to 8, **characterised in that** one or more compounds of the formula I, as indicated in Claim 1, are mixed with one or more of the compounds mentioned in one or more of Claims 2 and 3 and/or one or more further mesogenic compounds and/or one or more additives.

## Revendications

1. Milieu cristallin liquide présentant une anisotropie diélectrique positive, **caractérisé en ce qu'**il comprend :
a) un composé de la formule TINUVIN 770® : 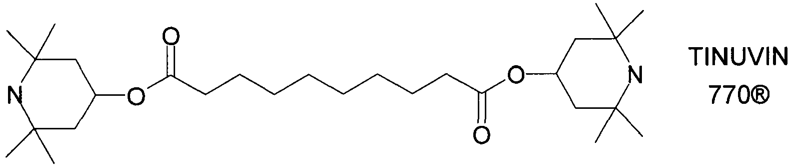
b) un ou plusieurs composé(s) qui est/sont sélectionné(s) parmi le groupe des composés des formules II et III : 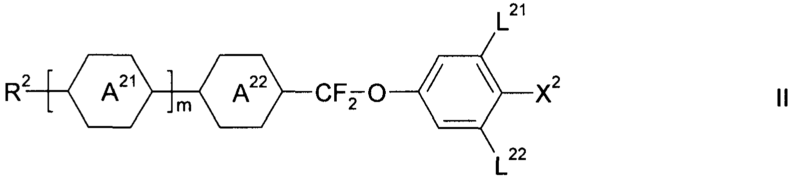 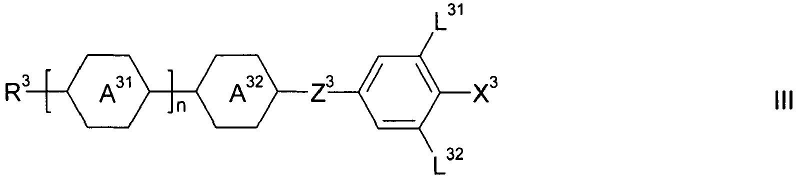 formules dans lesquelles :
R² et R³ représentent, indépendamment l'un de l'autre, alkyle, alcoxy, alkyle fluoré ou alcoxy fluoré qui comporte 1 à 7 atome(s) de C, alkényle, alkényloxy, alcoxyalkyle ou alkényle fluoré qui comporte 2 à 7 atomes de C, et R² et R³ représentent de préférence alkyle ou alkényle, 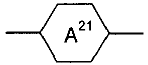 à 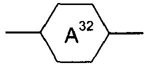 représentent, pour chaque occurrence, indépendamment les unes des autres : 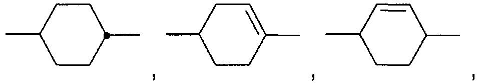 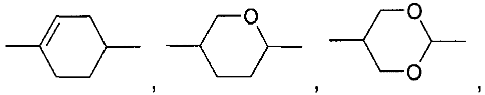 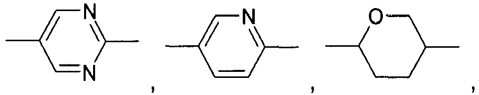 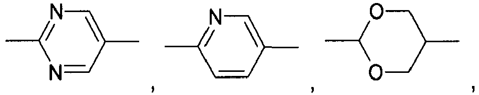 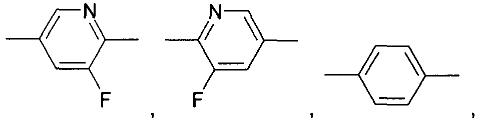 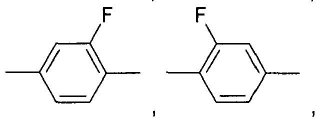 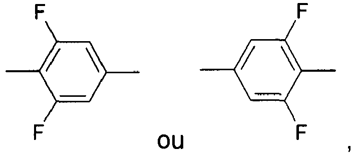
L²¹, L²², L³¹ et L³² représentent, indépendamment les uns des autres, H ou F,
X² et X³ représentent, indépendamment l'un de l'autre, halogène, alkyle ou alcoxy halogéné qui comporte 1 à 3 atome(s) de C ou alkényle ou alkényloxy halogéné qui comporte 2 ou 3 atomes de C,
Z³ représente -CH₂CH₂-, -CF₂CF₂-, -COO-, *trans* -CH=CH-, *trans* -CF=CF-, -CH₂O- ou une liaison simple, et
m et n représentent, indépendamment l'un de l'autre, 0, 1, 2 ou 3,
et
c) un composé de la formule CC-3-V : 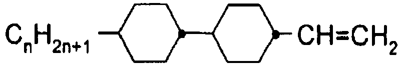 formule dans laquelle :
n représente 3.

2. Milieu selon la revendication 1, **caractérisé en ce qu'**il comprend :
- un ou plusieurs composé(s) de la formule I : 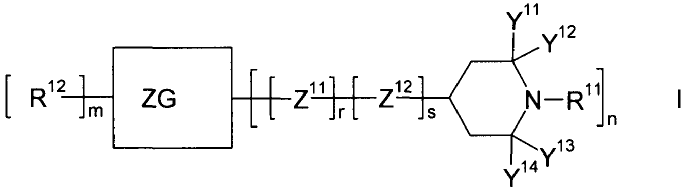 formule dans laquelle :
n représente un entier de 1 à 4,
m représente (4-n), 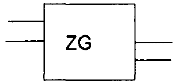 représente un radical organique qui comporte 4 sites de liaison, de préférence une unité alcanetétrayle qui comporte 1 à 20 atome(s) de C, où, en plus des m groupes R¹² qui sont présents dans la molécule, mais indépendamment de ceux-ci, un autre atome de H peut être remplacé par R¹² ou les atomes d'une pluralité d'autres atomes de H peuvent être remplacés par R¹², de préférence une unité alcanetétrayle en chaîne droite qui comporte dans chaque cas une valence sur chacun des deux atomes de C terminaux, où un groupe -CH₂-ou les groupes d'une pluralité de groupes -CH₂- peut/ peuvent être remplacé(s) par -O- ou par -(C=O)- de telle sorte que des atomes de O ne soient pas liés directement les uns aux autres, ou représente un radical hydrocarbone aromatique ou hétéroaromatique substitué ou non substitué qui comporte 1 à 4 valence(s), où, en plus des m groupes R¹² qui sont présents dans la molécule, mais indépendamment de ceux-ci, un autre atome de H peut être remplacé par R¹² ou les atomes d'une pluralité d'autres atomes de H peuvent être remplacés par R¹²,
Z¹¹ et Z¹² représentent, indépendamment l'un de l'autre, -O-, -(C=O)-, -(N-R¹⁴)- ou une liaison simple, mais ne représentent pas tous deux de façon simultanée -O-,
r et s représentent, indépendamment l'un de l'autre, 0 ou 1,
Y¹¹ à Y¹⁴ représentent chacun, indépendamment les uns des autres, alkyle qui comporte 1 à 4 atome(s) de C et à titre d'alternative, indépendamment les uns des autres, une ou deux des paires (Y¹¹ et Y¹²) et (Y¹³ et Y¹⁴) représente(nt) également ensemble un groupe divalent qui comporte 3 à 6 atomes de C,
R¹¹ représente O-R¹³, O^{•} ou OH,
R¹² représente, pour chaque occurrence, indépendamment les unes des autres, H, F, OR¹⁴, NR¹⁴R¹⁵, une chaîne alkyle en chaîne droite ou ramifiée qui comporte 1 à 20 atome(s) de C, où un groupe -CH₂- ou les groupes d'une pluralité de groupes -CH₂- peut/peuvent être remplacé(s) par -O- ou -C(=O)- ; mais deux groupes -CH₂-adjacents ne peuvent pas être remplacés par -O-, ou représente un radical hydrocarbone qui contient une unité cycloalkyle ou alkylcycloalkyle, et où un groupe -CH₂- ou les groupes d'une pluralité de groupes -CH₂- peut/peuvent être remplacé(s) par -O-ou -C(=O)-, mais deux groupes -CH₂- adjacents ne peuvent pas être remplacés par -O-, et où un atome de H ou les atomes d'une pluralité d'atomes de H peut/ peuvent être remplacé(s) par OR¹⁴, N(R¹⁴)(R¹⁵) ou R¹⁶, ou représente un radical hydrocarbone aromatique ou hétéroaromatique, où un atome de H ou les atomes d'une pluralité d'atomes de H peut/peuvent être remplacé(s) par OR¹⁴, N(R¹⁴)(R¹⁵) ou R¹⁶,
R¹³ représente pour chaque occurrence, indépendamment les unes des autres, une chaîne alkyle en chaîne droite ou ramifiée qui comporte 1 à 20 atome(s) de C, où un groupe -CH₂- ou les groupes d'une pluralité de groupes -CH₂- peut/peuvent être remplacé(s) par -O- ou -C(=O)-, mais deux groupes -CH₂- adjacents ne peuvent pas être remplacés par -O-, ou représente un radical hydrocarbone qui contient une unité cycloalkyle ou alkylcycloalkyle, et où un groupe -CH₂- ou les groupes d'une pluralité de groupes -CH₂- peut/peuvent être remplacé(s) par -O- ou -C(=O)-, mais deux groupes -CH₂- adjacents ne peuvent pas être remplacés par -O-, et où un atome de H ou les atomes d'une pluralité d'atomes de H peut/ peuvent être remplacé(s) par OR¹⁴, N(R¹⁴)(R¹⁵) ou R¹⁶, ou représente un radical hydrocarbone aromatique ou hétéroaromatique, où un atome de H ou les atomes d'une pluralité d'atomes de H peut/peuvent être remplacé(s) par OR¹⁴, N(R¹⁴)(R¹⁵) ou R¹⁶,
ou peut être : 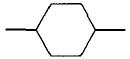 (1,4-cyclohexylène), où un ou plusieurs groupe(s) -CH₂- peut/peuvent être remplacé(s) par -O-, -CO- ou -NR¹⁴-, ou un radical acétophényle, isopropyle ou 3-heptyle,
R¹⁴ représente, pour chaque occurrence, indépendamment les unes des autres, un groupe alkyle ou acyle en chaîne droite ou ramifié qui comporte 1 à 10 atome(s) de C ou un radical hydrocarbone ou carboxyle aromatique qui comporte 6 à 12 atomes de C,
R¹⁵ représente, pour chaque occurrence, indépendamment les unes des autres, un groupe alkyle ou acyle en chaîne droite ou ramifié qui comporte 1 à 10 atome(s) de C ou un radical hydrocarbone ou carboxyle aromatique qui comporte 6 à 12 atomes de C,
R¹⁶ représente, pour chaque occurrence, indépendamment les unes des autres, un groupe alkyle en chaîne droite ou ramifié qui comporte 1 à 10 atome(s) de C, où un groupe -CH₂- ou les groupes d'une pluralité de groupes -CH₂- peut/peuvent être remplacé(s) par -O- ou -C(=O)-, mais deux groupes -CH₂- adjacents ne peuvent pas être remplacés par -O-,
étant entendu que :
dans le cas où n = 1, R¹¹ = O^{•} et
-[Z¹¹-]ᵣ-[Z¹²]ₛ- = -O-, -(CO)-O-, -O-(CO)-, -O-(CO)-O-, -NR¹⁴- ou
-NR¹⁴-(CO)-, 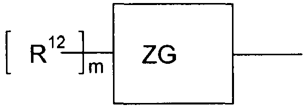 ne représente pas
alkyle en chaîne droite ou ramifié qui comporte 1 à 10 atome(s) de C, également cycloalkyle, cycloalkylalkyle ou alkylcycloalkyle, où dans tous ces groupes, un ou plusieurs groupe(s) -CH₂- peut/peuvent être remplacé(s) par -O- de telle sorte que deux atomes de O dans la molécule ne soient pas liés directement l'un à l'autre,
dans le cas où n = 2 et R¹¹ = O^{•}, 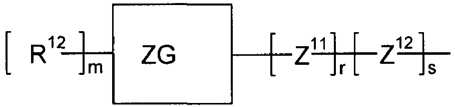 ne représente pas 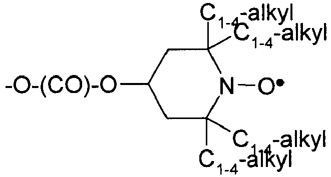 et
dans le cas où n = 2 et R¹¹ = O-R¹³,
R¹³ ne représente pas n-C₁₋₉-alkyle, 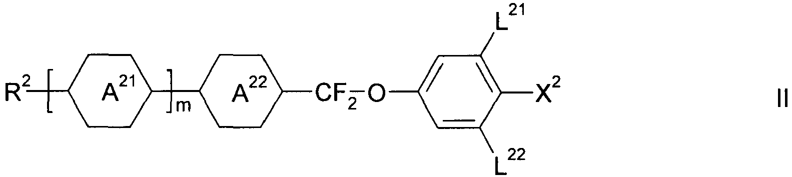 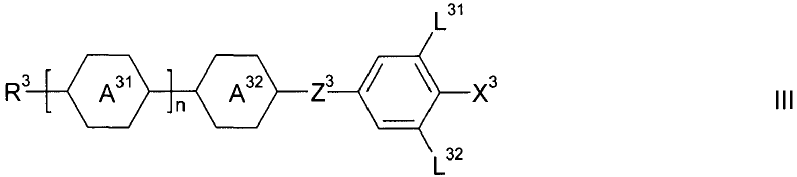 formules dans lesquelles :
R² et R³ représentent, indépendamment l'un de l'autre, alkyle, alcoxy, alkyle fluoré ou alcoxy fluoré qui comporte 1 à 7 atome(s) de C, alkényle, alkényloxy, alcoxyalkyle ou alkényle fluoré qui comporte 2 à 7 atomes de C, 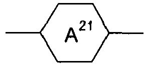 à 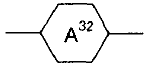 représentent, pour chaque occurrence, indépendamment les unes des autres, 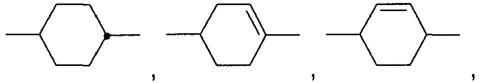 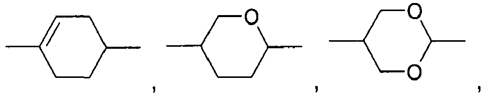 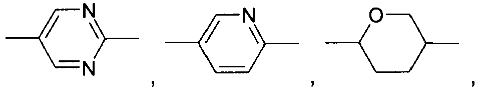 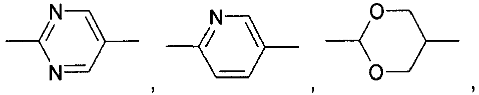 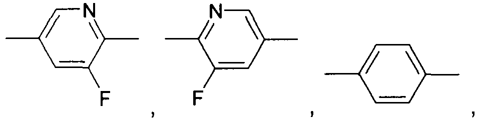 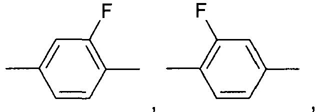 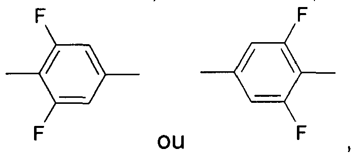
L²¹, L²², L³¹ et L³² représentent, indépendamment les uns des autres, H ou F,
X² et X³ représentent, indépendamment l'un de l'autre, halogène, alkyle ou alcoxy halogéné qui comporte 1 à 3 atome(s) de C ou alkényle ou alkényloxy halogéné qui comporte 2 ou 3 atomes de C,
Z³ représente -CH₂CH₂-, -CF₂CF₂-, -COO-, *trans* -CH=CH-, *trans* -CF=CF-, -CH₂O- ou une liaison simple, et
m et n représentent, indépendamment l'un de l'autre, 0, 1, 2 ou 3.

3. Milieu selon une ou plusieurs des revendications 1 ou 2, **caractérisé en ce qu'**il comprend :
- un ou plusieurs composé(s) de la formule IV : 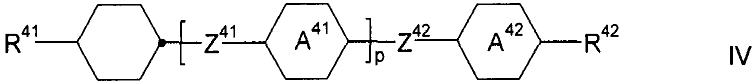 formule dans laquelle :
R⁴¹ et R⁴² présentent, indépendamment l'un de l'autre, la signification qui est indiquée pour R² selon la revendication 2 ci-avant sous la formule II, 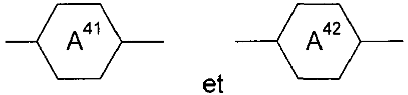 représentent, indépendamment l'un de l'autre et, si 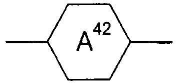 est en occurrence double, également ces occurrences de manière indépendante, représentent 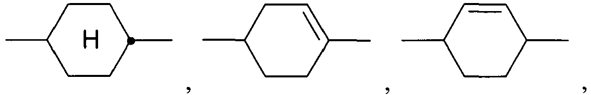 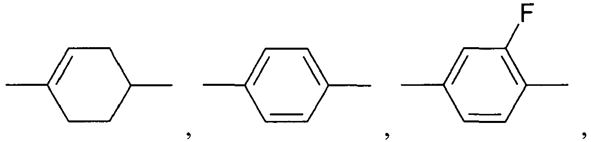 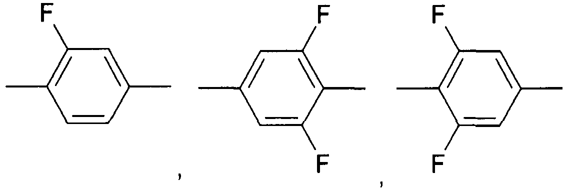 ou 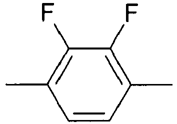
Z⁴¹ et Z⁴² représentent, indépendamment l'un de l'autre et, si Z⁴¹ est en occurrence double, également ces occurrences de manière indépendante, -CH₂CH₂-, -COO-, *trans* -CH=CH-, *trans* -CF=CF-, -CH₂O-, -CF₂O-, -C=C-ou une liaison simple, et
p représente 0, 1 ou 2,
dont, cependant, le composé de la formule CC-3-V comme indiqué selon la revendication 1 est exclus.

4. Milieu selon une ou plusieurs des revendications 1 à 3, **caractérisé en ce que** la concentration totale des composés de la formule I et de TINUVIN 770® dans le milieu est dans la plage de 1 ppm à 2000 ppm.

5. Milieu selon une ou plusieurs des revendications 2 à 4, **caractérisé en ce que** les composés de la formule I sont des composés qui sont sélectionnés parmi le groupe des composés des formules I-1 à I-9 : 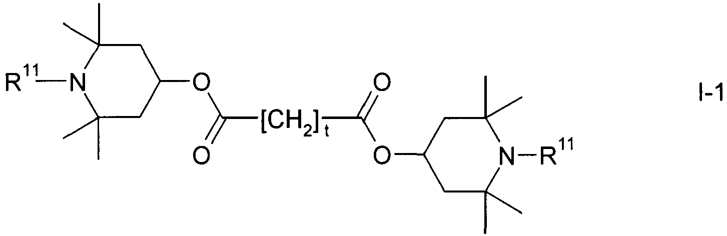 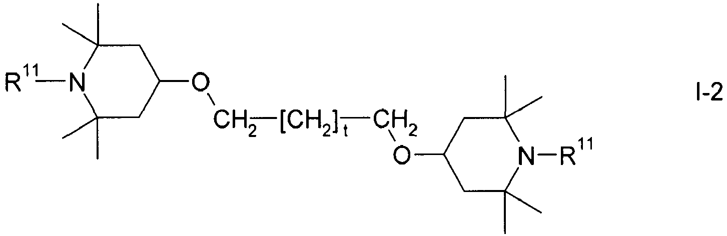 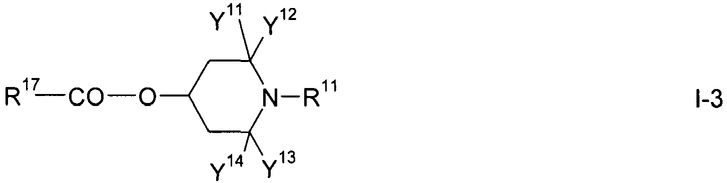 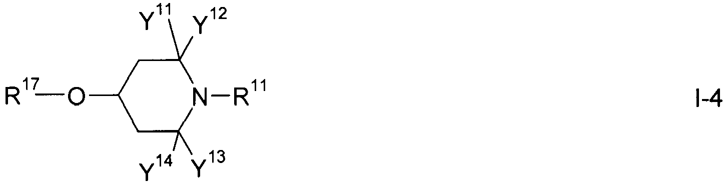 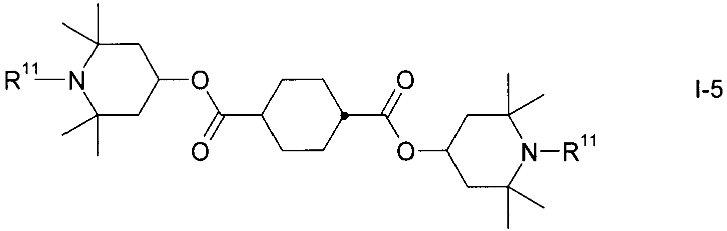 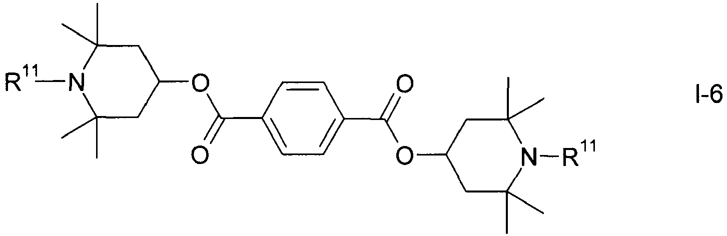 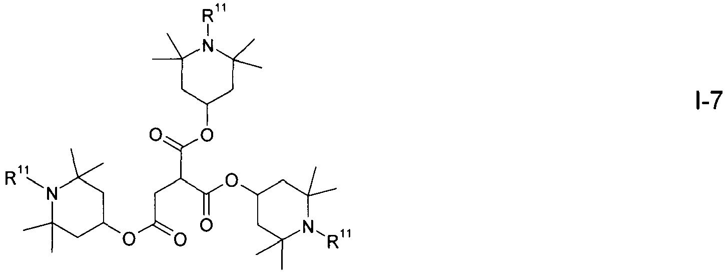 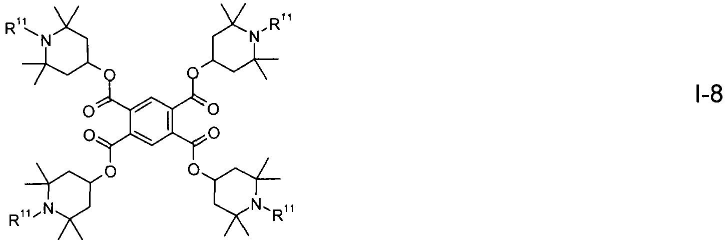 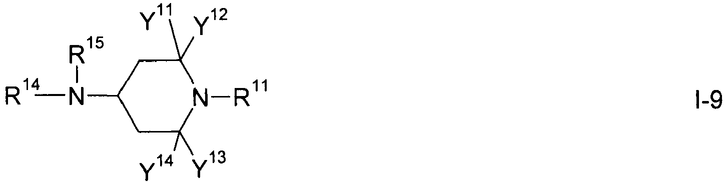 formules dans lesquelles les paramètres présentent les significations qui ont été indiquées selon la revendication 1 sous la formule I, et
t représente un entier de 1 à 12,
R¹⁷ représente une chaîne alkyle en chaîne droite ou ramifiée qui comporte 1 à 12 atome(s) de C, où un groupe -CH₂- ou les groupes d'une pluralité de groupes -CH₂- peut/peuvent être remplacé(s) par -O- ou -C(=O)-, mais deux groupes -CH₂- adjacents ne peuvent pas être remplacés par -O-, ou représente un radical hydrocarbone aromatique ou hétéroaromatique, où un atome de H ou les atomes d'une pluralité d'atomes de H peut/ peuvent être remplacé(s) par OR¹⁴, N(R¹⁴)(R¹⁵) ou R¹⁶.

6. Milieu selon une ou plusieurs des revendications 1 à 5, **caractérisé en ce qu'**il comprend un ou plusieurs composé(s) de la formule II comme indiqué selon la revendication 1.

7. Milieu selon une ou plusieurs des revendications 1 à 6, **caractérisé en ce qu'**il comprend un ou plusieurs composé(s) de la formule III comme indiqué selon la revendication 1.

8. Milieu selon une ou plusieurs des revendications 1 à 7, **caractérisé en ce qu'**il comprend un ou plusieurs composé(s) diélectriquement neutre(s) de la formule V : 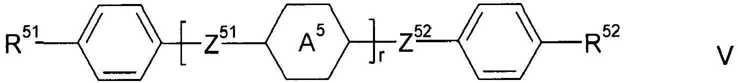 formule dans laquelle :
R⁵¹ et R⁵² présentent, indépendamment l'un de l'autre, la signification qui est indiquée pour R² sous la formule II selon la revendication 2, 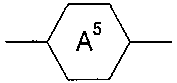 représente, pour chaque occurrence, indépendamment les unes des autres : 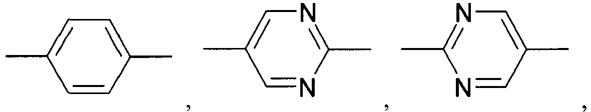 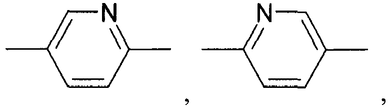 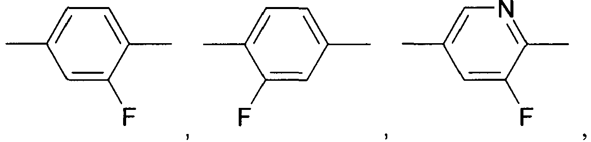 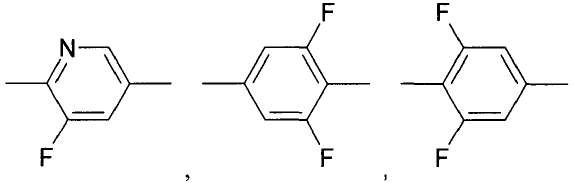 ou 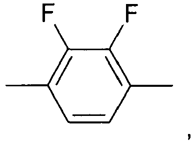
Z⁵¹ et Z⁵² représentent, indépendamment l'un de l'autre et, si Z⁵¹ est en occurrence double, également ces occurrences de manière indépendante, -CH₂CH₂-, -COO-, *trans* -CH=CH-, *trans* -CF=CF-, -CH₂O-, -CF₂O- ou une liaison simple, et
r représente 0, 1 ou 2.

9. Affichage à cristaux liquides, **caractérisé en ce qu'**il contient un milieu selon une ou plusieurs des revendications 1 à 8.

10. Affichage selon la revendication 9, **caractérisé en ce qu'**il est adressé au moyen d'une matrice active.

11. Utilisation d'un milieu selon une ou plusieurs des revendications 1 à 8 dans un affichage à cristaux liquides.

12. Procédé pour la préparation d'un milieu selon une ou plusieurs des revendications 1 à 8, **caractérisé en ce qu'**un ou plusieurs composé(s) de la formule I, comme indiqué selon la revendication 1, est/ sont mélangé(s) avec un ou plusieurs des composés qui ont été mentionnés selon une ou plusieurs des revendications 2 et 3 et/ou un ou plusieurs autre(s) composé(s) mésogène(s) et/ou un ou plusieurs additif(s).
